# EUROPÄISCHE PATENTANMELDUNG

(11) **EP 4 814 063 A1**
(43) Veröffentlichungstag der Anmeldung: **30.09.2026**
(21) Anmeldenummer: 25165711.0
(22) Anmeldetag: 24.03.2025
(51) Int. Cl.: C09D 5/02, C09D 17/00

(54) **BIOZIDFREIE WÄSSRIGE PIGMENTPASTE**

(71) Anmelder: EWALD DÖRKEN AG, 58313 Herdecke (DE)
(72) Erfinder: ROTH, Marcel, 58313 Herdecke (DE); MIRI, Daniel, 42327 Wuppertal (DE); MATTHEE, Peter, 58313 Herdecke (DE); KRUPP, Marc, 58313 Herdecke (DE); SCHMITZ, Justine, 58313 Herdecke (DE); LISCHEID, Jan, 58313 Herdecke (DE); ZIMNY, Thorsten, 58313 Herdecke (DE); LUX, Ramona, 58313 Herdecke (DE)
(74) Vertreter: Von Rohr Patentanwälte Partnerschaft mbB

(57) **Zusammenfassung**

Die vorliegende Erfindung betrifft das technische Gebiet der Oberflächenbeschichtung. Insbesondere betrifft die vorliegende Erfindung eine wässrige Pigmentpaste zur Einarbeitung in Oberflächenbeschichtungsmittel wie Farben und Lacke.

## Beschreibung

Die vorliegende Erfindung betrifft das technische Gebiet der Oberflächenbeschichtung.

Insbesondere betrifft die vorliegende Erfindung eine wässrige Pigmentpaste zur Einarbeitung in Oberflächenbeschichtungsmittel wie Farben und Lacke.

Weiterhin betriff die vorliegende Erfindung die Verwendung einer Pigmentpaste in Oberflächenbeschichtungssystemen, insbesondere Anstrichmitteln.

Moderne Beschichtungssysteme, insbesondere Anstrichmittel, werden zunehmend auf Wasserbasis formuliert, da sie nach Möglichkeit frei von flüchtigen organischen Verbindungen, d.h. VOC-frei (volatile organic compound), sein sollen. Derartige VOC-freie Anstrichmittelsysteme bzw. Systeme mit einem Gehalt von weniger als 1 g/l an VOC gelten als lösemittel- und emissionsfrei. Sie sind unter Gesichtspunkten des Umwelt- und Gesundheitsschutzes nicht bzw. zumindest weniger problematisch als lösemittelbasierte Systeme.

Darüber hinaus gibt es Bestrebungen, den Einsatz von Konservierungsmitteln und Bioziden in Anstrichmitteln zu vermeiden, zumindest jedoch zu reduzieren. Wenn die Anstrichmittelsysteme keine Konservierungsmittel oder Biozide enthalten, müssen in der Regel keine Gefahrenstoffe ausgewiesen werden und die Anstrichmittel sind arbeitsschutztechnisch problemlos und ohne besondere Sicherheitsvorkehrungen anwend- und verarbeitbar.

Die Verwendung wässriger Systeme, insbesondere in Kombination mit organischen Bindemittelsystemen, führt in der Praxis regelmäßig zu einem raschen Befall der Anstrichmittel mit Keimen, insbesondere mit Bakterien, Hefen oder auch mit Schimmel, so dass den Anstrichmitteln in der Regel Konservierungsmittel und/oder Biozide beigemischt werden müssen. Dies gilt speziell für wässrige Pigmentpasten, wie sie insbesondere für Abtönsysteme eingesetzt werden. Um eine Vielzahl unterschiedlicher Farben und Farbschattierungen bereitzustellen, welche von Kunden individuell ausgewählt und zusammengestellt werden können, werden in der Regel Abtönsysteme verwendet.

Abtönsysteme bestehen üblicherweise aus einer Palette von farbigen Pigmentpasten, welche mit einem Bindemittel bzw. einer Bindemittelmischung, der sogenannten Abtönbasis oder Basiszusammensetzung, gemischt werden, um Anstrichmittel, insbesondere Wandfarben, mit einem gewünschten Farbton zu erhalten. Bei den Pigmentpasten handelt es sich dabei um hochkonzentrierte pigmenthaltige Dispersionen. Die Pigmentpaste und die Base bzw. Abtönbasis ergeben zusammen dann die anwendungsfertige Farbe bzw. das anwendungsfertige Anstrichmittel.

Das Vermischen einzelner Pigmentpasten in variierenden Mengen mit der Abtönbasis erfolgt in Maschinen, in denen der Mischvorgang softwareunterstützt durchgeführt wird. Die Pigmentpasten werden dabei mehrere Wochen, nachdem sie aus dem Originalgebinde entnommen wurden, mehr oder weniger offen gelagert und sind so über die Umgebungsluft Keimen, speziell Bakterien, Hefen und Schimmelsporen, ausgesetzt, was bei lösemittelfreien bzw. wasserbasierten Systemen fast zwangsläufig zu einem Befall mit Bakterien, Hefen oder Schimmel führt.

Aus diesem Grund werden in wässrigen Pigmentpasten und Abtönsysteme nahezu durchgehend Konservierungsmittel und Biozide eingesetzt.

Der Einsatz von Bioziden und Konservierungsmitteln ist jedoch aus einer Vielzahl von Gründen nachteilig, da Biozide und Konservierungsmittel in der Regel sowohl für den Gesundheitsschutz als auch den Umweltschutz problematische Substanzen darstellen, deren Verwendung minimiert werden sollte und deren Einsatz durch eine verschärftere Chemikaliengesetzgebung zunehmend strenger reglementiert wird. Darüber hinaus ist ein gravierender Nachteil herkömmlicher organischer Biozide deren Dampfdruck: die Biozide gehen in die Gasphase über und können z. B. Allergien auslösen, wobei insbesondere auch die Gefahr einer Anreicherung der Biozide in der Luft von Innenräumen besteht. Weiterhin sind organische Biozide üblicherweise nicht langzeitstabil und werden z. B. durch UV-Strahlung zersetzt.

Es gibt daher Versuche, wässrige Pigmentpasten, insbesondere für Abtönsysteme, ohne Konservierungsmittel oder Biozide bereitzustellen. Hierzu wird üblicherweise der pH-Wert der Pigmentpaste auf einen Wert von pH 10 oder höher eingestellt, wodurch ein Milieu geschaffen wird, in welchem viele Bakterien und Hefen sowie auch die Mehrzahl der Pilze nicht wachsen kann.

Es zeigt sich bei zunehmendem Einsatz dieser Systeme jedoch, dass eine große Anzahl von alkaliphilen Bakterien, Hefen und Pilzen, insbesondere Schimmelpilzen, existiert, die entweder unter diesen alkalischen Bedingungen gut wachsen oder sich mit Erfolg an diese Bedingungen anpassen können. Um diese alkaliphilen Keime zu bekämpfen, müssen wiederum Konservierungsmittel und Biozide eingesetzt werden.

Entsprechen ist wünschenswert es, neue Möglichkeiten zu entwickeln, wie Pigmentpasten und Abtönsysteme möglichst konservierungsmittel- und biozidfrei ausgestattet werden können, wobei gleichzeitig sichergestellt sein soll, dass auch alkaliphile Bakterien, Hefen und Pilze, insbesondere Schimmelpilze, möglichst nicht auf den Pasten bzw. Systemen wachsen können.

In diesem Sinne sind also insbesondere solche Pigmentpasten und Abtönsysteme wünschenswert, die eine Zusammensetzung aufweisen, die bei Verzicht auf Biozide, Konservierungsmittel und flüchtige organische Verbindungen, gleichwohl ein für, insbesondere auch alkaliphile, Bakterien, Hefen und Pilze, insbesondere Schimmelpilze, ungeeignetes bzw. wachstumshinderndes Milieu darstellen.

Es fehlt im Stand der Technik somit weiterhin an wässrig basierten Abtönsystemen sowie Pigmentpasten, welche konservierungsmittelfrei und biozidfrei formuliert werden können, eine lange Offenzeit besitzen sowie hierbei hinreichend resistent gegen einen Befall durch Mikroorganismen wie Bakterien oder Schimmel sind.

Eine Aufgabe der vorliegenden Erfindung ist daher darin zu sehen, die mit dem zuvor geschilderten Stand der Technik verknüpften Nachteile zu vermeiden, zumindest jedoch abzuschwächen.

Insbesondere ist es eine Aufgabe der vorliegenden Erfindung, eine Pigmentpaste bereitzustellen, welche lösemittelfrei bzw. VOC- und SVOC-frei und gleichzeitig frei von Bioziden und Konservierungsmitteln, insbesondere von flüchtigen Bioziden und Konservierungsmitteln, ist.

Weiterhin ist eine Aufgabe der vorliegenden Erfindung darin zu sehen, eine Pigmentpaste bereitzustellen, welche auch gegenüber alkaliphilen Bakterien, Hefen und Schimmelpilzen resistent ist.

Eine weitere Aufgabe der vorliegenden Erfindung ist darin zu sehen, ein Abtönsystem bereitzustellen, welches eine einfache Abtönung einer Vielzahl wässriger Bindemittelsysteme ermöglicht. Insbesondere ist hierbei eine Aufgabe der vorliegenden Erfindung darin zu sehen, eine insbesondere VOC-freie, pigmentbasierte und keimresistente Basis bereitzustellen, welche die Coloristik von Anstrichmitteln nicht beeinträchtigt.

Zur Lösung der vorgenannten Aufgaben schlägt die Erfindung gemäß einem ersten Aspekt der vorliegenden Erfindung eine wässrige Pigmentpaste gemäß Anspruch 1 vor; weitere, vorteilhafte Ausgestaltungen des Erfindungsaspekts sind Gegenstand der diesbezüglichen Unteransprüche.

Weiterer Gegenstand der vorliegenden Erfindung, gemäß einem zweiten Aspekt der vorliegenden Erfindung, ist die Verwendung einer erfindungsgemäßen Pigmentpaste zur Abtönung von Bindemittelsystemen gemäß dem dies betreffenden Anspruch.

Wiederum weiterer Gegenstand der vorliegenden Erfindung, gemäß einem dritten Aspekt der vorliegenden Erfindung, ist ein Kit-of-Parts, enthaltend die erfindungsgemäße Pigmentpaste und eine Abtönbasis gemäß dem dies betreffenden Anspruch.

Schließlich Gegenstand der vorliegenden Erfindung gemäß einem vierten Aspekt der vorliegenden Erfindung ist eine Abtönbasis, insbesondere ein Anstrichmittel, vorzugsweise eine Dispersionsfarbe, enthaltend eine erfindungsgemäße Pigmentpaste gemäß dem dies betreffenden Anspruch.

Es versteht sich von selbst, dass Besonderheiten, Merkmale, Ausgestaltungen und Ausführungsformen sowie Vorteile und dergleichen, die nachfolgend - zu Zwecken der Vermeidung von unnötigen Wiederholungen - nur zu einem Erfindungsaspekt ausgeführt werden, selbstverständlich in Bezug auf die übrigen Erfindungsaspekte entsprechend gelten, ohne dass es einer ausdrücklichen Erwähnung bedarf.

Zudem gilt, dass bei allen nachstehend genannten relativen bzw. prozentualen, insbesondere gewichtsbezogenen, Mengenangaben zu beachten ist, dass diese im Rahmen der Erfindung vom Fachmann derart auszuwählen sind, dass in der Summe der Inhaltsstoffe, Zusatz- bzw. Hilfsstoffe oder dergleichen stets 100 % bzw. 100 Gew.-% resultieren. Dies versteht sich für den Fachmann aber von selbst. Auch gilt, dass alle im Folgenden genannten Parameterangaben oder dergleichen grundsätzlich mit genormten oder explizit angegebenen Bestimmungsmethoden oder aber mit dem Fachmann an sich geläufigen Bestimmungsverfahren bestimmt sind bzw. ermittelt werden können.

Dies vorausgeschickt wird nachfolgend der Gegenstand der vorliegenden Erfindung näher erläutert.

Gegenstand der vorliegenden Erfindung - gemäß einem **ersten** Aspekt der vorliegenden Erfindung - ist eine wässrige Pigmentpaste für Abtönsysteme, wobei die Pigmentpaste insbesondere zumindest im Wesentlichen frei ist von Konservierungsmitteln und/oder Bioziden, und wobei die Pigmentpaste ein Netz- und Dispergiermittelsystem enthält, wobei das Netz- und Dispergiermittelsystem mindestens zwei, insbesondere zwei, Netz- und Dispergiermittel umfasst, wobei eines der mindestens zwei, insbesondere zwei, Netz- und Dispergiermittel ein Polyaminosaccharid ist.

Die Anmelderin hat überraschend gefunden, dass Pigmentpasten, die ein Netz- und Dispergiermittelsystem im Sinne der Erfindung aufweisen, unerwartet vorteilhafte Anwendungs- und Verarbeitungseigenschaften aufweisen. Pigmentpasten, die Polyaminosaccharide als Netz- und Dispergiermittel in Kombination mit weiteren Netz- und Dispergiermitteln, insbesondere wie nachfolgend noch eingehend beschrieben, aufweisen, zeichnen sich durch eine vorteilhafte Dispersionsstabilität aus, insbesondere auch, wenn hochgefüllte Pigmentpasten bereitgestellt werden.

Das erfindungsgemäß eingesetzte Netz- und Dispergiermittelsystem weist zudem eine vergleichsweise hohe Dispergiereffizienz aus, d. h. gestattet bereits bei vergleichsweise geringen Verwendungsmengen innerhalb kurzer Mischzeiten eine verlässliche und stabile Dispergierung insbesondere der partikulären Inhaltsstoffe erfindungsgemäßer Pigmentpasten.

Darüber hinaus erlaubt die Verwendung von Polyaminosacchariden als Netz- und Dispergiermittel in Kombination mit einem weiteren Netz- und Dispergiermittel vorteilhaft eine vergleichsweise zielgerichtete Modifizierung von Rheologieeigenschaften, was üblicherweise mit Netz- und Dispergiermitteln nicht möglich ist.

Auf Basis der eingesetzten Polyaminosaccharide in Verbindung mit weiteren Netz- und Dispergiermitteln kann im Rahmen der Erfindung ein Netz- und Dispergiermittelsystem formuliert werden, dass eine spezifisch einstellbare Viskosität aufweist, die bedarfsgerecht an zu formulierende Pigmentpasten angepasst werden kann, so dass Pigmentpasten mit vergleichsweise gezielt modulierten Rheologieeigenschaften auch ohne den Zusatz von klassischen Rheologieadditiven erhalten werden können.

Weiter vorteilhaft zeichnet sich das verwendete Netz- und Dispergiermittelsystem durch eine hohe Kompatibilität mit weiteren Inhaltsstoffen von Pigmentpasten aus, so dass eine hohe Bandbreite möglicher Pastenformulierungen realisiert werden kann. Insbesondere kann eine Vielzahl verschiedener Pigmente und weiterer Additive ohne Weiteres in erfindungsgemäße Pigmentpasten eingearbeitet werden, insbesondere ohne, dass eine Beeinträchtigung der Dispersionsqualität zu beobachten ist.

Darüber hinaus kann die erfindungsgemäße Pigmentpaste weitestgehend bzw. insbesondere völlig frei von Biozide oder Konservierungsmitteln formuliert werden. Überraschend hat die Anmelderin festgestellt, dass die spezifische erfindungsgemäße Kombination von Netz- und Dispergiermitteln auch biostatische bzw. keimstatische Eigenschaften aufweist, die ein weiteres Wachstum von Mikroorganismen effektiv hemmen und insoweit die Langlebigkeit bzw. Haltbarkeit erfindungsgemäßer Pigmentpasten positiv beeinflussen. Dies kann - ohne sich hierauf beschränken zu wollen - insbesondere auf Wechselwirkungen auf molekularer Ebene zwischen den speziell verwendeten Netz- und Dispergiermitteln sowie den Zellwänden/-hüllen von Bakterien oder Schimmelpilzen zurückgeführt werden. Beachtlich ist, dass die erzielte biostatische bzw. keimstatische Wirkung deutlich ausgeprägter ist, als es für die eingesetzten Netz- und Dispergiermittel je im Einzelnen hätte erwartet werden können. Insoweit scheint es - wiederum ohne sich hierauf festlegen zu wollen - auf die spezifische Zusammensetzung des erfindungsgemäß eingesetzten Netz- und Dispergiermittelsystems anzukommen, auf welche nachfolgend noch im Detail eingegangen werden wird.

Insgesamt kann im Rahmen der Erfindung eine haltbare, qualitativ hochwertige sowie beständige Pigmentpaste bereitgestellt werden, welche sich insbesondere ideal als Grundlage zur Einarbeitung in Bindemittelsysteme für die Herstellung von gebrauchsfertigen Farben und Lacken eignet. Die bereitgestellt Pigmentpasten zeichnen sich dabei auch durch als sehr positiv zu bewertende Anwendungseigenschaften aus, indem auf besonders basische pH-Werte oder den Zusatz gesundheitsbedenklicher Bakterizide oder Fungizide verzichtet werden kann.

Damit können insgesamt Farben und Lacke, die eine hohe Anwendungssicherheit sowie gute Langzeitemissionseigenschaften aufweisen, bereitgestellt werden.

Erfindungsgemäß ist vorgesehen, dass die Pigmentpaste ein Netz- und Dispergiermittelsystem enthält, welches mindestens zwei Netz- und Dispergiermittel umfasst. Eines der eingesetzten Netz- und Dispergiermittel ist dabei ein Polyaminosaccharid.

Was das Polyaminosaccharid anbelangt, so hat es sich im Rahmen der Erfindung bewährt, wenn das Polyaminosaccharid Hexosamine umfasst, insbesondere hieraus besteht. Hexosamine sind Aminozucker, die sich formal von Hexosen ableiten, wobei mindestens eine Hydroxygruppe durch eine Aminogruppe ersetzt ist. Polyaminosaccharide sind entsprechend Kohlenhydrate, bei denen eine große Anzahl (mindestens elf) von Monoaminosacchariden - erfindungsgemäß bevorzugt in Form von Hexosaminen - über eine glycosidische Bindung verbunden sind.

Im Rahmen der Erfindung können die Hexosamine ausgewählt sein aus der Gruppe von Fructosamin, Galactosamin, Glucosamin, Mannosamin, Psicosamin, Sorbosamin, Tagatosamin und deren Mischungen, insbesondere Galactosamin, Glucosamin, Mannosamin und deren Mischungen.

Vorzugsweise ist das Hexosamin Glucosamin. Glucosamin bzw. 2-Amino-2-desoxy-α/β-D-glucopyranose ist ein natürlich vorkommender Aminozucker, welcher sich von Glucose durch den Ersatz der 2-Hydroxygruppe durch eine Aminogruppe ableitet.

Es ist erfindungsgemäß entsprechend bevorzugt, wenn das Polyaminosaccharid Polyglucosamin (Chitosan) umfasst, insbesondere hieraus besteht bzw. Polyglucosamin ist.

Es ist auch möglich, dass das Polyaminosaccharid Mischungen aus Poly-N-Acetylglucosamin (Chitin) und Polyglucosamin (Chitosan) umfasst, insbesondere hieraus besteht.

Chitosan bzw. Poliglusam oder Poly-D-Glucosamin oder Polyglucosamin (die Begriffe werden nachfolgend synonym verwendet) ist ein natürlich vorkommendes Biopolymer, das sich vom Chitin, ebenfalls ein Polyaminosaccharid, ableitet.

Chitin setzt sich aus β-1,4-glycosidisch verknüpften N-Acetylglucosaminresten (2-Acetamido-2-desoxy-β-D-glucopyranose-Resten) zusammen. Chitosan wird aus Chitin durch Deacetylierung gewonnen. Diese kann technisch durch (heiße) Natronlauge oder enzymatisch erfolgen. Beide Prozesse werden praktisch genutzt, wobei die alkalische Prozedur im Vordergrund steht.

Generell bzw. auf Grund der Tatsache, dass Chitosan aus Chitin erhalten wird, ist es so, dass der Übergang zwischen den beiden Polyaminosacchariden fließend ist. Im Rahmen der Erfindung meint Chitin grundsätzlich ein Polyaminosaccharid aus Glucosamin, wobei das Polyaminosaccharid einen Acetylierungsgrad von mehr als 60 % aufweist (mehr als 60 % aller Aminogruppen sind N-acetyliert). Chitosan meint erfindungsgemäß grundsätzlich ein Polyaminosaccharid aus Glucosamin, wobei das Polyaminosaccharid einen Acetylierungsgrad von weniger als 60 % aufweist (weniger als 60 % aller Aminogruppen sind N-acetyliert).

Erfindungsgemäß bevorzugt ist die Verwendung von Polyglucosamin (Chitosan); aufgrund des fließenden Übergangs von Chitin und Chitosan kann es jedoch auch vorkommen, dass das Polyaminosaccharid Mischungen aus Poly-N-Acetylglucosamin (Chitin) und Polyglucosamin umfasst. Soweit es sich in einer solchen Mischung bei dem Poly-*N*-Acetylglucosamin um die Minderkomponente handelt, wird im Rahmen der Erfindung eine solche Mischung als überwiegend Polyglucosamin-haltig aufgefasst und unter die Bezeichnung Polyglucosamin (Chitosan) gefasst. Insoweit meint der Begriff Polyglucosamin im Rahmen der Erfindung generell sowohl das reine Polyaminosaccharid als auch Mischungen von Polyglucosamin und Poly-*N*-Acetylglucosamin, welche als Minderbestandteil Poly-*N*-Acetylglucosamin enthalten. Besonders bevorzugt ist erfindungsgemäß gleichwohl die Verwendung von reinem Polyglucosamin, d. h. einem Polyaminosaccharid aus Glucosamin, wobei das Polyaminosaccharid einen Acetylierungsgrad von weniger als 60 % aufweist.

Wie auch aus dem fließenden Übergang zwischen Chitin und Chitosan ersichtlich, kann der Grad der Deacetylierung von Chitosan (oder auch Chitin) generell erheblich variieren. Dies gilt für eine Chitosan-Zusammensetzung gleichsam wie für ein einzelnes Chitosan-Makromolekül. Die Deacetylierung, insbesondere bezogen auf ein einzelnes Chitosan-Makromolekül, kann dabei vollständig oder teilweise erfolgen bzw. ausgebildet sein.

Hierbei kann sich eine insbesondere zumindest im Wesentlichen zufällige bzw. unsystematische Verteilung von (stark) deacetylierten Bereichen und weniger deacetylierten Bereichen oder auch eine homogene Deacetylierungsverteilung ergeben. Diese Verteilung von acetylierten und deacetylierten Bereichen kann erhebliche Auswirkungen auf die Molekülgestalt haben. Gleichzeitig kann aufgrund dieses zur Deacetylierung notwendigen chemischen Eingriffes die Kettenlänge des Polymers abnehmen (Depolymerisation), wodurch die Löslichkeit und die Viskosität des Polymers verändert werden können. Chitosan-Zusammensetzungen als Produkte der Deacetylierung von Chitin können daher mit zum Teil deutlich unterschiedlichen Eigenschaften erhalten werden, was im Rahmen der Erfindung vorteilhaft genutzt werden kann.

Bevorzugt ist es im Rahmen der Erfindung daher vorgesehen, dass die Pigmentpaste ein Netz- und Dispergiermittelsystem enthält, welches mindestens zwei Netz- und Dispergiermittel umfasst, wobei eines der mindestens zwei Netz- und Dispergiermittel ein Polyglucosamin ist.

Gegenstand der vorliegenden Erfindung gemäß dem geltenden Aspekt ist somit insbesondere auch eine solche wässrige Pigmentpaste für Abtönsysteme, die insbesondere zumindest im Wesentlichen frei ist von Konservierungsmitteln und/oder Bioziden, insbesondere wie zuvor beschrieben,

welche ein Netz- und Dispergiermittelsystem enthält, wobei das Netz- und Dispergiermittelsystem mindestens zwei Netz- und Dispergiermittel umfasst, wobei eines der mindestens zwei Netz- und Dispergiermittel ein Polyglucosamin ist.

Im Rahmen der vorliegenden Erfindung hat es sich bewährt, wenn das Polyaminosaccharid, insbesondere Polyglucosamin, funktionalisiert, insbesondere N-funktionalisiert, ist. Gleichzeitig hierzu bzw. unabhängig davon kann das Polyaminosaccharid, insbesondere Polyglucosamin, auch O-funktionalisiert sein. O-bzw. N-funktionalisiert umfasst dabei insbesondere, dass das Polyaminosaccharid, insbesondere Polyglucosamin, *O*- bzw. *N*-alkyliert und/oder *O*- bzw. *N*-acyliert, ist bzw. sind, vorzugsweise mit C1- bis C5-Alkyl- und/oder C1- bis C5-Acylresten, insbesondere C1- bis C3-Alkyl- und/oder C1- bis C3-Acylresten.

Vorzugsweise können die Acyl- oder Alkylreste funktionelle Gruppen wie Hydroxygruppen, Carbonylgruppen, Carbonsäuregruppen oder auch Aminogruppen umfassen, insbesondere um die Löslichkeit des Polyaminosaccharids vorteilhaft zu modellieren. Auch ist es vorzugsweise so, dass unterschiedliche Funktionalisierungen bzw. diesbezügliche funktionelle Reste nebeneinander in einem Polyaminosaccharid- bzw. Polyglucosamin-Molekül vorhanden sein können.

Bevorzugte Beispiele für funktionalisierte Polyaminosaccharide und insbesondere Polyglucosamin sind etwa ausgewählt aus der Gruppe von Hydroxypropylchitosan, *N*-Octyl-*N*-trimethylchitosan, *N*-Octyl-*O*-glycolchitosan, N-[(2-hydroxy-3-trimethylammonium)propyl]chitosanchlorid, Carboxymethylchitosan, *N,N,N-*Trimethylchitosan, PEGliertem Chitosan, *N*-Succinylchitosan, *N,O-*Carboxymethylchitosan, phosphoryliertem Chitosan, Folsäure-Chitosan-Konjugaten und deren Mischungen.

Ein weiteres bevorzugtes Beispiel ist Chitosan, das mit Formaldehyd modifiziert wurde. Die Modifizierung von Chitosan mit Formaldehyd führt insbesondere zu einer Kettenverlängerung bzw. Alkylierung, insbesondere Methylierung, der Aminofunktion des Chitosans. Besonders bevorzugt sind dementsprechend auch N-alkylierte Chitosanverbindungen, insbesondere aus der vorgenannten Gruppe bevorzugter funktionalisierter Chitosane.

Darüber hinaus wird es erfindungsgemäß auch bevorzugt, wenn Chitosan-Nanopartikel bzw. funktionalisierte Chitosanverbindungen, insbesondere wie zuvor beschrieben, die an metallische Nanopartikel konjugiert sind, eingesetzt werden. Eine weitere bevorzugt verwendete Chitosanverbindungen umfasst quervernetzte Chitosan-Hydrogele.

Besonders gute Ergebnisse werden im Rahmen der Erfindung erhalten, wenn *O-*bzw. *N*-funktionalisierte Polyaminosaccharide, insbesondere Polyglucosamin, *N-*acyliert wie zuvor beschrieben, und ganz besonders bevorzugt *N*-acetyliert, sind. Im Rahmen der Erfindung meint dies, dass das Polyaminosaccharid bzw. Polyglucosamin insbesondere zumindest im Wesentlichen Acyl- bzw. Acetylgruppen als funktionelle Gruppen umfasst. Die Anwesenheit weiterer funktioneller Gruppen ist gleichwohl ebenfalls möglich, vorzugsweise jedoch in geringerem Maße. Auch die Anwesenheit weiterer Funktionalisierungen, insbesondere von Hydroxylgruppen, ist, wie zuvor anhand der beispielhaft genannten funktionalisierten Polyaminosaccharide und insbesondere Polyglucosamine illustriert worden ist, möglich.

Gemäß einer besonderen Ausführungsform kann es auch sein, dass das Polyaminosaccharid, insbesondere Polyglucosamin, im Rahmen der Erfindung nur *N*-Funktionalisierungen, insbesondere in Form von *N*-Alkylierung und/oder N-Acylierung, vorzugsweise mit C1- bis C5-Alkyl- und/oder C1- bis C5-Acylresten, insbesondere C1- bis C3-Alkyl- und/oder C1- bis C3-Acylresten, aufweist.

Wenn das Polyaminosaccharid, insbesondere Polyglucosamin, funktionalisiert, insbesondere *N*-funktionalisiert, ist, hat es sich als vorteilhaft erwiesen, dass das Polyaminosaccharid, insbesondere Polyglucosamin, einen Funktionalisierungsgrad, insbesondere *N*-Funktionalisierungsgrad, vorzugsweise *N*-Alkylierungsgrad und/oder *N*-Acylierungsgrad, bevorzugt *N*-Acetylierungsgrad, von 80 % oder weniger, insbesondere 50 % oder weniger, vorzugsweise 35 % oder weniger, bevorzugt 25% oder weniger aufweist.

Für den bevorzugten Fall, dass das Polyaminosaccharid Polyglucosamin umfasst bzw. insbesondere hieraus besteht, wird es erfindungsgemäß besonders bevorzugt, wenn das Polyglucosamin einen Deacetylierungsgrad von 50 % oder mehr, insbesondere 65 % oder mehr, vorzugsweise 75 % oder mehr, aufweist.

Auch hat es sich erfindungsgemäß als zweckmäßig erwiesen, wenn das Polyaminosaccharid, insbesondere Polyglucosamin, ein Funktionalisierungsmuster, insbesondere *N*-Funktionalisierungsmuster, vorzugsweise *N*-Alkylierungsmuster und/oder *N*-Acylierungsmuster, bevorzugt *N*-Acetylierungsmuster, in Form einer alternierenden, blockweisen oder zufälligen Verteilung der funktionellen Gruppen aufweist.

Bevorzugt ist es so, dass das Polyaminosaccharid, insbesondere Polyglucosamin, ein Funktionalisierungsmuster, insbesondere *N*-Funktionalisierungsmuster, vorzugsweise *N*-Alkylierungsmuster und/oder *N*-Acylierungsmuster, bevorzugt *N*-Acetylierungsmuster, in Form einer blockweisen oder zufälligen Verteilung der funktionellen Gruppen, vorzugsweise in Form einer zufälligen Verteilung der funktionellen Gruppen, aufweist.

Wenn im Rahmen der vorliegenden Erfindung Polyaminosaccharide, insbesondere Polyglucosamin, mit Funktionalisierungen wie zuvor beschrieben verwendet werden, kann vorteilhaft eine hohe Dispersionsleistung der Polyaminosaccharide realisiert werden. Insbesondere weisen entsprechende Polyaminosaccharide eine hinreichend vorteilhafte Löslichkeit in wässrig basierten Systemen auf. Auf Grund der molekularen Struktur wird vorteilhaft - ohne sich auf diese Theorie beschränken zu wollen - ein in gewisser Weise amphiphiler Charakter des Moleküls realisiert, der sich in der erzielten hohen Dispersionsleistung ausdrückt. Darüber hinaus lassen sich auch weitere, mit der Verwendung von Polyaminosacchariden, insbesondere Polyglucosamin, assoziierte Vorteile in der erfindungsgemäßen Pigmentpaste realisieren, beispielsweise ein relativ hoch ausgeprägtes Potential, das Wachstum von Bakterien oder Pilzen stören zu können. Auch dies kann auf die besonderen Moleküleigenschaften der Polyaminosaccharide, insbesondere Polyglucosamin, zurückgeführt werden.

Die Art und Weise der Funktionalisierung ebenso wie der Funktionalisierungsgrad als auch das eingestellte Funktionalisierungsmuster gestatten vorteilhaft eine Modellierung der Löslichkeits- und Dispersionseigenschaften des verwendeten Polyaminosaccharids, insbesondere Polyglucosamins, Poly-*N*-Acetylglucosamins und deren Mischungen. Wenn diese sich im vorgenannten Rahmen bewegen, werden besonders vorteilhafte Dispersionseigenschaften in erfindungsgemäßen Pigmentpasten erzielt.

Darüber hinaus ist es im Rahmen der Erfindung vorzugsweise vorgesehen, dass das Polyaminosaccharid, insbesondere Polyglucosamin, modifiziert, insbesondere *O-*bzw. *N*-modifiziert, ist, vorzugsweise *N*-protoniert und/oder *N*-komplexiert ist.

Modifizierung und Funktionalisierung des Polyaminosaccharids bzw. Polyglucosamins können erfindungsgemäß nebeneinander vorliegen, d. h. innerhalb eines Moleküls können sowohl *O*- bzw. *N*-funktionalisierte Bereiche vorliegen als auch solche, in denen keine Funktionalisierung vorhanden und entsprechend Raum für *O*- bzw. N-Modifizierungen besteht, insbesondere in Form einer Protonierung oder Komplexierung der betreffenden Amino- oder Hydroxylgruppe. Um eine *O*- bzw. *N*-Protonierung und *O*- bzw. *N*-Komplexierung nebeneinander vorzunehmen bzw. diese nebeneinander einführen zu können, ist es bspw. möglich, die diesbezüglich erforderlichen Substanzen oder Reagenzien in aufeinanderfolgenden Reaktionsschritten oder auch in Mischung zu verwenden.

Wenn das Polyaminosaccharid, insbesondere Polyglucosamin, speziell *N*-modifiziert in Form einer *N*-Protonierung sein soll bzw. ist, so wird dies vorzugsweise erreicht mittels Behandlung des Polyaminosaccharids mit anorganischen oder organischen Säuren wie beispielsweise HCl, Essigsäure, Oxalsäure, Kohlensäure, Phosphorsäure.

Wenn das Polyaminosaccharid, insbesondere Polyglucosamin, speziell *N*-modifiziert in Form einer *N*-Komplexierung sein soll bzw. ist, so wird dies vorzugsweise erreicht mittels Behandlung mit sauren Komplexbildnern wie Nitrilotriessigsäure, Ethylendiamintetraessigsäure, Tricin (*N*-(Tri(hydroxymethyl)methyl)glycin), Iminodiessigsäure, Ethylendiaminotriessigsäure, Diethylentriaminpentaessigsäure, Triethylentetraminhexaessigsäure, Diaminocyclohexantetraessigsäure, 1,4,7,10-Tetraaza-cyclododecan-1,4,7,10-tetraessigsäure, Oxalsäure, Weinsäure, Zitronensäure, Bernsteinsäure, Apfelsäure, Isozitronensäure, Glycolsäure, Milchsäure, Mandelsäure, Tatronsäure, β-Hydroxbuttersäure, Mevalonsäure, Gallussäure, Salicylsäure, 4-Hydroxybenzoesäure und deren Mischungen, entweder in Form der freien Säuren oder der korrespondierenden Alkalimetallsalze bzw. insbesondere Natriumsalze, vorzugsweise je in wässriger Lösung bzw. verdünnt mit Waser.

In diesem Sinne ist es erfindungsgemäß für *N*-komplexierte Polyaminosaccharide, insbesondere Polyglucosamin, bevorzugt vorgesehen, dass das Polyaminosaccharid, insbesondere Polyglucosamin, N-komplexiert ist mit Liganden ausgewählt aus der Gruppe von Tricin, Nitrilotriacetat, Ethylendiamintetraacetat, Iminodiacetat, Ethylendiaminotriacetat, Diethylentriaminpentaacetat, Triethylentetraminhexaacetat, Diaminocyclohexantetraacetat, 1,4,7,10-Tetraazacyclodo-decan-1,4,7,10-tetraacetat, Oxalat, Tartrat, Citrat, Succinat, Malat, Isocitrat, Glycolat, Lactat, Hydroxyphenylacetat, Gallat, Salicylat, 4-Hydroxybenzoat und deren Mischungen.

Gute Ergebnisse liefern auch Komplexbildner wie Fumarsäure, Maleinsäure, Malonsäure, Glutarsäure, Adipinsäure, Pimelinsäure, Suberinsäure, Phthalsäure, Isophthalsäure, Terephthalsäure, Agaricinsäure, 1,2,3,-Propantricarbonsäure, Hemimellitsäure, Trimellitsäure, Trimesinsäure und deren Mischungen bzw. wenn das Polyaminosaccharid, insbesondere Polyglucosamin, Poly-N-Acetylglucosamin (Chitin) und deren Mischungen, *N*-komplexiert ist mit den korrespondierenden Salzen der vorgenannten Säuren.

Besonders bevorzugt ist es im Rahmen der vorliegenden Erfindung, wenn das Polyaminosaccharid, insbesondere Polyglucosamin, *N*-komplexiert ist mit Tricin (N-(Tri(hydroxymethyl)methyl)glycin) bzw. als Tricin-Chitosan-Komplex vorliegt. Weiter bevorzugt kann der Tricin-Chitosan-Komplex zudem Metallionen, insbesondere Alkali- und/oder Erdalkalimetallionen, umfassen. Die Alkali- und/oder Erdalkalimetallionen sind vorzugsweise ausgewählt aus der Gruppe von Calcium, Magnesium, Natrium oder Kalium, insbesondere Calcium (Ca²⁺) und/oder Magnesium (Mg²⁺). Besonders gute Ergebnisse werden im Rahmen der Erfindung erhalten, wenn Tricin im Überschuss eingesetzt wird, bspw. in 5- bis 10-fachem Überschuss bezogen auf die eingesetzte Menge, insbesondere Molmenge, an Chitosan.

Vorteilhaft wird dabei zur N-Modifizierung das Polyaminosaccharid und der Komplexbildner bzw. die Säure im Massenverhältnis von 1 : 0,3 bis 1 : 7,5 eingesetzt. Erfindungsgemäß wird ein Überschuss des Komplexbildners bzw. der Säure bevorzugt verwendet. Wenn zusätzlich ein Metallion im Komplex umfasst sein soll, so werden das Metallion und der Komplexbildner bzw. die Säure im Massenverhältnis von 0,5 : 1 bis 1 : 0,5 eingesetzt. Das Metallion wird dabei aus korrespondierenden, löslichen Salzen erhalten. Derartige Metallsalze sind gemeinhin bekannt und können zweckmäßig ausgewählt werden.

Die Protonierung von Polyaminosacchariden sowie die Verwendung von Komplexbildnern gestattet vorteilhaft eine Modifizierung der Viskosität, insbesondere eine Erhöhung der Viskosität, einer entsprechenden Polyaminosaccharid-Lösung bzw. insgesamt der erfindungsgemäßen Paste. Beispielsweise weisen etwa Polyaminosaccharid-Lösungen, speziell Chitosan-Lösungen, mit bspw. Diethylentriaminpentaessigsäure als Chelatkomplexbildner im Verhältnis 1 : 0,5 in Wasser eine Viskosität im Bereich um 800 bis 900 mPas auf. Für den bevorzugten Fall, dass eine noch höhere Viskosität gewünscht ist, können *N*-modifizierte, vorzugsweise *N*-komplexierte, Polyaminosaccharide bzw. Polyglucosamine mit zweiwertigen Kationen, insbesondere Ca²⁺ und/oder Mg²⁺, versetzt werden. Hieraus werden hochviskose bis gelförmige Lösungen bzw. Dispersionen erhalten. Auf diese Weise kann neben den dispergierenden Eigenschaften also auch eine die Rheologie von erfindungsgemäßen Pasten beeinflussende Wirkung der Polyaminosaccharide realisiert und vorteilhaft genutzt werden. Darüber hinaus werden durch die N-Modifizierung auch die dispergierenden Eigenschaften von Polyaminosacchariden im Rahmen der vorliegenden Erfindung vorteilhaft modifiziert, so dass eine bedarfsgerecht anpassbare Dispergierleistung erzielt wird.

Insgesamt ist es im Rahmen der Erfindung besonders bevorzugt, wenn das funktionalisierte und/oder modifizierte Polyaminosaccharid, insbesondere Polyglucosamin, ausgewählt ist aus der Gruppe von Hydroxypropylchitosan, Carboxymethylchitosan, *N,N,N*-Trimethylchitosan, PEGliertem Chitosan, N-Succinylchitosan, *N,O*-Carboxymethylchitosan, phosphoryliertem Chitosan, Folsäure-Chitosan-Konjugaten, Formaldehyd-modifiziertem Chitosan, Tricin-Chitosan-Komplexen, Erdalkalimetall-Tricin-Chitosan-Komplex, quervernetzten Chitosan-Hydrogelen und deren Mischungen.

Weiter im Hinblick auf die Beschaffenheit erfindungsgemäß bevorzugter Polyaminosaccharide hat es sich bewährt, wenn das Polyaminosaccharid, insbesondere Polyglucosamin, ein gewichtsmittleres Molekulargewicht M_{w} in einem Bereich von 0,1 kDa bis 1.000 kDa, insbesondere 0,4 kDa bis 900 kDa, vorzugsweise 0,6 kDa bis 800 kDa, aufweist.

Bevorzugterweise werden Polyaminosaccharide mit einem niedrigen gewichtsmittleren Molekulargewicht M_{w} eigesetzt, d. h. das Polyaminosaccharid, insbesondere Polyglucosamin, weist vorzugsweise ein gewichtsmittleres Molekulargewicht M_{w} in einem Bereich von 0,1 kDa bis 250 kDa, insbesondere 0,4 kDa bis 100 kDa, vorzugsweise 0,6 kDa bis 50 kDa, auf.

Alternativ können auch Polyaminosaccharide mit einem mittleren gewichtsmittleren Molekulargewicht M_{w} eigesetzt werden, d. h. das Polyaminosaccharid, insbesondere Polyglucosamin, weist vorzugsweise ein gewichtsmittleres Molekulargewicht M_{w} in einem Bereich von 100 kDa bis 500 kDa, insbesondere 150 kDa bis 400 kDa, vorzugsweise 175 kDa bis 350 kDa, auf.

Ebenfalls ist es möglich, Polyaminosaccharide mit einem hohen gewichtsmittleren Molekulargewicht M_{w} einzusetzen, d. h. das Polyaminosaccharid, insbesondere Polyglucosamin, weist vorzugsweise ein gewichtsmittleres Molekulargewicht M_{w} in einem Bereich von 400 kDa bis 1.000 kDa, insbesondere 450 kDa bis 900 kDa, vorzugsweise 500 kDa bis 850 kDa, auf.

Ganz besonders bevorzugt ist es, wenn das Polyaminosaccharid, insbesondere Polyglucosamin, ein gewichtsmittleres Molekulargewicht M_{w} in einem Bereich von 0,1 kDa bis 20 kDa, insbesondere 0,4 kDa bis 10 kDa, vorzugsweise 0,6 kDa bis 5 kDa, aufweist.

Das gewichtsmittleren Molekulargewicht M_{w} kann erfindungsgemäß bspw. mittels dynamischer Lichtstreuung bestimmt werden, etwa in Anlehnung an DIN ISO 22412:2018-09.

Im Rahmen der vorliegenden Erfindung eignen sich vorteilhaft also Polyaminosaccharide innerhalb eines breiten mittleren gewichtsmittleren Molekulargewichtsspektrums.

Die Verwendung von Polyaminosacchariden mit einem niedrigen gewichtsmittleren Molekulargewicht M_{w} ist dabei insgesamt bevorzugt. Vergleichsweise niedrige mittlere gewichtsmittlere Molekulargewicht tragen vorteilhaft zu einer guten Einarbeitbarkeit des Polyaminosaccharids sowie der weiteren Komponenten der erfindungsgemäßen Pigmentpaste in diese bei. Zudem eignen sich Polyaminosaccharide mit niedrigen mittleren gewichtsmittleren Molekulargewichten dann, wenn ein nur geringer Einfluss des Netz- und Dispergiermittelsystems auf die Rheologie erfindungsgemäßer Pigmentpasten gewünscht ist.

Polyaminosaccharide mit mittleren bzw. hohen mittleren gewichtsmittleren Molekulargewichten gestatten demgegenüber eine weiterreichende Beeinflussung der Rheologie von erfindungsgemäßen Pigmentpasten, während gleichzeitig gute Dispergiereigenschaften sichergestellt werden.

Die dispergier- sowie auch rheologiemodifizierenden Eigenschaften von erfindungsgemäß bevorzugt verwendeten Polyaminosacchariden können vorteilhaft auch durch die gezielte Kombination von Funktionalisierung bzw. Modifizierung, insbesondere der Aminofunktionen, der Polyaminosaccharide und Auswahl spezieller mittlerer gewichtsmittlerer Molekulargewichtsbereiche gestaltet werden, so dass auf Basis der im Rahmen der Erfindung verwendeten Polyaminosaccharide vorteilhaft eine flexible und bedarfsgereichte Einstellung des Netz- und Dispergiermittelsystems in Orientierung an den Anforderungen an die erfindungsgemäße Pigmentpaste möglich ist. Insbesondere ist es dabei vorteilhaft möglich, thixotrope Eigenschaften in erfindungsgemäße Pigmentpasten zu induzieren, was in der praktischen Anwendung besonders vorteilhaft ist. Einerseits kann auf der Grundlage der thixotropen Eigenschaften eine verbesserte Einarbeitbarkeit in Bindemittelsysteme zur Erzeugung von Farben und Lacken erreicht werden. Andererseits wird ein Absetzen der Bestandteile der Pigmentpaste effektiv verhindert bzw. zumindest verzögert, sodass anwendungsfreundlich zu handhabende Pigmentpasten mit einer hohen Dispersionsstabilität bereitgestellt werden können.

Erfindungsgemäße hat es sich bewährt, wenn das Netz- und Dispergiermittelsystem das Polyaminosaccharid, insbesondere Polyglucosamin, in Mengen von 0,01 bis 10 Gew.-%, insbesondere 0,05 bis 8 Gew.-%, vorzugsweise 0,08 bis 6 Gew.-%, bevorzugt 0,1 bis 5 Gew.-%, bezogen auf das Netz- und Dispergiermittelsystem, enthält.

Gleichermaßen werden im Rahmen der Erfindung gute Ergebnisse erhalten, wenn die Pigmentpaste das Polyaminosaccharid, insbesondere Polyglucosamin, in Mengen von 0,0005 bis 5 Gew.-%, insbesondere 0,00025 bis 3 Gew.-%, vorzugsweise 0,00075 bis 2 Gew.-%, bevorzugt 0,001 bis 1,5 Gew.-%, bezogen auf die Zusammensetzung, enthält.

In den vorgenannten Mengenbereichen werden die mit der Verwendung von Polyaminosacchariden assoziierten Vorteile in besonderem Maße realisiert. Im Rahmen der Erfindung können dabei insbesondere bei Verwendung geringer Mengen des Polyaminosaccharids, insbesondere Polyglucosamins, vorteilhafte Ergebnisse erzielt werden, was eine hohe Wirkeffizienz des Polyaminosaccharids, insbesondere Polyglucosamins, zeigt.

Gegenstand der vorliegenden Erfindung gemäß dem geltenden Aspekt ist somit insbesondere auch eine solche wässrige Pigmentpaste für Abtönsysteme, die insbesondere zumindest im Wesentlichen frei ist von Konservierungsmitteln und/oder Bioziden, insbesondere wie zuvor beschrieben,
welche ein Netz- und Dispergiermittelsystem enthält, wobei das Netz- und Dispergiermittelsystem mindestens zwei, insbesondere zwei, Netz- und Dispergiermittel umfasst, wobei eines der mindestens zwei, insbesondere zwei, Netz- und Dispergiermittel ein Polyaminosaccharid, insbesondere ein Polyglucosamin, ist, und
wobei das Polyaminosaccharid, insbesondere Polyglucosamin, funktionalisiert, insbesondere *N*-funktionalisiert, ist, vorzugsweise *N*-alkyliert und/oder *N*-acyliert, ist, vorzugsweise mit C1- bis C5-Alkyl- und/oder Acylresten, insbesondere C1- bis C3-Alkyl- und/oder Acylresten *N*-alkyliert und/oder *N*-acyliert ist, und/oder
wobei das Polyaminosaccharid, insbesondere Polyglucosamin, modifiziert, insbesondere *N*-modifiziert, vorzugsweise *N*-protoniert und/oder *N*-komplexiert, ist,
insbesondere wobei das funktionalisierte und/oder modifizierte Polyaminosaccharid, insbesondere Polyglucosamin, ausgewählt ist aus der Gruppe von Hydroxypropylchitosan, Carboxymethylchitosan, *N,N,N*-Trimethylchitosan, PEGliertem Chitosan, *N*-Succinylchitosan, *N,O*-Carboxymethylchitosan, phosphoryliertem Chitosan, Folsäure-Chitosan-Konjugaten, Formaldehyd-modifiziertem Chitosan, Tricin-Chitosan-Komplexen, Erdalkalimetall-Tricin-Chitosan-Komplex, quervernetzten Chitosan-Hydrogelen und deren Mischungen, und
wobei das Netz- und Dispergiermittelsystem das Polyaminosaccharid, insbesondere Polyglucosamin, in Mengen von 0,01 bis 10 Gew.-%, insbesondere 0,05 bis 8 Gew.-%, vorzugsweise 0,08 bis 6 Gew.-%, bevorzugt 0,1 bis 5 Gew.-%, bezogen auf das Netz- und Dispergiermittelsystem, enthält, und/oder
wobei die Pigmentpaste das Polyaminosaccharid, insbesondere Polyglucosamin, in Mengen von 0,0005 bis 5 Gew.-%, insbesondere 0,00025 bis 3 Gew.-%, vorzugsweise 0,00075 bis 2 Gew.-%, bevorzugt 0,001 bis 1,5 Gew.-%, bezogen auf die Zusammensetzung, enthält.

Neben einem Polyaminosaccharid enthält das Netz- und Dispergiermittelsystem erfindungsgemäßer Pigmentpasten noch weitere Netz- und Dispergiermittel. Vorzugsweise ist es dabei so, dass die Pigmentpaste mindestens ein, vorzugsweise ein, weitere(s) Netz- oder Dispergiermittel aufweist.

Entsprechend ist es im Rahmen der Erfindung vorzugsweise vorgesehen, dass das Netz- und Dispergiermittelsystem umfasst:
a) ein Polyaminosaccharid,
b) ein weiteres Netz- oder Dispergiermittel.

In Bezug auf das weitere Netz- und Dispergiermittel b) hat es sich bewährt, wenn das weitere Netz- oder Dispergiermittel b) ausgewählt ist aus der Gruppe von nichtionischen Tensiden, kationischen Tensiden, anionischen Tensiden und deren Mischungen.

In einer besonders bevorzugten Ausführung der vorliegenden Erfindung liegt das Netz- oder Dispergiermittel b) als Mischung mehrerer unterschiedlicher, insbesondere als Mischung von zwei unterschiedlichen, Netz- und Dispergiermitteln vor.

Beispiele für anionische Tenside sind etwa Sulfonate, wie Alkylbenzolsulfonate und Alkylnaphthalinsulfonate, bspw. Natriumalkylnaphthalinsulfonat oder Calciumalkylnaphthalinsulfonat, Carboxylate, wie Polyacrylate, bspw. Natriumpolyacrylat, Ammoniumpolyacrylat, Fettsäuresalze, bspw. Natriumstearat, Kaliumstearat, oder Maleinsäurecopolymere, bspw. Natriummaleinsäurecopolymer, oder Phosphate wie Alkylphosphate, bspw. Natriumalkylphosphat, Kaliumalkylphosphat, oder Polyphosphate, wie Natriumpolyphosphat, Kaliumpolyphosphat.

Beispiele für nichtionische Tenside sind etwa Alkoxylate, insbesondere Fettalkoholethoxylate, wie bspw. Laurylalkoholethoxylat, Cetylstearylalkoholethoxylat, Fettsäureethoxylate, wie bspw. Stearinsäureethoxylat, Oleinsäureethoxylat, Glycerinethoxylate, wie bspw. Glycerylmonostearatethoxylat, Glycerylmonolauratethoxylat, oder Fettaminethoxylat, insbesondere Cocamidethoxylat, Stearylaminethoxylat, Blockcopolymere, insbesondere EO/PO Copolymere, Alkylpolyglucoside (APGs), insbesondere Decylglucosid, Laurylglucosid, Cocoylglucosid oder Capryl/Caprylylglucosid, Fettsäureamide, insbesondere Cocamide DEA (Diethanolamid), Cocamide MEA (Monoethanolamid) oder Cocamide MIPA (Isopropanolamid).

Beispiele für kationische Tenside sind etwa Benzalkoniumchlorid oder Hexadecyltrimethylammoniumchlorid.

Vorzugsweise handelt es sich bei dem weiteren Netz- oder Dispergiermittel b) um nichtionische Polymere, kationische Polymere, anionische Polymere und deren Mischungen, insbesondere nichtionischen Copolymeren, anionischen Copolymeren, Polyethern und deren Mischungen.

Insbesondere werden gute Ergebnisse erhalten, wenn das weitere Netz- oder Dispergiermittel b) ausgewählt ist aus der Gruppe von Polycarboxylaten, insbesondere Salzen, insbesondere Natriumsalzen und/oder Ammoniumsalzen, von Polyacrylsäuren, Polyphosphaten, insbesondere linearen Polyphosphate und/oder cyclischen Methaphosphaten, Polyetherphosphaten, Polycarbonsäurepolymeren, Acrylblock-Copolymeren, Polyurethanen, ethoxylierten Fettalkoholen, nichtionischen gesättigten langkettigen Alkoholen, Fettalkoholsulfaten, Alkylphosphonaten, Polysiloxanethern, insbesondere Methoxypolyethoxypropyltrisiloxanen, Alkindiolethoxylaten, modifizierten Styrol-Maleinsäure-Copolymeren, Tensiden, Geminitensiden, Bola-Tensiden, Fluortensiden, modifizierten natürlichen Ölen und deren Mischungen.

Weiter bevorzugt ist im Rahmen der Erfindung vorgesehen, dass das weitere Netz- oder Dispergiermittel b) Polyethylenglycol (PEG) umfasst, insbesondere hieraus besteht. Besonders bevorzugt umfasst das weitere Netz- oder Dispergiermittel b) dabei ein oder mehrere, insbesondere zwei, unterschiedliche Polyethylenglycole, insbesondere wobei sich diese Polyethylenglycole im Hinblick auf die molekulare Masse unterscheiden, insbesondere im Bereich um 50 bis 300 Da.

Die vorgenannten Netz- und Dispergiermittel ergänzen sich in Bezug auf das jeweilige Eigenschaftsprofil vorteilhaft mit Polyaminosacchariden, so dass eine hohe Dispergierleistung erzielt wird und stabile Pigmentpasten auch bei hohen Pigmentsowie ggf. Füllstoffanteilen realisiert werden können.

Bevorzugte Mischungen mehrerer Netz- und Dispergiermittel im Rahmen des Netz- und Dispergiermittels b) umfassen Mischungen von nichtionischen Tensiden mit weiteren, unterschiedlichen nichtionischen Tensiden und/oder kationischen Tensiden und/oder anionischen Tensiden.

Besonders bevorzugt ist vorgesehen, dass nichtionische Tenside wie etwa Alkoxylate, insbesondere Fettalkoholethoxylate, wie bspw. Laurylalkoholethoxylat, Cetylstearylalkoholethoxylat, Fettsäureethoxylate, wie bspw. Stearinsäureethoxylat, Oleinsäureethoxylat, Glycerinethoxylate, wie bspw. Glycerylmonostearatethoxylat, Glycerylmonolauratethoxylat, oder Fettaminethoxylat, insbesondere Cocamidethoxylat, Stearylaminethoxylat, Blockcopolymere, insbesondere Polyethylenglycol, EO/PO Copolymere, Alkylpolyglucoside (APGs), insbesondere Decylglucosid, Laurylglucosid, Cocoylglucosid oder Capryl/Caprylylglucosid, Fettsäureamide, insbesondere Cocamide DEA (Diethanolamid), Cocamide MEA (Monoethanolamid) oder Cocamide MIPA (Isopropanolamid) in Mischung miteinander vorliegen.

Weiter hat es sich als vorteilhaft erwiesen, wenn das weitere Netz- oder Dispergiermittel b) ein mittleres, insbesondere gewichtsmittleres Molekulargewicht von mindestens 500 g/mol, vorzugsweise mindestens 750 g/mol, insbesondere ein mittleres, insbesondere gewichtsmittleres Molekulargewicht im Bereich von 500 bis 100.000 g/mol, insbesondere 750 bis 10.000 g/mol, vorzugsweise 850 bis 5.000 g/mol, besonders bevorzugt 875 bis 3.000 g/mol, aufweist.

In einer weiter bevorzugten Ausführung der Erfindung ist vorgesehen, dass das weitere Netz- oder Dispergiermittel b) auf Basis eines funktionalisierten, insbesondere sauer und/oder basisch funktionalisierten, Polymers ausgebildet ist, wobei das Polymer mindestens eine funktionelle Gruppe enthält, welche insbesondere ausgewählt sein kann aus der Gruppe von Hydroxyl-(-OH), Thiol- (-SH), Amin-, Ammonium-, Carboxyl-, Carbonyl-, Ester-, Ether-, Sulfonyl-, Phosphonsäure, Phosphorsäure- und/oder Phosphorsäureester-Funktionen, vorzugsweise Hydroxyl- (-OH), Thiol- (-SH) und/oder Amin-Funktionen.

Bevorzugt ist es hierbei, wenn das weitere Netz- oder Dispergiermittel b) aus der Gruppe von funktionalisierten Polyaminen, funktionalisierten Polyurethanen, funktionalisierten Poly(meth)acrylaten, funktionalisierten Vinylcopolymeren, funktionalisierten Polyether/Polyester-Copolymeren, funktionalisierten Polyethern, funktionalisierten Polyestern, funktionalisierten Fettsäurecopolymeren, funktionalisierten Blockcopolymeren und/oder funktionalisierten Polyalkoxylaten sowie Mischungen oder Kombinationen von mindestens zwei dieser Verbindungen ausgewählt ist.

Weiter hat es sich bewährt, wenn im Falle einer basischen Funktionalisierung die betreffende Basenzahl des Polymers mindestens 10 mg KOH/g, insbesondere mindestens 20 mg KOH/g, vorzugsweise mindestens 25 mg KOH/g, beträgt. Im Fall einer sauren Funktionalisierung beträgt die Säurezahl insbesondere mindestens 10 mg KOH/g, vorzugsweise mindestens 25 mg KOH/g, besonders bevorzugt mindestens 50 mg KOH/g,

Die vorgenannten Netz- und Dispergiermittel erzielen im Rahmen der Erfindung besonders vorteilhafte Dispergierleistungen, insbesondere in Kombination mit Polyaminosacchariden. Insoweit ist von einem vorteilhaften Zusammenwirken auszugehen, insbesondere auch im Hinblick auf weitere Wirkaspekte des Netz- und Dispergiermittelsystems erfindungsgemäßer Pigmentpasten, wie bspw. den Aspekt, dass die Dispergiermittelkombination des Netz- und Dispergiermittelsystems eine Hemmung bzw. Verlangsamung von Bakterien- und Schimmelpilzbefall erreichen kann, ohne hierbei per se biozid zu sein. Auch kann die Rheologie erfindungsgemäßer Pigmentpasten gesteuert werden, so dass insgesamt vorteilhaft stabilisierte Pigmentpasten mit einer hohen Haltbarkeit zur Verfügung gestellt werden können.

Erfindungsgemäß hat es sich bewährt, wenn das Netz- und Dispergiermittelsystem das weitere Netz- und Dispergiermittel b) in Mengen von 70 bis 99,9 Gew.-%, insbesondere 75 bis 99,5 Gew.-%, vorzugsweise 80 bis 99 Gew.-%, bevorzugt 85 bis 98,5 Gew.-%, bezogen auf das Netz- und Dispergiermittelsystem, enthält.

Gleichzeitig werden gute Ergebnisse erzielt, wenn die Pigmentpaste das weitere Netz- und Dispergiermittel b) in Mengen von 1 bis 50 Gew.-%, insbesondere 3 bis 35 Gew.-%, vorzugsweise 4 bis 30 Gew.-%, bevorzugt 5 bis 25 Gew.-%, bezogen auf die Zusammensetzung, enthält.

Als besonders vorteilhaft hat es sich erwiesen, wenn das Polyaminosaccharid a), insbesondere Polyglucosamin, und das weitere Netz- und Dispergiermittel b) in dem Netz- und Dispergiermittelsystem in einem Mengenverhältnis a) : b) in einem Bereich von 1 : 1 bis 1 : 100, insbesondere 1 : 5 bis 1 : 50, vorzugsweise 1 : 10 bis 1 : 45, bevorzugt 1 : 12,5 bis 1 : 40, bezogen auf das Netz- und Dispergiermittelsystem, vorliegen.

In den vorgenannten Mengenverhältnissen werden die individuellen vorteilhaften Wirkungen von Polyaminosaccharid und weiterem Netz- und Dispergiermittel ideal kombiniert, so dass sich ein besonderes Zusammenwirken ergibt, dass über die Einzelwirkungen der jeweiligen Komponenten in der Pigmentpaste hinausgeht. Insbesondere wird eine hohe Dispergiereffizienz erreicht, so dass insbesondere hochgefüllte Pigmentpasten noch hinreichend gut stabilisiert und die Bestandteile zuverlässig verteilt gehalten werden können. Das Netz- und Dispergiermittelsystem weist außerdem vorteilhaft eine erhöhte Resistenz gegen einen Befall durch Mikroorganismen auf, welche - ohne sich auf diese Theorie beschränken zu wollen
- auf die Kombination der Dispergiermittel zurückzuführen ist, die eine überraschend ungeeignete Grundlage für das Wachstum von Keimen darstellt und dies insbesondere bereits auch in geringeren Mengenanteilen. Somit können Pigmentpasten mit einer hohen Haltbarkeit und insbesondere auch langen Offenzeit realisiert werden. Die vorteilhaft individuell sowie bedarfsorientiert einstellbare Viskosität des Netz- und Dispergiermittelsystems gestattet darüber hinaus eine gezielte Formulierung von mehr oder weniger viskosen und insofern bedarfsgerecht angepassten sowie optimal verarbeitbaren Pigmentpasten.

Gegenstand der vorliegenden Erfindung gemäß dem geltenden Aspekt ist somit insbesondere auch eine solche wässrige Pigmentpaste für Abtönsysteme, die insbesondere zumindest im Wesentlichen frei ist von Konservierungsmitteln und/oder Bioziden, insbesondere wie zuvor beschrieben,
welche ein Netz- und Dispergiermittelsystem enthält, wobei das Netz- und Dispergiermittelsystem umfasst:
   a) ein Polyaminosaccharid, insbesondere Polyglucosamin,
   b) ein weiteres Netz- oder Dispergiermittel, insbesondere ausgewählt aus der Gruppe von nichtionischen Polymeren, kationischen Polymeren, anionischen Polymeren und deren Mischungen, insbesondere nichtionischen Copolymeren, anionischen Copolymeren, Polyethern und deren Mischungen,
wobei das Polyaminosaccharid a), insbesondere Polyglucosamin, funktionalisiert, insbesondere *N*-funktionalisiert, ist, vorzugsweise *N*-alkyliert und/oder *N*-acyliert, ist, vorzugsweise mit C1- bis C5-Alkyl- und/oder Acylresten, insbesondere C1- bis C3-Alkyl- und/oder Acylresten *N*-alkyliert und/oder *N*-acyliert ist, und/oder
wobei das Polyaminosaccharid a), insbesondere Polyglucosamin, modifiziert, insbesondere *N*-modifiziert, vorzugsweise *N*-protoniert und/oder *N*-komplexiert, ist, und
wobei das Netz- und Dispergiermittelsystem das Polyaminosaccharid, insbesondere Polyglucosamin, in Mengen von 0,01 bis 10 Gew.-%, insbesondere 0,05 bis 8 Gew.-%, vorzugsweise 0,08 bis 6 Gew.-%, bevorzugt 0,1 bis 5 Gew.-%, bezogen auf das Netz- und Dispergiermittelsystem, enthält, und/oder
wobei die Pigmentpaste das Polyaminosaccharid, insbesondere Polyglucosamin, in Mengen von 0,0005 bis 5 Gew.-%, insbesondere 0,00025 bis 3 Gew.-%, vorzugsweise 0,00075 bis 2 Gew.-%, bevorzugt 0,001 bis 1,5 Gew.-%, bezogen auf die Zusammensetzung, enthält, und
wobei das Netz- und Dispergiermittelsystem das weitere Netz- und Dispergiermittel b) in Mengen von 70 bis 99,9 Gew.-%, insbesondere 75 bis 99,5 Gew.-%, vorzugsweise 80 bis 99 Gew.-%, bevorzugt 85 bis 98,5 Gew.-%, bezogen auf das Netz- und Dispergiermittelsystem, enthält, und/oder
wobei die Pigmentpaste das weitere Netz- und Dispergiermittel b) in Mengen von 1 bis 50 Gew.-%, insbesondere 3 bis 35 Gew.-%, vorzugsweise 4 bis 30 Gew.-%, bevorzugt 5 bis 25 Gew.-%, enthält.

Außerdem auch Gegenstand der vorliegenden Erfindung gemäß dem geltenden Aspekt ist insbesondere eine solche wässrige Pigmentpaste für Abtönsysteme, die insbesondere zumindest im Wesentlichen frei ist von Konservierungsmitteln und/oder Bioziden, insbesondere wie zuvor beschrieben,
welche ein Netz- und Dispergiermittelsystem enthält, wobei das Netz- und Dispergiermittelsystem umfasst:
   a) ein Polyaminosaccharid, insbesondere Polyglucosamin,
   b) ein weiteres Netz- oder Dispergiermittel, insbesondere ausgewählt aus der Gruppe von nichtionischen Polymeren, kationischen Polymeren, anionischen Polymeren und deren Mischungen, insbesondere nichtionischen Copolymeren, anionischen Copolymeren, Polyethern und deren Mischungen
wobei das Polyaminosaccharid a), insbesondere Polyglucosamin, funktionalisiert, insbesondere *N*-funktionalisiert, ist, vorzugsweise *N*-alkyliert und/oder *N*-acyliert, ist, vorzugsweise mit C1- bis C5-Alkyl- und/oder Acylresten, insbesondere C1- bis C3-Alkyl- und/oder Acylresten *N*-alkyliert und/oder *N*-acyliert ist, und/oder wobei das Polyaminosaccharid a), insbesondere Polyglucosamin, modifiziert, insbesondere *N*-modifiziert, vorzugsweise *N*-protoniert und/oder *N*-komplexiert, ist, und
wobei das Polyaminosaccharid a), insbesondere Polyglucosamin, und das weitere Netz- und Dispergiermittel b) in dem Netz- und Dispergiermittelsystem in einem Mengenverhältnis a) : b) in einem Bereich von 1 : 1 bis 1 : 100, insbesondere 1 : 5 bis 1 : 50, vorzugsweise 1 : 10 bis 1 : 45, bevorzugt 1 : 12,5 bis 1 : 40, bezogen auf das Netz- und Dispergiermittelsystem, vorliegen.

Darüber hinaus auch Gegenstand der vorliegenden Erfindung gemäß dem geltenden Aspekt ist insbesondere eine solche wässrige Pigmentpaste für Abtönsysteme, die insbesondere zumindest im Wesentlichen frei ist von Konservierungsmitteln und/oder Bioziden, insbesondere wie zuvor beschrieben,
welche ein Netz- und Dispergiermittelsystem enthält, wobei das Netz- und Dispergiermittelsystem umfasst:
   a) ein Polyaminosaccharid, insbesondere Polyglucosamin,
   b) ein weiteres Netz- oder Dispergiermittel, insbesondere ausgewählt aus der Gruppe von nichtionischen Polymeren, kationischen Polymeren, anionischen Polymeren und deren Mischungen, insbesondere nichtionischen Copolymeren, anionischen Copolymeren, Polyethern und deren Mischungen,
wobei das Polyaminosaccharid a), insbesondere Polyglucosamin, funktionalisiert, insbesondere *N*-funktionalisiert, ist, vorzugsweise *N*-alkyliert und/oder *N*-acyliert, ist, vorzugsweise mit C1- bis C5-Alkyl- und/oder Acylresten, insbesondere C1- bis C3-Alkyl- und/oder Acylresten *N*-alkyliert und/oder *N*-acyliert ist, und/oder
wobei das Polyaminosaccharid a), insbesondere Polyglucosamin, modifiziert, insbesondere *N*-modifiziert, vorzugsweise *N*-protoniert und/oder N-komplexiert, ist, und
wobei das Netz- und Dispergiermittelsystem das Polyaminosaccharid, insbesondere Polyglucosamin, in Mengen von 0,01 bis 10 Gew.-%, insbesondere 0,05 bis 8 Gew.-%, vorzugsweise 0,08 bis 6 Gew.-%, bevorzugt 0,1 bis 5 Gew.-%, bezogen auf das Netz- und Dispergiermittelsystem, enthält, und/oder
wobei die Pigmentpaste das Polyaminosaccharid, insbesondere Polyglucosamin, in Mengen von 0,0005 bis 5 Gew.-%, insbesondere 0,00025 bis 3 Gew.-%, vorzugsweise 0,00075 bis 2 Gew.-%, bevorzugt 0,001 bis 1,5 Gew.-%, bezogen auf die Zusammensetzung, enthält, und
wobei das Netz- und Dispergiermittelsystem das weitere Netz- und Dispergiermittel b) in Mengen von 70 bis 99,9 Gew.-%, insbesondere 75 bis 99,5 Gew.-%, vorzugsweise 80 bis 99 Gew.-%, bevorzugt 85 bis 98,5 Gew.-%, bezogen auf das Netz- und Dispergiermittelsystem, enthält, und/oder
wobei die Pigmentpaste das weitere Netz- und Dispergiermittel b) in Mengen von 1 bis 50 Gew.-%, insbesondere 3 bis 35 Gew.-%, vorzugsweise 4 bis 30 Gew.-%, bevorzugt 5 bis 25 Gew.-%, bezogen auf die Zusammensetzung, enthält, und
wobei das Polyaminosaccharid a), insbesondere Polyglucosamin, und das weitere Netz- und Dispergiermittel b) in dem Netz- und Dispergiermittelsystem in einem Mengenverhältnis a) : b) in einem Bereich von 1 : 1 bis 1 : 100, insbesondere 1 : 5 bis 1 : 50, vorzugsweise 1 : 10 bis 1 : 45, bevorzugt 1 : 12,5 bis 1 : 40, bezogen auf das Netz- und Dispergiermittelsystem, vorliegen.

Darüber hinaus hat es sich im Hinblick auf die Rheologieeigenschaften der erfindungsgemäßen Pigmentpaste bewährt, wenn das Netz- und Dispergiermittelsystem eine dynamische Viskosität nach Brookfield bei 25 °C im Bereich von 1 bis 200 mPa·s, insbesondere 3 bis 150 mPa·s, vorzugsweise 5 bis 100 mPa·s, aufweist, insbesondere wobei die dynamische Viskosität mit einem Brookfield-Viskosimeter bei 25 °C mit Spindel 18 bei 100 Umdrehungen pro Minute gemessen.

Im Rahmen der Erfindung werden zudem besonders gute Ergebnisse erhalten, wenn die Pigmentpaste das Netz- und Dispergiermittelsystem insgesamt in Mengen von 3 bis 60 Gew.-%, insbesondere 4 bis 50 Gew.-%, vorzugsweise 5 bis 40 Gew.-%, bevorzugt 6 bis 45 Gew.-%, bezogen auf die Zusammensetzung, enthält.

Gegenstand der vorliegenden Erfindung gemäß dem geltenden Aspekt ist somit insbesondere auch eine solche wässrige Pigmentpaste für Abtönsysteme, die insbesondere zumindest im Wesentlichen frei ist von Konservierungsmitteln und/oder Bioziden, insbesondere wie zuvor beschrieben,
welche ein Netz- und Dispergiermittelsystem enthält, wobei das Netz- und Dispergiermittelsystem umfasst:
   a) ein Polyaminosaccharid, insbesondere Polyglucosamin,
   b) ein weiteres Netz- oder Dispergiermittel, insbesondere ausgewählt aus der Gruppe von nichtionischen Polymeren, kationischen Polymeren, anionischen Polymeren und deren Mischungen, insbesondere nichtionischen Copolymeren, anionischen Copolymeren, Polyethern und deren Mischungen,
wobei das Polyaminosaccharid a), insbesondere Polyglucosamin, funktionalisiert, insbesondere N-funktionalisiert, ist, vorzugsweise N-alkyliert und/oder N-acyliert, ist, vorzugsweise mit C1- bis C5-Alkyl- und/oder Acylresten, insbesondere C1- bis C3-Alkyl- und/oder Acylresten *N*-alkyliert und/oder *N*-acyliert ist, und/oder
wobei das Polyaminosaccharid a), insbesondere Polyglucosamin, modifiziert, insbesondere *N*-modifiziert, vorzugsweise *N*-protoniert und/oder *N*-komplexiert, ist,
insbesondere wobei das funktionalisierte und/oder modifizierte Polyaminosaccharid, insbesondere Polyglucosamin, ausgewählt ist aus der Gruppe von Hydroxypropylchitosan, Carboxymethylchitosan, *N,N,N*-Trimethylchitosan, PEGliertem Chitosan, *N*-Succinylchitosan, *N,O*-Carboxymethylchitosan, phosphoryliertem Chitosan, Folsäure-Chitosan-Konjugaten, Formaldehyd-modifiziertem Chitosan, Tricin-Chitosan-Komplexen, Erdalkalimetall-Tricin-Chitosan-Komplex, quervernetzten Chitosan-Hydrogelen und deren Mischungen, und
wobei die Pigmentpaste das Netz- und Dispergiermittelsystem insgesamt in Mengen von 3 bis 60 Gew.-%, insbesondere 4 bis 50 Gew.-%, vorzugsweise 5 bis 40 Gew.-%, bevorzugt 6 bis 45 Gew.-%, bezogen auf die Zusammensetzung, enthält.

Weiterhin kann es im Rahmen der Erfindung vorgesehen sein, dass erfindungsgemäße Pigmentpasten neben dem vorgenannten Netz- und Dispergiermittelsystem mindestens ein Feuchthaltemittel enthalten.

Im Rahmen einer bevorzugten Ausführung der Erfindung ist also vorgesehen, dass die Pigmentpaste aufweist:
A) ein Netz- und Dispergiermittelsystem, wobei das Netz- und Dispergiermittelsystem mindestens zwei, insbesondere zwei, Netz- und Dispergiermittel umfasst, wobei eines der mindestens zwei, insbesondere zwei, Netz- und Dispergiermittel ein Polyaminosaccharid ist,
B) mindestens ein Feuchthaltemittel.

Insbesondere bevorzugt ist, dass die Pigmentpaste aufweist:
A) ein Netz- und Dispergiermittelsystem, wobei das Netz- und Dispergiermittelsystem umfasst:
   a) ein Polyaminosaccharid, insbesondere Polyglucosamin,
   b) ein weiteres Netz- oder Dispergiermittel, insbesondere ausgewählt aus der Gruppe von nichtionischen Polymeren, kationischen Polymeren, anionischen Polymeren und deren Mischungen, insbesondere nichtionischen Copolymeren, anionischen Copolymeren, Polyethern und deren Mischungen,
B) mindestens ein Feuchthaltemittel.

Dabei hat es sich als vorteilhaft erwiesen, wenn das Feuchthaltemittel B) ausgewählt ist aus der Gruppe von Polyethylenglykolen, Ethylenglykol, Triethylenglykol, Propylenglykol, Dipropylenglykol, Tripropylengylkol, Polypropylenglykol, Polyakylenglykol, Pentylenglykol, Glycerin, Glycerinethoxylat, Polyethern, Polyurethanen, Zuckeralkoholen, Polyvinylpyrrolidon, Ethylpyrrolidon, und deren Mischungen, insbesondere aus der Gruppe von Polyethylenglykolen, Tripropylengylkol, Polypropylenglykol, Polyakylenglykol, Glycerin, Glycerinethoxylat, Polyethern, Polyurethanen und deren Mischungen. Besonders bevorzugt ist im Rahmen der Erfindung die Verwendung von Glycerin und/oder Glycerinethoxylat.

Die erfindungsgemäß bevorzugt vorgesehenen Netz- und Dispergiermittel des Netz- und Dispergiermittelsystems steigern in Verbindung mit einem Feuchthaltemittel, insbesondere den vorgenannten bevorzugten Feuchthaltemitteln, nochmals vorteilhaft das Dispergiervermögen des Netz- und Dispergiermittelsystems erfindungsgemäßer Pigmentpasten, so dass stabile Pasten auch mit besonders hohen Pigment- bzw. Füllstoffgehalten realisiert werden können. Insbesondere hat sich gezeigt, dass die erfindungsgemäß bevorzugten Feuchthaltemittel zusätzlich zur befeuchtenden Wirkung auch solche oberflächenaktiven Eigenschaften aufweisen, die zu einer verbesserten Benetzung bzw. Dispergierung und insoweit Stabilisierung der Pigmentpastenbestandteile, wie nachfolgend noch eingehend beschrieben, beiträgt. Darüber hinaus tragen die vorgenannten Bestandteile des Netz- und Dispergiermittelsystems auch zur Verringerung bzw. Verlangsamung von Schimmelpilz- oder Bakterienbefall erfindungsgemäßer Pasten bei, so dass diese, insbesondere aufgrund der vorteilhaften Zusammensetzung des eingesetzten Netz- und Dispergiermittelsystems und ohne ausdrücklich biozid wirkende Inhaltsstoffe zu verwenden, eine hohe Haltbarkeit und Beständigkeit gegen den Befall durch Mikroorganismen aufweisen.

Gleichzeitig tragen die vorgenannten Netz- und Dispergiermittel in Verbindung mit dem Feuchthaltemittel vorteilhaft dazu bei, dass ein Austrocknen erfindungsgemäßer Pigmentpasten nicht bzw. nur sehr langsam eintritt, was ebenfalls vorteilhaft zu einer hohen Haltbarkeit, Offenzeit bzw. langen Verwendbarkeit der Pasten beiträgt.

Es werden gute Ergebnisse erzielt, wenn die Pigmentpaste das Feuchthaltemittel B) in Mengen von 1 bis 40 Gew.-%, insbesondere 2 bis 30 Gew.-%, vorzugsweise 3 bis 27,5 Gew.-%, bevorzugt 3 bis 25 Gew.-%, bezogen auf die Zusammensetzung, enthält.

Gleichermaßen werden die vorgenannten Vorteile in besonderem Maße realisiert, wenn das weitere Netz- und Dispergiermittel b) und das Feuchthaltemittel B) in der Pigmentpaste in einem Mengenverhältnis b) : B) in einem Bereich von 20 : 1 bis 5 : 1, insbesondere 15 : 1 bis 1 : 2, vorzugsweise 10 : 1 bis 1 : 1, bevorzugt 5 : 1 bis 2 : 1, bezogen auf die Zusammensetzung, vorliegen.

Wenn die Pigmentpaste die genannten Inhaltsstoffe in den wiedergegebenen Mengenverhältnissen aufweist, können vorteilhaft besonders haltbare Pigmentpasten bereitgestellt werden, die sich darüber hinaus auch durch eine vergleichsweise hohe Dispersionsstabilität auszeichnen. Diese besondere kombinierte Wirkung wird auf Grund der Verwendung der genannten Inhaltsstoffe in den speziellen Mengenverhältnissen, wie zuvor wiedergegeben, realisiert, so dass insoweit von einer Kombinationswirkung von Polyaminosaccharid und dem weiteren Netz- und Dispergiermittel sowie insbesondere auch dem Feuchthaltemittel auszugehen ist.

Gegenstand der vorliegenden Erfindung gemäß dem geltenden Aspekt ist somit insbesondere auch eine solche wässrige Pigmentpaste für Abtönsysteme, die insbesondere zumindest im Wesentlichen frei ist von Konservierungsmitteln und/oder Bioziden, insbesondere wie zuvor beschrieben,
welche aufweist:
A) ein Netz- und Dispergiermittelsystem, wobei das Netz- und Dispergiermittelsystem umfasst:
   a) ein Polyaminosaccharid, insbesondere Polyglucosamin,
   b) ein weiteres Netz- oder Dispergiermittel, insbesondere ausgewählt aus der Gruppe von nichtionischen Polymeren, kationischen Polymeren, anionischen Polymeren und deren Mischungen, insbesondere nichtionischen Copolymeren, anionischen Copolymeren, Polyethern und deren Mischungen,
B) mindestens ein Feuchthaltemittel, insbesondere ausgewählt aus der Gruppe von Polyethylenglykolen, Ethylenglykol, Triethylenglykol, Propylenglykol, Dipropylenglykol, Tripropylengylkol, Polypropylenglykol, Polyakylenglykol, Pentylenglykol, Glycerin, Glycerinethoxylat, Polyethern, Polyurethanen, Zuckeralkoholen, Polyvinylpyrrolidon, Ethylpyrrolidon, und deren Mischungen,

wobei das Polyaminosaccharid a), insbesondere Polyglucosamin, funktionalisiert, insbesondere N-funktionalisiert, ist, vorzugsweise N-alkyliert und/oder N-acyliert, ist, vorzugsweise mit C1- bis C5-Alkyl- und/oder Acylresten, insbesondere C1- bis C3-Alkyl- und/oder Acylresten N-alkyliert und/oder N-acyliert ist, und/oder
wobei das Polyaminosaccharid a), insbesondere Polyglucosamin, modifiziert, insbesondere N-modifiziert, vorzugsweise N-protoniert und/oder N-komplexiert, ist, insbesondere wobei das funktionalisierte und/oder modifizierte Polyaminosaccharid, insbesondere Polyglucosamin, ausgewählt ist aus der Gruppe von Hydroxypropylchitosan, Carboxymethylchitosan, *N,N,N*-Trimethylchitosan, PEGliertem Chitosan, *N*-Succinylchitosan, *N,O*-Carboxymethylchitosan, phosphoryliertem Chitosan, Folsäure-Chitosan-Konjugaten, Formaldehyd-modifiziertem Chitosan, Tricin-Chitosan-Komplexen, Erdalkalimetall-Tricin-Chitosan-Komplex, quervernetzten Chitosan-Hydrogelen und deren Mischungen, und
wobei die Pigmentpaste das Netz- und Dispergiermittelsystem insgesamt in Mengen von 3 bis 60 Gew.-%, insbesondere 4 bis 50 Gew.-%, vorzugsweise 5 bis 40 Gew.-%, bevorzugt 6 bis 45 Gew.-%, bezogen auf die Zusammensetzung, enthält, und
wobei die Pigmentpaste das Feuchthaltemittel B) in Mengen von 1 bis 40 Gew.-%, insbesondere 2 bis 30 Gew.-%, vorzugsweise 3 bis 27,5 Gew.-%, bevorzugt 3 bis 25 Gew.-%, bezogen auf die Zusammensetzung, enthält.

Ebenfalls Gegenstand der vorliegenden Erfindung gemäß dem geltenden Aspekt ist zudem insbesondere eine solche wässrige Pigmentpaste für Abtönsysteme, die insbesondere zumindest im Wesentlichen frei ist von Konservierungsmitteln und/oder Bioziden, insbesondere wie zuvor beschrieben,
welche aufweist:
A) ein Netz- und Dispergiermittelsystem, wobei das Netz- und Dispergiermittelsystem umfasst:
   a) ein Polyaminosaccharid, insbesondere Polyglucosamin,
   b) ein weiteres Netz- oder Dispergiermittel, insbesondere ausgewählt aus der Gruppe von nichtionischen Polymeren, kationischen Polymeren, anionischen Polymeren und deren Mischungen, insbesondere nichtionischen Copolymeren, anionischen Copolymeren, Polyethern und deren Mischungen,
B) mindestens ein Feuchthaltemittel, insbesondere ausgewählt aus der Gruppe von Polyethylenglykolen, Ethylenglykol, Triethylenglykol, Propylenglykol, Dipropylenglykol, Tripropylengylkol, Polypropylenglykol, Polyakylenglykol, Pentylenglykol, Glycerin, Glycerinethoxylat, Polyethern, Polyurethanen, Zuckeralkoholen, Polyvinylpyrrolidon, Ethylpyrrolidon, und deren Mischungen,

wobei das Polyaminosaccharid a), insbesondere Polyglucosamin, funktionalisiert, insbesondere *N*-funktionalisiert, ist, vorzugsweise *N*-alkyliert und/oder *N*-acyliert, ist, vorzugsweise mit C1- bis C5-Alkyl- und/oder Acylresten, insbesondere C1- bis C3-Alkyl- und/oder Acylresten *N*-alkyliert und/oder *N*-acyliert ist, und/oder wobei das Polyaminosaccharid a), insbesondere Polyglucosamin, modifiziert, insbesondere *N*-modifiziert, vorzugsweise *N*-protoniert und/oder *N*-komplexiert, ist,
insbesondere wobei das funktionalisierte und/oder modifizierte Polyaminosaccharid, insbesondere Polyglucosamin, ausgewählt ist aus der Gruppe von Hydroxypropylchitosan, Carboxymethylchitosan, *N,N,N*-Trimethylchitosan, PEGliertem Chitosan, *N*-Succinylchitosan, *N,O*-Carboxymethylchitosan, phosphoryliertem Chitosan, Folsäure-Chitosan-Konjugaten, Formaldehyd-modifiziertem Chitosan, Tricin-Chitosan-Komplexen, Erdalkalimetall-Tricin-Chitosan-Komplex, quervernetzten Chitosan-Hydrogelen und deren Mischungen, und
wobei das Netz- und Dispergiermittelsystem das Polyaminosaccharid, insbesondere Polyglucosamin, in Mengen von 0,01 bis 10 Gew.-%, insbesondere 0,05 bis 8 Gew.-%, vorzugsweise 0,08 bis 6 Gew.-%, bevorzugt 0,1 bis 5 Gew.-%, bezogen auf das Netz- und Dispergiermittelsystem, enthält, und/oder
wobei die Pigmentpaste das Polyaminosaccharid, insbesondere Polyglucosamin, in Mengen von 0,0005 bis 5 Gew.-%, insbesondere 0,00025 bis 3 Gew.-%, vorzugsweise 0,00075 bis 2 Gew.-%, bevorzugt 0,001 bis 1,5 Gew.-%, bezogen auf die Zusammensetzung, enthält, und
wobei das Netz- und Dispergiermittelsystem das weitere Netz- und Dispergiermittel b) in Mengen von 70 bis 99,9 Gew.-%, insbesondere 75 bis 99,5 Gew.-%, vorzugsweise 80 bis 99 Gew.-%, bevorzugt 85 bis 98,5 Gew.-%, bezogen auf das Netz- und Dispergiermittelsystem, enthält, und/oder
wobei die Pigmentpaste das weitere Netz- und Dispergiermittel b) in Mengen von 1 bis 50 Gew.-%, insbesondere 3 bis 35 Gew.-%, vorzugsweise 4 bis 30 Gew.-%, bevorzugt 5 bis 25 Gew.-%, bezogen auf die Zusammensetzung, enthält, und
wobei die Pigmentpaste das Feuchthaltemittel B) in Mengen von 1 bis 40 Gew.-%, insbesondere 2 bis 30 Gew.-%, vorzugsweise 3 bis 27,5 Gew.-%, bevorzugt 3 bis 25 Gew.-%, enthält.

Darüber hinaus auch Gegenstand der vorliegenden Erfindung gemäß dem geltenden Aspekt ist insbesondere eine solche wässrige Pigmentpaste für Abtönsysteme, die insbesondere zumindest im Wesentlichen frei ist von Konservierungsmitteln und/oder Bioziden, insbesondere wie zuvor beschrieben,
welche aufweist:
A) ein Netz- und Dispergiermittelsystem, wobei das Netz- und Dispergiermittelsystem umfasst:
   a) ein Polyaminosaccharid, insbesondere Polyglucosamin,
   b) ein weiteres Netz- oder Dispergiermittel, insbesondere ausgewählt aus der Gruppe von nichtionischen Polymeren, kationischen Polymeren, anionischen Polymeren und deren Mischungen, insbesondere nichtionischen Copolymeren, anionischen Copolymeren, Polyethern und deren Mischungen,
B) mindestens ein Feuchthaltemittel, insbesondere ausgewählt ist aus der Gruppe von Polyethylenglykolen, Ethylenglykol, Triethylenglykol, Propylenglykol, Dipropylenglykol, Tripropylengylkol, Polypropylenglykol, Polyakylenglykol, Pentylenglykol, Glycerin, Glycerinethoxylat, Polyethern, Polyurethanen, Zuckeralkoholen, Polyvinylpyrrolidon, Ethylpyrrolidon, und deren Mischungen,

wobei das Polyaminosaccharid a), insbesondere Polyglucosamin, funktionalisiert, insbesondere N-funktionalisiert, ist, vorzugsweise N-alkyliert und/oder N-acyliert, ist, vorzugsweise mit C1- bis C5-Alkyl- und/oder Acylresten, insbesondere C1- bis C3-Alkyl- und/oder Acylresten N-alkyliert und/oder N-acyliert ist, und/oder wobei das Polyaminosaccharid a), insbesondere Polyglucosamin, modifiziert, insbesondere N-modifiziert, vorzugsweise N-protoniert und/oder N-komplexiert, ist,
insbesondere wobei das funktionalisierte und/oder modifizierte Polyaminosaccharid, insbesondere Polyglucosamin, ausgewählt ist aus der Gruppe von Hydroxypropylchitosan, Carboxymethylchitosan, *N,N,N*-Trimethylchitosan, PEGliertem Chitosan, *N*-Succinylchitosan, *N,O*-Carboxymethylchitosan, phosphoryliertem Chitosan, Folsäure-Chitosan-Konjugaten, Formaldehyd-modifiziertem Chitosan, Tricin-Chitosan-Komplexen, Erdalkalimetall-Tricin-Chitosan-Komplex, quervernetzten Chitosan-Hydrogelen und deren Mischungen, und und
wobei das Polyaminosaccharid a), insbesondere Polyglucosamin, und das weitere Netz- und Dispergiermittel b) in dem Netz- und Dispergiermittelsystem in einem Mengenverhältnis a) : b) in einem Bereich von 1 : 1 bis 1 : 100, insbesondere 1 : 5 bis 1 : 50, vorzugsweise 1 : 10 bis 1 : 45, bevorzugt 1 : 12,5 bis 1 : 40, bezogen auf das Netz- und Dispergiermittelsystem, vorliegen, und
wobei das weitere Netz- und Dispergiermittel b) und das Feuchthaltemittel B) in der Pigmentpaste in einem Mengenverhältnis b) : B) in einem Bereich von 20 : 1 bis 5 : 1, insbesondere 15 : 1 bis 1 : 2, vorzugsweise 10 : 1 bis 1 : 1, bevorzugt 5 : 1 bis 2 : 1, bezogen auf die Zusammensetzung, vorliegen.

Gleichermaßen auch Gegenstand der vorliegenden Erfindung gemäß dem geltenden Aspekt ist insbesondere eine solche wässrige Pigmentpaste für Abtönsysteme, die insbesondere zumindest im Wesentlichen frei ist von Konservierungsmitteln und/oder Bioziden, insbesondere wie zuvor beschrieben,
welche aufweist:
A) ein Netz- und Dispergiermittelsystem, wobei das Netz- und Dispergiermittelsystem umfasst:
   a) ein Polyaminosaccharid, insbesondere Polyglucosamin,
   b) ein weiteres Netz- oder Dispergiermittel, insbesondere ausgewählt aus der Gruppe von nichtionischen Polymeren, kationischen Polymeren, anionischen Polymeren und deren Mischungen, insbesondere nichtionischen Copolymeren, anionischen Copolymeren, Polyethern und deren Mischungen,
B) mindestens ein Feuchthaltemittel, insbesondere ausgewählt ist aus der Gruppe von Polyethylenglykolen, Ethylenglykol, Triethylenglykol, Propylenglykol, Dipropylenglykol, Tripropylengylkol, Polypropylenglykol, Polyakylenglykol, Pentylenglykol, Glycerin, Glycerinethoxylat, Polyethern, Polyurethanen, Zuckeralkoholen, Polyvinylpyrrolidon, Ethylpyrrolidon, und deren Mischungen,

wobei das Polyaminosaccharid a), insbesondere Polyglucosamin, funktionalisiert, insbesondere N-funktionalisiert, ist, vorzugsweise N-alkyliert und/oder N-acyliert, ist, vorzugsweise mit C1- bis C5-Alkyl- und/oder Acylresten, insbesondere C1- bis C3-Alkyl- und/oder Acylresten *N*-alkyliert und/oder *N*-acyliert ist, und/oder
wobei das Polyaminosaccharid a), insbesondere Polyglucosamin, modifiziert, insbesondere *N*-modifiziert, vorzugsweise *N*-protoniert und/oder *N*-komplexiert, ist,
insbesondere wobei das funktionalisierte und/oder modifizierte Polyaminosaccharid, insbesondere Polyglucosamin, ausgewählt ist aus der Gruppe von Hydroxypropylchitosan, Carboxymethylchitosan, *N,N,N*-Trimethylchitosan, PEGliertem Chitosan, *N*-Succinylchitosan, *N,O*-Carboxymethylchitosan, phosphoryliertem Chitosan, Folsäure-Chitosan-Konjugaten, Formaldehyd-modifiziertem Chitosan, Tricin-Chitosan-Komplexen, Erdalkalimetall-Tricin-Chitosan-Komplex, quervernetzten Chitosan-Hydrogelen und deren Mischungen, und
wobei das Netz- und Dispergiermittelsystem das Polyaminosaccharid, insbesondere Polyglucosamin, in Mengen von 0,01 bis 10 Gew.-%, insbesondere 0,05 bis 8 Gew.-%, vorzugsweise 0,08 bis 6 Gew.-%, bevorzugt 0,1 bis 5 Gew.-%, bezogen auf das Netz- und Dispergiermittelsystem, enthält, und/oder
wobei die Pigmentpaste das Polyaminosaccharid, insbesondere Polyglucosamin, in Mengen von 0,0005 bis 5 Gew.-%, insbesondere 0,00025 bis 3 Gew.-%, vorzugsweise 0,00075 bis 2 Gew.-%, bevorzugt 0,001 bis 1,5 Gew.-%, bezogen auf die Zusammensetzung, enthält, und
wobei das Netz- und Dispergiermittelsystem das weitere Netz- und Dispergiermittel b) in Mengen von 70 bis 99,9 Gew.-%, insbesondere 75 bis 99,5 Gew.-%, vorzugsweise 80 bis 99 Gew.-%, bevorzugt 85 bis 98,5 Gew.-%, bezogen auf das Netz- und Dispergiermittelsystem, enthält, und/oder
wobei die Pigmentpaste das weitere Netz- und Dispergiermittel b) in Mengen von 1 bis 50 Gew.-%, insbesondere 3 bis 35 Gew.-%, vorzugsweise 4 bis 30 Gew.-%, bevorzugt 5 bis 25 Gew.-%, bezogen auf die Zusammensetzung, enthält, und
wobei die Pigmentpaste das Feuchthaltemittel B) in Mengen von 1 bis 40 Gew.-%, insbesondere 2 bis 30 Gew.-%, vorzugsweise 3 bis 27,5 Gew.-%, bevorzugt 3 bis 25 Gew.-%Gew.-%, bevorzugt 10 bis 30 Gew.-%, bezogen auf die Zusammensetzung, enthält, und
wobei das Polyaminosaccharid a), insbesondere Polyglucosamin, und das weitere Netz- und Dispergiermittel b) in dem Netz- und Dispergiermittelsystem in einem Mengenverhältnis a) : b) in einem Bereich von 1 : 1 bis 1 : 100, insbesondere 1 : 5 bis 1 : 50, vorzugsweise 1 : 10 bis 1 : 45, bevorzugt 1 : 12,5 bis 1 : 40, bezogen auf das Netz- und Dispergiermittelsystem, vorliegen, und
wobei das weitere Netz- und Dispergiermittel b) und das Feuchthaltemittel B) in der Pigmentpaste in einem Mengenverhältnis b) : B) in einem Bereich von 20 : 1 bis 5 : 1, insbesondere 15 : 1 bis 1 : 2, vorzugsweise 10 : 1 bis 1 : 1, bevorzugt 5 : 1 bis 2 : 1, bezogen auf die Zusammensetzung, vorliegen.

Gegenstand der vorliegenden Erfindung gemäß dem geltenden Aspekt ist des Weiteren insbesondere auch eine solche wässrige Pigmentpaste für Abtönsysteme, die insbesondere zumindest im Wesentlichen frei ist von Konservierungsmitteln und/oder Bioziden, insbesondere wie zuvor beschrieben,
welche aufweist:
A) ein Netz- und Dispergiermittelsystem, wobei das Netz- und Dispergiermittelsystem umfasst:
   a) ein Polyaminosaccharid, insbesondere Polyglucosamin,
   b) ein weiteres Netz- oder Dispergiermittel, insbesondere ausgewählt aus der Gruppe von nichtionischen Polymeren, kationischen Polymeren, anionischen Polymeren und deren Mischungen, insbesondere nichtionischen Copolymeren, anionischen Copolymeren, Polyethern und deren Mischungen,
B) mindestens ein Feuchthaltemittel, insbesondere ausgewählt ist aus der Gruppe von Polyethylenglykolen, Ethylenglykol, Triethylenglykol, Propylenglykol, Dipropylenglykol, Tripropylengylkol, Polypropylenglykol, Polyakylenglykol, Pentylenglykol, Glycerin, Glycerinethoxylat, Polyethern, Polyurethanen, Zuckeralkoholen, Polyvinylpyrrolidon, Ethylpyrrolidon, und deren Mischungen,

wobei das Polyaminosaccharid a), insbesondere Polyglucosamin, funktionalisiert, insbesondere N-funktionalisiert, ist, vorzugsweise N-alkyliert und/oder N-acyliert, ist, vorzugsweise mit C1- bis C5-Alkyl- und/oder Acylresten, insbesondere C1- bis C3-Alkyl- und/oder Acylresten N-alkyliert und/oder N-acyliert ist, und/oder
wobei das Polyaminosaccharid a), insbesondere Polyglucosamin, modifiziert, insbesondere N-modifiziert, vorzugsweise N-protoniert und/oder N-komplexiert, ist,
insbesondere wobei das funktionalisierte und/oder modifizierte Polyaminosaccharid, insbesondere Polyglucosamin, ausgewählt ist aus der Gruppe von Hydroxypropylchitosan, Carboxymethylchitosan, N,N,N-Trimethylchitosan, PEGliertem Chitosan, N-Succinylchitosan, N,O-Carboxymethylchitosan, phosphoryliertem Chitosan, Folsäure-Chitosan-Konjugaten, Formaldehyd-modifiziertem Chitosan, Tricin-Chitosan-Komplexen, Erdalkalimetall-Tricin-Chitosan-Komplex, quervernetzten Chitosan-Hydrogelen und deren Mischungen, und
wobei die Pigmentpaste das Netz- und Dispergiermittelsystem insgesamt in Mengen von 3 bis 60 Gew.-%, insbesondere 4 bis 50 Gew.-%, vorzugsweise 5 bis 40 Gew.-%, bevorzugt 6 bis 45 Gew.-%, bezogen auf die Zusammensetzung, enthält, und
wobei das Netz- und Dispergiermittelsystem das Polyaminosaccharid, insbesondere Polyglucosamin, in Mengen von 0,01 bis 10 Gew.-%, insbesondere 0,05 bis 8 Gew.-%, vorzugsweise 0,08 bis 6 Gew.-%, bevorzugt 0,1 bis 5 Gew.-%, bezogen auf das Netz- und Dispergiermittelsystem, enthält, und/oder
wobei die Pigmentpaste das Polyaminosaccharid, insbesondere Polyglucosamin, in Mengen von 0,0005 bis 5 Gew.-%, insbesondere 0,00025 bis 3 Gew.-%, vorzugsweise 0,00075 bis 2 Gew.-%, bevorzugt 0,001 bis 1,5 Gew.-%, bezogen auf die Zusammensetzung, bezogen auf die Zusammensetzung, enthält, und
wobei das Netz- und Dispergiermittelsystem das weitere Netz- und Dispergiermittel b) in Mengen von 70 bis 99,9 Gew.-%, insbesondere 75 bis 99,5 Gew.-%, vorzugsweise 80 bis 99 Gew.-%, bevorzugt 85 bis 98,5 Gew.-%, bezogen auf das Netz- und Dispergiermittelsystem, enthält, und/oder
wobei die Pigmentpaste das weitere Netz- und Dispergiermittel b) in Mengen von 1 bis 50 Gew.-%, insbesondere 3 bis 35 Gew.-%, vorzugsweise 4 bis 30 Gew.-%, bevorzugt 5 bis 25 Gew.-%, bezogen auf die Zusammensetzung, enthält, und
wobei die Pigmentpaste das Feuchthaltemittel B) in Mengen von 1 bis 40 Gew.-%, insbesondere 2 bis 30 Gew.-%, vorzugsweise 3 bis 27,5 Gew.-%, bevorzugt 3 bis 25 Gew.-%, bezogen auf die Zusammensetzung, enthält, und
wobei das Polyaminosaccharid a), insbesondere Polyglucosamin, und das weitere Netz- und Dispergiermittel b) in dem Netz- und Dispergiermittelsystem in einem Mengenverhältnis a) : b) in einem Bereich von 1 : 1 bis 1 : 100, insbesondere 1 : 5 bis 1 : 50, vorzugsweise 1 : 10 bis 1 : 45, bevorzugt 1 : 12,5 bis 1 : 40, bezogen auf das Netz- und Dispergiermittelsystem, vorliegen, und
wobei das weitere Netz- und Dispergiermittel b) und das Feuchthaltemittel B) in der Pigmentpaste in einem Mengenverhältnis b) : B) in einem Bereich von 20 : 1 bis 5 : 1, insbesondere 15 : 1 bis 1 : 2, vorzugsweise 10 : 1 bis 1 : 1, bevorzugt 5 : 1 bis 2 : 1, bezogen auf die Zusammensetzung, vorliegen.

Was weitere Bestandteile der erfindungsgemäßen Pigmentpaste anbelangt, so verhält es sich diesbezüglich vorzugsweise wie folgt:
Es hat sich als zweckmäßig erweisen, wenn die Pigmentpaste mindestens ein Pigment aufweist, wobei das Pigment ausgewählt ist aus der Gruppe von organischen Pigmenten, anorganischen Pigmenten und deren Mischungen.

In diesem Sinne ist im Rahmen der Erfindung vorzugsweise vorgesehen, dass die Pigmentpaste aufweist:
A) ein Netz- und Dispergiermittelsystem, wobei das Netz- und Dispergiermittelsystem mindestens zwei, insbesondere zwei, Netz- und Dispergiermittel umfasst, wobei eines der mindestens zwei, insbesondere zwei, Netz- und Dispergiermittel ein Polyaminosaccharid ist,
B) mindestens ein Feuchthaltemittel,
C) mindestens ein Pigment, wobei das Pigment ausgewählt ist aus der Gruppe von organischen Pigmenten, anorganischen Pigmenten und deren Mischungen.

Insbesondere bevorzugt ist, dass die Pigmentpaste aufweist:
A) ein Netz- und Dispergiermittelsystem, wobei das Netz- und Dispergiermittelsystem umfasst:
   a) ein Polyaminosaccharid, insbesondere Polyglucosamin,
   b) ein weiteres Netz- oder Dispergiermittel, insbesondere ausgewählt aus der Gruppe von nichtionischen Polymeren, kationischen Polymeren, anionischen Polymeren und deren Mischungen, insbesondere nichtionischen Copolymeren, anionischen Copolymeren, Polyethern und deren Mischungen,
B) mindestens ein Feuchthaltemittel,
C) mindestens ein Pigment, wobei das Pigment ausgewählt ist aus der Gruppe von organischen Pigmenten, anorganischen Pigmenten und deren Mischungen.

Im Rahmen der Erfindung kann eine Vielzahl von Pigmenten problemlos verwendet werden. Bewährt hat es sich dabei, wenn die Pigmentpaste organische Pigmente umfasst. Vorteilhaft sind diese ausgewählt aus Nitroso-, Nitro-, Azo-, Xanthen-, Chinolin-, Anthrachinon-, Phthalocyanin-, Metallkomplex-, Isoindolinon-, Isoindolin-, Chinacridon-, Perinon-, Perylen-, Diketopyrrolopyrrol-, Thioindigo-, Dioxazin-, Triphenylmethan- und Chinophthalonverbindungen, Carminen, Carbon Black, Anilinschwarz, Azogelb, Chinacridon, Phthalocyaninblau. Beispiele hierfür sind: PY 74, PY 65, PY 110, PR 112, PR 122, PR 254, PR 168, PO 5, PG 7, PB 15:1, PB 15:2, PB 15:3, PB 15:4, PBk 7 und deren Mischungen.

Gleichfalls als vorteilhaft erwiesen hat es sich, wenn die Pigmentpaste anorganische Pigmente umfasst. Diese sind vorzugsweise ausgewählt aus Metalloxiden und/oder in Wasser schwerlöslichen oder zumindest im Wesentlichen unlöslichen Metallverbindungen, insbesondere Oxide von Titan, beispielsweise Titandioxid (CI 77891), Zink, Eisen, beispielsweise rotes und schwarzes Eisenoxid (CI 77491 (rot), 77499 (schwarz)) oder Eisenoxidhydrat (CI 77492, gelb), Zirkonium, Silizium, Mangan, Aluminium, Cer, Chrom sowie Mischoxide der genannten Elemente und deren Mischungen, Bariumsulfat-, Zinksulfid-, Manganviolett-, Ultramarinblau- und Berliner Blau-Pigmente.

Darüber hinaus bevorzugt ist es, wenn das Pigment ausgewählt ist aus der Gruppe von Titandioxid, Eisenoxidgelb, Eisenoxidrot, Bismutvanadat, Rußschwarz, Toluidinrot, Phthalocyanin, Phthalocyaninblau, Monoazogelb, Isoindolinongelb, Chinacridon, Benzimidazolon, Diketopyrrolopyrrolrot und deren Mischungen

Zudem werden gute Ergebnisse erhalten, wenn die Pigmente oberflächenmodifiziert sind, insbesondere wobei die Oberflächen durch die Modifizierung hydrophile, amphiphile oder hydrophobe Verbindungen und/oder Gruppen aufweisen. Auf diese Weise kann eine noch stabilere und leichtere Einarbeitung der Pigmente in die erfindungsgemäße Paste erreicht werden.

Im Rahmen der Erfindung hat es sich weiterhin bewährt, wenn die Pigmentpaste das Pigment in Mengen von 15 bis 85 Gew.-%, insbesondere 20 bis 80 Gew.-%, vorzugsweise 25 bis 75 Gew.-%, bevorzugt 30 bis 70 Gew.-%, bezogen auf die Zusammensetzung, enthält. Es ist also insbesondere auch möglich, sehr hochgefüllt Pasten bereitzustellen, wobei es als vorteilhaft zu werten ist, dass mit der Erfindung vergleichsweise hochkonzentrierte und somit effizient einsetzbare Pigmentpasten zur Verfügung gestellt werden können.

Gegenstand der vorliegenden Erfindung gemäß dem geltenden Aspekt ist somit insbesondere auch eine solche wässrige Pigmentpaste für Abtönsysteme, die insbesondere zumindest im Wesentlichen frei ist von Konservierungsmitteln und/oder Bioziden, insbesondere wie zuvor beschrieben,
welche aufweist:
A) ein Netz- und Dispergiermittelsystem, wobei das Netz- und Dispergiermittelsystem umfasst:
   a) ein Polyaminosaccharid, insbesondere Polyglucosamin,
   b) ein weiteres Netz- oder Dispergiermittel, insbesondere ausgewählt aus der Gruppe von nichtionischen Polymeren, kationischen Polymeren, anionischen Polymeren und deren Mischungen, insbesondere nichtionischen Copolymeren, anionischen Copolymeren, Polyethern und deren Mischungen,
B) mindestens ein Feuchthaltemittel,
C) mindestens ein Pigment, wobei das Pigment ausgewählt ist aus der Gruppe von organischen Pigmenten, anorganischen Pigmenten und deren Mischungen,

wobei das Polyaminosaccharid a), insbesondere Polyglucosamin, funktionalisiert, insbesondere *N*-funktionalisiert, ist, vorzugsweise *N*-alkyliert und/oder *N*-acyliert, ist, vorzugsweise mit C1- bis C5-Alkyl- und/oder Acylresten, insbesondere C1- bis C3-Alkyl- und/oder Acylresten *N*-alkyliert und/oder *N*-acyliert ist, und/oder
wobei das Polyaminosaccharid a), insbesondere Polyglucosamin, modifiziert, insbesondere *N*-modifiziert, vorzugsweise *N*-protoniert und/oder N-komplexiert, ist, und
wobei die Pigmentpaste das Netz- und Dispergiermittelsystem A) insgesamt in Mengen von 3 bis 60 Gew.-%, insbesondere 4 bis 50 Gew.-%, vorzugsweise 5 bis 40 Gew.-%, bevorzugt 6 bis 45 Gew.-%, bezogen auf die Zusammensetzung, enthält, und
wobei die Pigmentpaste das Feuchthaltemittel B) in Mengen von 1 bis 40 Gew.-%, insbesondere 2 bis 30 Gew.-%, vorzugsweise 3 bis 27,5 Gew.-%, bevorzugt 3 bis 25 Gew.-%, bezogen auf die Zusammensetzung, enthält, und
wobei die Pigmentpaste das Pigment C) in Mengen von 15 bis 85 Gew.-%, insbesondere 20 bis 80 Gew.-%, vorzugsweise 25 bis 75 Gew.-%, bevorzugt 30 bis 70 Gew.-%, bezogen auf die Zusammensetzung, enthält.

Weiter im Hinblick auf die Zusammensetzung der erfindungsgemäßen Pigmentpaste hat es sich als zweckmäßig erwiesen, wenn die Pigmentpaste mindestens ein pH-Stellmittel aufweist.

Hierbei werden gute Ergebnisse erhalten, wenn das pH-Stellmittel ausgewählt ist aus anorganischen und organischen Säuren und Basen, insbesondere anorganischen und organischen Basen, vorzugsweise anorganischen Basen.

In diesem Sinne ist erfindungsgemäß vorzugsweise vorgesehen, dass die Pigmentpaste aufweist:
A) ein Netz- und Dispergiermittelsystem, wobei das Netz- und Dispergiermittelsystem mindestens zwei, insbesondere zwei, Netz- und Dispergiermittel umfasst, wobei eines der mindestens zwei, insbesondere zwei, Netz- und Dispergiermittel ein Polyaminosaccharid ist,
B) mindestens ein Feuchthaltemittel,
C) mindestens ein Pigment, wobei das Pigment ausgewählt ist aus der Gruppe von organischen Pigmenten, anorganischen Pigmenten und deren Mischungen,
D) mindestens ein pH-Stellmittel, insbesondere wobei das pH-Stellmittel ausgewählt ist aus anorganischen und organischen Säuren und Basen, insbesondere anorganischen und organischen Basen, vorzugsweise anorganischen Basen.

Noch weiter bevorzugt weist die Pigmentpaste auf:
A) ein Netz- und Dispergiermittelsystem, wobei das Netz- und Dispergiermittelsystem umfasst:
   a) ein Polyaminosaccharid, insbesondere Polyglucosamin,
   b) ein weiteres Netz- oder Dispergiermittel, insbesondere ausgewählt aus der Gruppe von nichtionischen Polymeren, kationischen Polymeren, anionischen Polymeren und deren Mischungen, insbesondere nichtionischen Copolymeren, anionischen Copolymeren, Polyethern und deren Mischungen,
B) mindestens ein Feuchthaltemittel,
C) mindestens ein Pigment, wobei das Pigment ausgewählt ist aus der Gruppe von organischen Pigmenten, anorganischen Pigmenten und deren Mischungen,
D) mindestens ein pH-Stellmittel, insbesondere wobei das pH-Stellmittel ausgewählt ist aus anorganischen und organischen Säuren und Basen, insbesondere anorganischen und organischen Basen, vorzugsweise anorganischen Basen.

Im Speziellen hat es sich im Rahmen der Erfindung bewährt, wenn das pH-Stellmittel ausgewählt ist aus der Gruppe von Salzsäure, Schwefelsäure, Salpetersäure, Zitronensäure, Pyridincarbonsäure, Essigsäure, Natriumhydroxid, Kaliumhydroxid, Lithiumhydroxid, Calciumhydroxid, Ammoniak, Wasserglas, Dimethylglucamin und deren Mischungen, vorzugsweise aus der Gruppe von Natriumhydroxid, Kaliumhydroxid, Lithiumhydroxid, Calciumhydroxid, Ammoniak, Wasserglas, Dimethylglucamin und deren Mischungen.

Die vorgenannten pH-Stellmittel erlauben eine effiziente Anpassung des pH-Wertes an einen vorgegebenen Zielwert und weisen zudem eine hervorragende Kompatibilität mit den weiteren Bestandteilen der erfindungsgemäßen Pigmentpaste auf.

Erfindungsgemäß hat es sich dabei bewährt, wenn die Pigmentpaste das pH-Stellmittel in Mengen von 0,01 bis 10 Gew.-%, insbesondere 0,1 bis 8 Gew.-%, vorzugsweise 0,5 bis 7 Gew.-%, bevorzugt 1 bis 5 Gew.-%, bezogen auf die Zusammensetzung, enthält.

Vorzugsweise ist im Rahmen der Erfindung vorgesehen, dass die Pigmentpaste einen pH-Wert von 9,5 oder höher aufweist. Besonders gute Ergebnisse werden in diesem Zusammenhang erhalten, wenn die Zusammensetzung einen pH-Wert im Bereich von 9,5 bis 14, vorzugsweise 9,5 bis 13, bevorzugt 9,5 bis 12, besonders bevorzugt 9,5 bis 11,5, ganz besonders bevorzugt 10,2 bis 11,4, aufweist.

Die erfindungsgemäße Pigmentpaste ist also vorzugsweise leicht basisch eingestellt, was eine im Hinblick auf Gesundheitsaspekte weitestgehend unbedenkliche Handhabung gestattet und darüber hinaus auch einen positiven Beitrag zu einer längeren Haltbarkeit der Pigmentpaste leistet.

Gegenstand der vorliegenden Erfindung gemäß dem geltenden Aspekt ist somit insbesondere auch eine solche wässrige Pigmentpaste für Abtönsysteme, die insbesondere zumindest im Wesentlichen frei ist von Konservierungsmitteln und/oder Bioziden, insbesondere wie zuvor beschrieben,
welche aufweist:
A) ein Netz- und Dispergiermittelsystem, wobei das Netz- und Dispergiermittelsystem umfasst:
   a) ein Polyaminosaccharid, insbesondere Polyglucosamin,
   b) ein weiteres Netz- oder Dispergiermittel, insbesondere ausgewählt aus der Gruppe von nichtionischen Polymeren, kationischen Polymeren, anionischen Polymeren und deren Mischungen, insbesondere nichtionischen Copolymeren, anionischen Copolymeren, Polyethern und deren Mischungen,
B) mindestens ein Feuchthaltemittel,
C) mindestens ein Pigment, wobei das Pigment ausgewählt ist aus der Gruppe von organischen Pigmenten, anorganischen Pigmenten und deren Mischungen,
D) mindestens ein pH-Stellmittel, insbesondere wobei das pH-Stellmittel ausgewählt ist aus anorganischen und organischen Säuren und Basen, insbesondere anorganischen und organischen Basen, vorzugsweise anorganischen Basen,

wobei das Polyaminosaccharid a), insbesondere Polyglucosamin, funktionalisiert, insbesondere N-funktionalisiert, ist, vorzugsweise N-alkyliert und/oder N-acyliert, ist, vorzugsweise mit C1- bis C5-Alkyl- und/oder Acylresten, insbesondere C1- bis C3-Alkyl- und/oder Acylresten N-alkyliert und/oder N-acyliert ist, und/oder
wobei das Polyaminosaccharid a), insbesondere Polyglucosamin, modifiziert, insbesondere N-modifiziert, vorzugsweise N-protoniert und/oder N-komplexiert, ist, und
wobei die Pigmentpaste das Netz- und Dispergiermittelsystem A) insgesamt in Mengen von 3 bis 60 Gew.-%, insbesondere 4 bis 50 Gew.-%, vorzugsweise 5 bis 40 Gew.-%, bevorzugt 6 bis 45 Gew.-%, bezogen auf die Zusammensetzung, enthält, und
wobei die Pigmentpaste das Feuchthaltemittel B) in Mengen von 1 bis 40 Gew.-%, insbesondere 2 bis 30 Gew.-%, vorzugsweise 3 bis 27,5 Gew.-%, bevorzugt 3 bis 25 Gew.-%, bezogen auf die Zusammensetzung, enthält, und
wobei die Pigmentpaste das Pigment C) in Mengen von 15 bis 85 Gew.-%, insbesondere 20 bis 80 Gew.-%, vorzugsweise 25 bis 75 Gew.-%, bevorzugt 30 bis 70 Gew.-%, bezogen auf die Zusammensetzung, enthält, und
wobei die Pigmentpaste das pH-Stellmittel D) in Mengen von 0,01 bis 10 Gew.-%, insbesondere 0,1 bis 8 Gew.-%, vorzugsweise 0,5 bis 7 Gew.-%, bevorzugt 1 bis 5 Gew.-%, bezogen auf die Zusammensetzung, enthält.

Darüber hinaus hat es sich im Rahmen der Erfindung bewährt, wenn die Pigmentpaste mindestens ein Additiv aufweist, insbesondere ausgewählt aus der Gruppe von Rheologieadditiven, Stabilisatoren, Entschäumer, pH-Stabilisatoren, Rheologieverbesserern und deren Mischungen.

In diesem Sinne ist im Rahmen der Erfindung vorzugsweise vorgesehen, dass die Pigmentpaste aufweist:
A) ein Netz- und Dispergiermittelsystem, wobei das Netz- und Dispergiermittelsystem mindestens zwei, insbesondere zwei, Netz- und Dispergiermittel umfasst, wobei eines der mindestens zwei, insbesondere zwei, Netz- und Dispergiermittel ein Polyaminosaccharid ist,
B) mindestens ein Feuchthaltemittel,
C) mindestens ein Pigment, wobei das Pigment ausgewählt ist aus der Gruppe von organischen Pigmenten, anorganischen Pigmenten und deren Mischungen,
D) mindestens ein pH-Stellmittel, insbesondere wobei das pH-Stellmittel ausgewählt ist aus anorganischen und organischen Säuren und Basen, insbesondere anorganischen und organischen Basen, vorzugsweise anorganischen Basen,
E) mindestens ein Additiv, insbesondere ausgewählt aus der Gruppe von Rheologieadditiven, Stabilisatoren, Entschäumer, pH-Stabilisatoren, Rheologieverbesserern und deren Mischungen.

Noch weiter bevorzugt ist es, wenn die Pigmentpaste aufweist:
A) ein Netz- und Dispergiermittelsystem, wobei das Netz- und Dispergiermittelsystem umfasst:
   a) ein Polyaminosaccharid, insbesondere Polyglucosamin,
   b) ein weiteres Netz- oder Dispergiermittel, insbesondere ausgewählt aus der Gruppe von nichtionischen Polymeren, kationischen Polymeren, anionischen Polymeren und deren Mischungen, insbesondere nichtionischen Copolymeren, anionischen Copolymeren, Polyethern und deren Mischungen,
B) mindestens ein Feuchthaltemittel,
C) mindestens ein Pigment, wobei das Pigment ausgewählt ist aus der Gruppe von organischen Pigmenten, anorganischen Pigmenten und deren Mischungen,
D) mindestens ein pH-Stellmittel, insbesondere wobei das pH-Stellmittel ausgewählt ist aus anorganischen und organischen Säuren und Basen, insbesondere anorganischen und organischen Basen, vorzugsweise anorganischen Basen,
E) mindestens ein Additiv, insbesondere ausgewählt aus der Gruppe von Rheologieadditiven, Stabilisatoren, Entschäumer, pH-Stabilisatoren, Rheologieverbesserern und deren Mischungen.

Hierbei werden erfindungsgemäß gute Ergebnisse erhalten, wenn das Rheologieadditiv ausgewählt ist aus der Gruppe von natürlichen organischen Polymeren und ihre Derivaten mit Xanthan Gum, Gummi arabicum, Karaya, Tragant, Johannisbrotkernmehl, Guar, Quittenschleim, Pektin, Agar-Agar, Carrageen, Alginate, Stärke und Stärkederivate, Cellulose und deren Derivate, insbesondere Methylcellulose, Carboxymethylcellulose, Hydroxyethylcellulose, Hydroxypropylcellulose, Hydroxypropylmethylcellulose und Methylhydroxyethylcellulose, Gelatine, bevorzugt Xanthan Gum.

Ebenfalls bevorzugt ist es, wenn das Rheologieadditiv ausgewählt ist aus der Gruppe von Polysacchariden, Proteinen, Polyvinylalkoholen, Kieselsäuren, Silikaten und deren Mischungen, vorzugsweise wobei der Verdicker ein Polysaccharid ist, insbesondere wenn das Rheologieadditiv ausgewählt ist aus der Gruppe von Xanthan Gum, beta-Glucanen, thiolisierten Polysacchariden, Proteoglycanen, Gummi arabicum, Karaya, Tragant, Johannisbrotkernmehl, Guar, Quittenschleim, Pektin, Agar-Agar, Carrageen, Alginaten, Stärken, Stärkederivaten, Cellulose, Cellulosederivaten, insbesondere Celluloseethern, Kieselsäuren, Bentoniten, Schichtsilikaten, Polyvinylalkoholen, Gelatine, Casein und deren Mischungen, insbesondere ausgewählt ist aus der Gruppe von Xanthan Gum, beta-Glucanen, thiolisierten Polysacchariden, Proteoglycanen, Celluloseethern, Kieselsäuren, Bentoniten, Schichtsilikaten, Polyvinylalkoholen, Gelatine, Casein und deren Mischungen, vorzugsweise wobei der Verdicker ein Celluloseether ist.

Gleichfalls werden im Rahmen der Erfindung gute Ergebnisse erhalten, wenn das Rheologieadditiv ausgewählt ist aus der Gruppe von Carboxymethylcellulose (CMC), Methylcellulose (MC), Ethylcellulose (EC), Hydroxyethylcellulose (HEC), Hydroxypropylcellulose (HPC), Methylethylcellulose (MEC), Hydroxyethylmethylcellulose (HEMC), Hydroxypropylmethylcellulose (HPMC), Ethylhydroxyethylcellulose und deren Mischungen.

Auch hat es sich bewährt, wenn das Rheologieadditiv ausgewählt ist aus der Gruppe von anorganischen Schichtsilikaten, insbesondere Bentonite, Hectorite und Magnesium-Aluminium-Silikate, Polyacrylaten (z.B. Carbopol-Typen der Firma Lubrizol, z. B. Carbopol ETD 2020 oder Aqua SF-1), HEUR (*Hydrophobically Modified Ethoxylated Urethane Polymers*), Polyurethanverdicker (z. B. spezielle Aculyn-Typen der Firma Rohm & Haas), kolloidale Kieselsäure, harnstoff- und/oder polyamidbasierte Rheologiemodifizierer, und deren Mischungen.

Im Rahmen der Erfindung kann vorteilhaft also auf eine Vielzahl an Verdickern zurückgegriffen werden, die eine insbesondere weiterführende Einstellung und Anpassung der Rheologieeigenschaften erfindungsgemäßer Pigmentpasten gestatten. So kann eine sehr flexibel und zielgenau einstellbare Pigmentpaste bereitgestellt werden, die unterschiedlichsten Anwendungsbedürfnissen effizient gerecht wird.

Was geeignete Entschäumer anbelangt, so hat es sich im Rahmen der Erfindung als vorteilhaft erwiesen, wenn der Entschäumer ausgewählt ist aus der Gruppe von geringen Mengen an hydrophoben Bestandteilen, insbesondere Vaselinöl (INCI: Petrolatum), Rizinusöl, Mineralöle, Pflanzenöle, Bisphenylhexamethicone, Dimethicone, Dimethicone Silylate, Dimethiconol, Diphenyl Dimethicone, Diphenylsiloxy Phenyl Trimethicone, Disiloxane, PEG/PPG-12/16 Dimethicone, PEG/PPG-12/18 Dimethicone, PEG/PPG-16/8 Dimethicone, PEG/PPG-8/26 Dimethicone, Phenetyl Disiloxane, Phenyl Dimethicone, Phenyl Trimethicone, Polysilicone-1, Polysilicone-2, Polysilicone-7, Polysilicone-8, Polysilicone-10, Silica Dimethicone Silylate, Silica Silylate, Simethicone, Trimethylsiloxysilicate, Trimethylsiloxysilicate/Dimethicone Crosspolymer, Triphenyl Trimethicone und Trisiloxane, Behenyl Methacrylate/Ethylamine Oxide, Methacrylate Copolymer, C12-14 Sec-Pareth-5, Hexamidine Diisothionate, Hexyldeceth-2, Laureth-5 Butyl Ether, Rhus Semialata Leaf Extract, sowie die Kombination von hydrophoben Bestandteilen mit Feststoffen, insbesondere Silica, wie Sipernat^{®}-Typen der Firma Evonik Industries.

Gute Ergebnisse werden dabei erhalten, wenn die Pigmentpaste Additive insgesamt in Mengen von 0,01 bis 15 Gew.-%, insbesondere 0,1 bis 12,5 Gew.-%, vorzugsweise 0,5 bis 10 Gew.-%, bevorzugt 1 bis 7,5 Gew.-%, bezogen auf die Zusammensetzung, enthält.

Bevorzugt ist es darüber hinaus, wenn die Pigmentpaste das Rheologieadditiv in Mengen von 0,001 bis 10 Gew.-%, insbesondere 0,01 bis 7,5 Gew.-%, vorzugsweise 0,1 bis 6 Gew.-%, bevorzugt 0,5 bis 5,5 Gew.-%, bezogen auf die Zusammensetzung, enthält.

Weiter ist vorzugsweise vorgesehen, dass die Pigmentpaste den Entschäumer in Mengen von 0,001 bis 8 Gew.-%, insbesondere 0,01 bis 7 Gew.-%, vorzugsweise 0,1 bis 5,5 Gew.-%, bevorzugt 0,5 bis 5 Gew.-%, bezogen auf die Zusammensetzung, enthält.

Gegenstand der vorliegenden Erfindung gemäß dem geltenden Aspekt ist somit insbesondere auch eine solche wässrige Pigmentpaste für Abtönsysteme, die insbesondere zumindest im Wesentlichen frei ist von Konservierungsmitteln und/oder Bioziden, insbesondere wie zuvor beschrieben,
welche aufweist:
A) ein Netz- und Dispergiermittelsystem, wobei das Netz- und Dispergiermittelsystem umfasst:
   a) ein Polyaminosaccharid, insbesondere Polyglucosamin,
   b) ein weiteres Netz- oder Dispergiermittel, insbesondere ausgewählt aus der Gruppe von nichtionischen Polymeren, kationischen Polymeren, anionischen Polymeren und deren Mischungen, insbesondere nichtionischen Copolymeren, anionischen Copolymeren, Polyethern und deren Mischungen,
B) mindestens ein Feuchthaltemittel
C) mindestens ein Pigment, wobei das Pigment ausgewählt ist aus der Gruppe von organischen Pigmenten, anorganischen Pigmenten und deren Mischungen,
D) mindestens ein pH-Stellmittel, insbesondere wobei das pH-Stellmittel ausgewählt ist aus anorganischen und organischen Säuren und Basen, insbesondere anorganischen und organischen Basen, vorzugsweise anorganischen Basen,
E) mindestens ein Additiv, insbesondere ausgewählt aus der Gruppe von Rheologieadditiven, Stabilisatoren, Entschäumer, pH-Stabilisatoren, Rheologieverbesserern und deren Mischungen,

wobei das Polyaminosaccharid a), insbesondere Polyglucosamin, funktionalisiert, insbesondere N-funktionalisiert, ist, vorzugsweise N-alkyliert und/oder N-acyliert, ist, vorzugsweise mit C1- bis C5-Alkyl- und/oder Acylresten, insbesondere C1- bis C3-Alkyl- und/oder Acylresten N-alkyliert und/oder N-acyliert ist, und/oder
wobei das Polyaminosaccharid a), insbesondere Polyglucosamin, modifiziert, insbesondere *N*-modifiziert, vorzugsweise *N*-protoniert und/oder *N*-komplexiert, ist, und
wobei die Pigmentpaste das Netz- und Dispergiermittelsystem A) insgesamt in Mengen von 3 bis 60 Gew.-%, insbesondere 4 bis 50 Gew.-%, vorzugsweise 5 bis 40 Gew.-%, bevorzugt 6 bis 45 Gew.-%, bezogen auf die Zusammensetzung, enthält, und
wobei die Pigmentpaste das Feuchthaltemittel B) in Mengen von 1 bis 40 Gew.-%, insbesondere 2 bis 30 Gew.-%, vorzugsweise 3 bis 27,5 Gew.-%, bevorzugt 3 bis 25 Gew.-%, bezogen auf die Zusammensetzung, enthält, und
wobei die Pigmentpaste das Pigment C) in Mengen von 15 bis 85 Gew.-%, insbesondere 20 bis 80 Gew.-%, vorzugsweise 25 bis 75 Gew.-%, bevorzugt 30 bis 70 Gew.-%, bezogen auf die Zusammensetzung, enthält, und
wobei die Pigmentpaste das pH-Stellmittel D) in Mengen von 0,01 bis 10 Gew.-%, insbesondere 0,1 bis 8 Gew.-%, vorzugsweise 0,5 bis 7 Gew.-%, bevorzugt 1 bis 5 Gew.-%, bezogen auf die Zusammensetzung, enthält, und
wobei die Pigmentpaste Additive E) insgesamt in Mengen von 0,01 bis 15 Gew.-%, insbesondere 0,1 bis 12,5 Gew.-%, vorzugsweise 0,5 bis 10 Gew.-%, bevorzugt 1 bis 7,5 Gew.-%, bezogen auf die Zusammensetzung, enthält.

Des Weiteren hat es sich im Hinblick auf die Zusammensetzung der erfindungsgemäßen Pigmentpaste bewährt, wenn die Pigmentpaste, insbesondere anorganische, Füllstoffe enthält. Vorzugsweise sind diese ausgewählt aus der Gruppe von Bariumsulfat, Calciumcarbonat, Siliciumdioxid, insbesondere amorphem Siliciumdioxid, Silikaten, Talk, Glimmer, Kaolin, Mikrohohlkugeln und deren Mischungen.

Im Rahmen der Erfindung ist also vorzugsweise vorgesehen, dass die Pigmentpaste aufweist:
A) ein Netz- und Dispergiermittelsystem, wobei das Netz- und Dispergiermittelsystem mindestens zwei, insbesondere zwei, Netz- und Dispergiermittel umfasst, wobei eines der mindestens zwei, insbesondere zwei, Netz- und Dispergiermittel ein Polyaminosaccharid ist,
B) mindestens ein Feuchthaltemittel,
C) mindestens ein Pigment, wobei das Pigment ausgewählt ist aus der Gruppe von organischen Pigmenten, anorganischen Pigmenten und deren Mischungen,
D) mindestens ein pH-Stellmittel, insbesondere wobei das pH-Stellmittel ausgewählt ist aus anorganischen und organischen Säuren und Basen, insbesondere anorganischen und organischen Basen, vorzugsweise anorganischen Basen,
E) mindestens ein Additiv, insbesondere ausgewählt aus der Gruppe von Rheologieadditiven, Stabilisatoren, Entschäumer, pH-Stabilisatoren, Rheologieverbesserern und deren Mischungen,
F) Füllstoffe, insbesondere anorganische Füllstoffe, vorzugsweise ausgewählt aus der Gruppe von Bariumsulfat, Calciumcarbonat, Siliciumdioxid, insbesondere amorphem Siliciumdioxid, Silikaten, Talk, Glimmer, Kaolin, Mikrohohlkugeln und deren Mischungen.

Noch weiter bevorzugt ist es, wenn die Pigmentpaste aufweist:
A) ein Netz- und Dispergiermittelsystem, wobei das Netz- und Dispergiermittelsystem umfasst:
   a) ein Polyaminosaccharid, insbesondere Polyglucosamin,
   b) ein weiteres Netz- oder Dispergiermittel, insbesondere ausgewählt aus der Gruppe von nichtionischen Polymeren, kationischen Polymeren, anionischen Polymeren und deren Mischungen, insbesondere nichtionischen Copolymeren, anionischen Copolymeren, Polyethern und deren Mischungen,
B) mindestens ein Feuchthaltemittel,
C) mindestens ein Pigment, wobei das Pigment ausgewählt ist aus der Gruppe von organischen Pigmenten, anorganischen Pigmenten und deren Mischungen,
D) mindestens ein pH-Stellmittel, insbesondere wobei das pH-Stellmittel ausgewählt ist aus anorganischen und organischen Säuren und Basen, insbesondere anorganischen und organischen Basen, vorzugsweise anorganischen Basen,
E) mindestens ein Additiv, insbesondere ausgewählt aus der Gruppe von Rheologieadditiven, Stabilisatoren, Entschäumer, pH-Stabilisatoren, Rheologieverbesserern und deren Mischungen,
F) Füllstoffe, insbesondere anorganische Füllstoffe, vorzugsweise ausgewählt aus der Gruppe von Bariumsulfat, Calciumcarbonat, Siliciumdioxid, insbesondere amorphem Siliciumdioxid, Silikaten, Talk, Glimmer, Kaolin, Mikrohohlkugeln und deren Mischungen.

Erfindungsgemäß hat es sich dabei bewährt, wenn die Pigmentpaste die Füllstoffe in Mengen von 1 bis 30 Gew-%, insbesondere 2 bis 25 Gew.-%, vorzugsweise 3 bis 20 Gew.-%, bevorzugt 4 bis 15 Gew.-%, besonders bevorzugt 5 bis 10 Gew.-%, bezogen auf die Zusammensetzung, enthält.

Gegenstand der vorliegenden Erfindung gemäß dem geltenden Aspekt ist somit insbesondere auch eine solche wässrige Pigmentpaste für Abtönsysteme, die insbesondere zumindest im Wesentlichen frei ist von Konservierungsmitteln und/oder Bioziden, insbesondere wie zuvor beschrieben,
welche aufweist:
A) ein Netz- und Dispergiermittelsystem, wobei das Netz- und Dispergiermittelsystem umfasst:
   a) ein Polyaminosaccharid, insbesondere Polyglucosamin,
   b) ein weiteres Netz- oder Dispergiermittel, insbesondere ausgewählt aus der Gruppe von nichtionischen Polymeren, kationischen Polymeren, anionischen Polymeren und deren Mischungen, insbesondere nichtionischen Copolymeren, anionischen Copolymeren, Polyethern und deren Mischungen,
B) mindestens ein Feuchthaltemittel,
C) mindestens ein Pigment, wobei das Pigment ausgewählt ist aus der Gruppe von organischen Pigmenten, anorganischen Pigmenten und deren Mischungen,
D) mindestens ein pH-Stellmittel, insbesondere wobei das pH-Stellmittel ausgewählt ist aus anorganischen und organischen Säuren und Basen, insbesondere anorganischen und organischen Basen, vorzugsweise anorganischen Basen,
E) mindestens ein Additiv, insbesondere ausgewählt aus der Gruppe von Rheologieadditiven, Stabilisatoren, Entschäumer, pH-Stabilisatoren, Rheologieverbesserern und deren Mischungen,
F) Füllstoffe, insbesondere anorganische Füllstoffe, vorzugsweise ausgewählt aus der Gruppe von Bariumsulfat, Calciumcarbonat, Siliciumdioxid, insbesondere amorphem Siliciumdioxid, Silikaten, Talk, Glimmer, Kaolin, Mikrohohlkugeln und deren Mischungen,

wobei das Polyaminosaccharid a), insbesondere Polyglucosamin, funktionalisiert, insbesondere *N*-funktionalisiert, ist, vorzugsweise *N*-alkyliert und/oder *N*-acyliert, ist, vorzugsweise mit C1- bis C5-Alkyl- und/oder Acylresten, insbesondere C1- bis C3-Alkyl- und/oder Acylresten *N*-alkyliert und/oder *N*-acyliert ist, und/oder
wobei das Polyaminosaccharid a), insbesondere Polyglucosamin, modifiziert, insbesondere *N*-modifiziert, vorzugsweise *N*-protoniert und/oder *N*-komplexiert, ist, und
wobei die Pigmentpaste das Netz- und Dispergiermittelsystem A) insgesamt in Mengen von 3 bis 60 Gew.-%, insbesondere 4 bis 50 Gew.-%, vorzugsweise 5 bis 40 Gew.-%, bevorzugt 6 bis 45 Gew.-%, bezogen auf die Zusammensetzung, enthält, und
wobei die Pigmentpaste das Feuchthaltemittel B) in Mengen von 1 bis 40 Gew.-%, insbesondere 2 bis 30 Gew.-%, vorzugsweise 3 bis 27,5 Gew.-%, bevorzugt 3 bis 25 Gew.-%, bezogen auf die Zusammensetzung, enthält, und
wobei die Pigmentpaste das Pigment C) in Mengen von 15 bis 85 Gew.-%, insbesondere 20 bis 80 Gew.-%, vorzugsweise 25 bis 75 Gew.-%, bevorzugt 30 bis 70 Gew.-%, bezogen auf die Zusammensetzung, enthält, und
wobei die Pigmentpaste das pH-Stellmittel D) in Mengen von 0,01 bis 10 Gew.-%, insbesondere 0,1 bis 8 Gew.-%, vorzugsweise 0,5 bis 7 Gew.-%, bevorzugt 1 bis 5 Gew.-%, bezogen auf die Zusammensetzung, enthält, und
wobei die Pigmentpaste Additive E) insgesamt in Mengen von 0,01 bis 15 Gew.-%, insbesondere 0,1 bis 12,5 Gew.-%, vorzugsweise 0,5 bis 10 Gew.-%, bevorzugt 1 bis 7,5 Gew.-%, bezogen auf die Zusammensetzung, enthält, und
wobei die Pigmentpaste die Füllstoffe F) in Mengen von 1 bis 30 Gew-%, insbesondere 2 bis 25 Gew.-%, vorzugsweise 3 bis 20 Gew.-%, bevorzugt 4 bis 15 Gew.-%, besonders bevorzugt 5 bis 10 Gew.-%, bezogen auf die Zusammensetzung, enthält.

Weiter ist es im Rahmen der Erfindung vorzugsweise vorgesehen, dass die Pigmentpaste Wasser in Mengen von 0,5 bis 60 Gew.-%, insbesondere 0,75 bis 45 Gew.-%, vorzugsweise 1 bis 30 Gew.-%, bevorzugt 1,5 bis 20 Gew.-%, bezogen auf die Zusammensetzung, enthält.

In diesem Sinne ist es erfindungsgemäß bevorzugt, wenn die Pigmentpaste aufweist:
A) ein Netz- und Dispergiermittelsystem, wobei das Netz- und Dispergiermittelsystem mindestens zwei, insbesondere zwei, Netz- und Dispergiermittel umfasst, wobei eines der mindestens zwei, insbesondere zwei, Netz- und Dispergiermittel ein Polyaminosaccharid ist,
B) mindestens ein Feuchthaltemittel,
C) mindestens ein Pigment, wobei das Pigment ausgewählt ist aus der Gruppe von organischen Pigmenten, anorganischen Pigmenten und deren Mischungen,
D) mindestens ein pH-Stellmittel, insbesondere wobei das pH-Stellmittel ausgewählt ist aus anorganischen und organischen Säuren und Basen, insbesondere anorganischen und organischen Basen, vorzugsweise anorganischen Basen,
E) mindestens ein Additiv, insbesondere ausgewählt aus der Gruppe von Rheologieadditiven, Stabilisatoren, Entschäumer, pH-Stabilisatoren, Rheologieverbesserern und deren Mischungen,
F) Füllstoffe, insbesondere anorganische Füllstoffe, vorzugsweise ausgewählt aus der Gruppe von Bariumsulfat, Calciumcarbonat, Siliciumdioxid, insbesondere amorphem Siliciumdioxid, Silikaten, Talk, Glimmer, Kaolin, Mikrohohlkugeln und deren Mischungen,
G) Wasser.

Noch weiter bevorzugt ist es, wenn die Pigmentpaste aufweist:
A) ein Netz- und Dispergiermittelsystem, wobei das Netz- und Dispergiermittelsystem umfasst:
   a) ein Polyaminosaccharid, insbesondere Polyglucosamin,
   b) ein weiteres Netz- oder Dispergiermittel, insbesondere ausgewählt aus der Gruppe von nichtionischen Polymeren, kationischen Polymeren, anionischen Polymeren und deren Mischungen, insbesondere nichtionischen Copolymeren, anionischen Copolymeren, Polyethern und deren Mischungen,
B) mindestens ein Feuchthaltemittel,
C) mindestens ein Pigment, wobei das Pigment ausgewählt ist aus der Gruppe von organischen Pigmenten, anorganischen Pigmenten und deren Mischungen,
D) mindestens ein pH-Stellmittel, insbesondere wobei das pH-Stellmittel ausgewählt ist aus anorganischen und organischen Säuren und Basen, insbesondere anorganischen und organischen Basen, vorzugsweise anorganischen Basen,
E) mindestens ein Additiv, insbesondere ausgewählt aus der Gruppe von Rheologieadditiven, Stabilisatoren, Entschäumer, pH-Stabilisatoren, Rheologieverbesserern und deren Mischungen,
F) Füllstoffe, insbesondere anorganische Füllstoffe, vorzugsweise ausgewählt aus der Gruppe von Bariumsulfat, Calciumcarbonat, Siliciumdioxid, insbesondere amorphem Siliciumdioxid, Silikaten, Talk, Glimmer, Kaolin, Mikrohohlkugeln und deren Mischungen
G) Wasser.

Gegenstand der vorliegenden Erfindung gemäß dem geltenden Aspekt ist somit insbesondere auch eine solche wässrige Pigmentpaste für Abtönsysteme, die insbesondere zumindest im Wesentlichen frei ist von Konservierungsmitteln und/oder Bioziden, insbesondere wie zuvor beschrieben,
welche aufweist:
A) ein Netz- und Dispergiermittelsystem, wobei das Netz- und Dispergiermittelsystem umfasst:
   a) ein Polyaminosaccharid, insbesondere Polyglucosamin,
   b) ein weiteres Netz- oder Dispergiermittel, insbesondere ausgewählt aus der Gruppe von nichtionischen Polymeren, kationischen Polymeren, anionischen Polymeren und deren Mischungen, insbesondere nichtionischen Copolymeren, anionischen Copolymeren, Polyethern und deren Mischungen,
B) mindestens ein Feuchthaltemittel,
C) mindestens ein Pigment, wobei das Pigment ausgewählt ist aus der Gruppe von organischen Pigmenten, anorganischen Pigmenten und deren Mischungen,
D) mindestens ein pH-Stellmittel, insbesondere wobei das pH-Stellmittel ausgewählt ist aus anorganischen und organischen Säuren und Basen, insbesondere anorganischen und organischen Basen, vorzugsweise anorganischen Basen,
E) mindestens ein Additiv, insbesondere ausgewählt aus der Gruppe von Rheologieadditiven, Stabilisatoren, Entschäumer, pH-Stabilisatoren, Rheologieverbesserern und deren Mischungen,
F) Füllstoffe, insbesondere anorganische Füllstoffe, vorzugsweise ausgewählt aus der Gruppe von Bariumsulfat, Calciumcarbonat, Siliciumdioxid, insbesondere amorphem Siliciumdioxid, Silikaten, Talk, Glimmer, Kaolin, Mikrohohlkugeln und deren Mischungen
G) Wasser,

wobei das Polyaminosaccharid a), insbesondere Polyglucosamin, funktionalisiert, insbesondere N-funktionalisiert, ist, vorzugsweise N-alkyliert und/oder N-acyliert, ist, vorzugsweise mit C1- bis C5-Alkyl- und/oder Acylresten, insbesondere C1- bis C3-Alkyl- und/oder Acylresten N-alkyliert und/oder N-acyliert ist, und/oder
wobei das Polyaminosaccharid a), insbesondere Polyglucosamin, modifiziert, insbesondere N-modifiziert, vorzugsweise N-protoniert und/oder N-komplexiert, ist, und
wobei die Pigmentpaste das Netz- und Dispergiermittelsystem A) insgesamt in Mengen von 3 bis 60 Gew.-%, insbesondere 4 bis 50 Gew.-%, vorzugsweise 5 bis 40 Gew.-%, bevorzugt 6 bis 45 Gew.-%, bezogen auf die Zusammensetzung, enthält, und
wobei die Pigmentpaste das Feuchthaltemittel B) in Mengen von 1 bis 40 Gew.-%, insbesondere 2 bis 30 Gew.-%, vorzugsweise 3 bis 27,5 Gew.-%, bevorzugt 3 bis 25 Gew.-%, bezogen auf die Zusammensetzung, enthält, und
wobei die Pigmentpaste das Pigment C) in Mengen von 15 bis 85 Gew.-%, insbesondere 20 bis 80 Gew.-%, vorzugsweise 25 bis 75 Gew.-%, bevorzugt 30 bis 70 Gew.-%, bezogen auf die Zusammensetzung, enthält, und
wobei die Pigmentpaste das pH-Stellmittel D) in Mengen von 0,01 bis 10 Gew.-%, insbesondere 0,1 bis 8 Gew.-%, vorzugsweise 0,5 bis 7 Gew.-%, bevorzugt 1 bis 5 Gew.-%, bezogen auf die Zusammensetzung, enthält, und
wobei die Pigmentpaste Additive E) insgesamt in Mengen von 0,01 bis 15 Gew.-%, insbesondere 0,1 bis 12,5 Gew.-%, vorzugsweise 0,5 bis 10 Gew.-%, bevorzugt 1 bis 7,5 Gew.-%, bezogen auf die Zusammensetzung, enthält, und
wobei die Pigmentpaste die Füllstoffe F) in Mengen von 1 bis 30 Gew-%, insbesondere 2 bis 25 Gew.-%, vorzugsweise 3 bis 20 Gew.-%, bevorzugt 4 bis 15 Gew.-%, besonders bevorzugt 5 bis 10 Gew.-%, bezogen auf die Zusammensetzung, enthält, und
wobei die Pigmentpaste Wasser G) in Mengen von 0,5 bis 60 Gew.-%, insbesondere 0,75 bis 45 Gew.-%, vorzugsweise 1 bis 30 Gew.-%, bevorzugt 1,5 bis 20 Gew.-%, bezogen auf die Zusammensetzung, enthält.

Erfindungsgemäß ist es außerdem bevorzugt, wenn die Pigmentpaste insbesondere zumindest im Wesentlichen frei ist von Konservierungsmitteln und/oder wenn die Zusammensetzung insbesondere zumindest im Wesentlichen frei ist von Bioziden.

Weiter ist es bevorzugt, wenn die Pigmentpaste frei ist von flüchtigen organischen Verbindungen, d.h. VOC-frei, und/oder frei ist von organischen Lösungsmitteln.

Im Rahmen der Erfindung ist insbesondere bevorzugt, wenn die Pigmentpaste, insbesondere auch in gebrauchsfertiger Form bspw. als Wand- oder Fassadenfarbe oder Putz, einen Gehalt an flüchtigen organischen Stoffen (volatile organic compounds, VOC) von weniger als 3 Gew.-%, insbesondere weniger als 2 Gew.-%, vorzugsweise weniger als 1,5 Gew.-%, bevorzugt weniger als 700 ppm, bezogen auf die Gesamtzusammensetzung, aufweist.

Unter VOC sind dabei alle organischen Substanzen (z.B. Restmonomere, Lösemittel, Filmbildungshilfsmittel, Konservierungsmittel und andere produktionsbedingte Begleitstoffe) zu verstehen, welche durch Totalverdampfung und anschließende gaschromatographische Analyse bis zur Retentionszeit der Substanz Tetradecan (Siedepunkt: 252,6°C) auf einer unpolaren Trennsäule eluiert werden, insbesondere wobei diese Analyse gemäß DIN EN ISO 17895 (Prüfung des In-can VOC Gehaltes in wasserverdünnbaren Dispersionsfarben) oder nach DIN EN ISO 11890-2 (Beschichtungsstoffe - Bestimmung des Gehaltes an flüchtigen organischen Verbindungen (VOC-Gehalt) und des Gehalts an schwerflüchtigen organischen Verbindungen (SVOC-Gehalt) Teil 2) erfolgt.

Darüber hinaus ist es besonders bevorzugt, wenn die Pigmentpaste, insbesondere auch in gebrauchsfertiger Form bspw. als Wandfarbe, einen Gehalt an schwer flüchtigen organischen Stoffen (semi volatile organic compounds, VOC) von weniger als 0,2 Gew.-%, insbesondere weniger als 0,1 Gew.-%, vorzugsweise weniger als 500 ppm, bezogen auf die Zusammensetzung, aufweist.

Schwerflüchtige organische Verbindungen (SVOC) meint dabei solche organischen Verbindungen mit einem Siedepunkt über 250 °C und unter 370 °C bei einem Standarddruck von 101,3 kPa, die in einer Kapillarsäule im Retentionszeitfenster von n-Tetradecan (C₁₄H₃₀) bis zu n-Docosan (C₂₂H₄₆) eluieren. Die Analyse des SVOC-Gehalts erfolgt bevorzugt gemäß DIN EN ISO 11890-2 (Beschichtungsstoffe - Bestimmung des Gehaltes an flüchtigen organischen Verbindungen (VOC-Gehalt) und des Gehalts an schwerflüchtigen organischen Verbindungen (SVOC-Gehalt) Teil 2).

Darüber hinaus ist vorzugsweise auch vorgesehen, dass erfindungsgemäße Pigmentpasten, insbesondere nach Verarbeitung und Verwendung, bspw. als Wand- oder Fassadenanstrich oder als Putz, Emissionswerte für VOC von höchstens 0,01 mg/m³ nach 3 Tagen bzw. höchstens 1 µg/m³, nach 28 Tagen, insbesondere wobei die Bestimmung der Emissionswerte gemäß DIN EN 16516 erfolgt. SVOC-Emissionswerte betragen für erfindungsgemäße Pigmentpasten, insbesondere nach Verarbeitung und Verwendung, bspw. als Wand- oder Fassadenanstrich oder als Putz, höchstens 3 mg/m³, insbesondere höchsten 2 mg/m³, nach 3 Tagen bzw. höchstens 300 µg/m³, nach 28 Tagen aufweisen, insbesondere wobei die Bestimmung der Emissionswerte gemäß DIN EN 16516 erfolgt.

In diesem Sinne ist im Rahmen der vorliegenden Erfindung besonders bevorzugt vorgesehen, dass die erfindungsgemäße Pigmentpaste, insbesondere in gebrauchsfertiger Form bspw. als Wandfarbe, die Kriterien für die Vergabe des Umweltzeichens "Blauer Engel" erfüllt, insbesondere im gebrauchsfertigen Zustand für emissionsarme Innenfarben, schadstoffarme Fassadenfarben und/oder emissionsarme Putze für den Innenraum.

Gegenstand der vorliegenden Erfindung gemäß dem geltenden Aspekt ist somit insbesondere auch eine solche wässrige Pigmentpaste für Abtönsysteme, die insbesondere zumindest im Wesentlichen frei ist von Konservierungsmitteln und/oder Bioziden, insbesondere wie zuvor beschrieben,
welche ein Netz- und Dispergiermittelsystem enthält, wobei das Netz- und Dispergiermittelsystem umfasst:
a) ein Polyaminosaccharid, insbesondere Polyglucosamin,
b) ein weiteres Netz- oder Dispergiermittel, insbesondere ausgewählt aus der Gruppe von nichtionischen Polymeren, kationischen Polymeren, anionischen Polymeren und deren Mischungen, insbesondere nichtionischen Copolymeren, anionischen Copolymeren, Polyethern und deren Mischungen,

wobei das Polyaminosaccharid a), insbesondere Polyglucosamin, funktionalisiert, insbesondere *N*-funktionalisiert, ist, vorzugsweise *N*-alkyliert und/oder *N*-acyliert, ist, vorzugsweise mit C1- bis C5-Alkyl- und/oder Acylresten, insbesondere C1- bis C3-Alkyl- und/oder Acylresten *N*-alkyliert und/oder *N*-acyliert ist, und/oder
wobei das Polyaminosaccharid a), insbesondere Polyglucosamin, modifiziert, insbesondere *N*-modifiziert, vorzugsweise *N*-protoniert und/oder *N*-komplexiert, ist, und
wobei die Pigmentpaste insbesondere zumindest im Wesentlichen frei ist von Konservierungsmitteln und/oder wobei die Zusammensetzung insbesondere zumindest im Wesentlichen frei ist von Bioziden und/oder wobei die Zusammensetzung frei von flüchtigen organischen Verbindungen, d.h. VOC-frei, und/oder frei von organischen Lösungsmitteln, ist.

Darüber hinaus auch Gegenstand der vorliegenden Erfindung gemäß dem geltenden Aspekt ist insbesondere eine solche Pigmentpaste für Abtönsysteme, die insbesondere zumindest im Wesentlichen frei ist von Konservierungsmitteln und/oder Bioziden, insbesondere wie zuvor beschrieben,
welche aufweist:
A) ein Netz- und Dispergiermittelsystem, wobei das Netz- und Dispergiermittelsystem umfasst:
   a) ein Polyaminosaccharid, insbesondere Polyglucosamin,
   b) ein weiteres Netz- oder Dispergiermittel, insbesondere ausgewählt aus der Gruppe von nichtionischen Polymeren, kationischen Polymeren, anionischen Polymeren und deren Mischungen, insbesondere nichtionischen Copolymeren, anionischen Copolymeren, Polyethern und deren Mischungen,
B) mindestens ein Feuchthaltemittel,
C) ein Pigment, wobei das Pigment ausgewählt ist aus der Gruppe von organischen Pigmenten, anorganischen Pigmenten und deren Mischungen,
D) ein pH-Stellmittel, insbesondere wobei das pH-Stellmittel ausgewählt ist aus anorganischen und organischen Säuren und Basen, insbesondere anorganischen und organischen Basen, vorzugsweise anorganischen Basen,
E) mindestens ein Additiv, insbesondere ausgewählt aus der Gruppe von Rheologieadditiven, Stabilisatoren, Entschäumer, pH-Stabilisatoren, Rheologieverbesserern und deren Mischungen,
F) Füllstoffe, insbesondere anorganische Füllstoffe, vorzugsweise ausgewählt aus der Gruppe von Bariumsulfat, Calciumcarbonat, Siliciumdioxid, insbesondere amorphem Siliciumdioxid, Silikaten, Talk, Glimmer, Kaolin, Mikrohohlkugeln und deren Mischungen
G) Wasser,

wobei das Polyaminosaccharid a), insbesondere Polyglucosamin, funktionalisiert, insbesondere *N*-funktionalisiert, ist, vorzugsweise *N*-alkyliert und/oder *N*-acyliert, ist, vorzugsweise mit C1- bis C5-Alkyl- und/oder Acylresten, insbesondere C1- bis C3-Alkyl- und/oder Acylresten *N*-alkyliert und/oder *N*-acyliert ist, und/oder
wobei das Polyaminosaccharid a), insbesondere Polyglucosamin, modifiziert, insbesondere *N*-modifiziert, vorzugsweise *N*-protoniert und/oder *N*-komplexiert, ist, und
wobei die Pigmentpaste insbesondere zumindest im Wesentlichen frei ist von Konservierungsmitteln und/oder wobei die Zusammensetzung insbesondere zumindest im Wesentlichen frei ist von Bioziden und/oder wobei die Zusammensetzung frei von flüchtigen organischen Verbindungen, d.h. VOC-frei, und/oder frei von organischen Lösungsmitteln, ist.

Nicht zuletzt ist es erfindungsgemäß bevorzugt, wenn die erfindungsgemäße Pigmentpaste lagerstabil ist, insbesondere über einen Zeitraum von mindestens 2 Monaten, insbesondere mindestens 4 Monaten, insbesondere mindestens 6 Monaten, vorzugsweise mindestens 12 Monaten. Gleichermaßen kann es vorgesehen sein, dass die erfindungsgemäßen Zusammensetzungen über einen Zeitraum von 2 bis 36 Monate, insbesondere 4 bis 20 Monate, insbesondere 6 bis 18 Monate, vorzugsweise 12 bis 15 Monate, lagerstabil ist.

Unter "lagerstabil" ist dabei zu verstehen, dass sich die physikalischen und chemischen Eigenschaften der Zusammensetzung während der Lagerung nicht oder nur in einem Maße ändern, welches die Anwendungseigenschaften der Zusammensetzung nicht beeinträchtigt.

Weiterer Gegenstand der vorliegenden Erfindung - gemäß einem **zweiten** Aspekt der vorliegenden Erfindung - ist die Verwendung einer zuvor beschriebenen Pigmentpaste zur Abtönung von Bindemittelsystemen, insbesondere von Anstrichmitteln, vorzugsweise von Dispersionsfarben.

Das Bindemittelsystem, insbesondere die Abtönbasis bzw. Basiszusammensetzung, ist insbesondere ein vorzugsweise wässriges Bindemittelsystem. Üblicherweise ist die Abtönbasis eine wässrige Dispersion, ein Wasserlack, eine Dispersionsfarbe, eine Kalkfarbe, eine Silikatfarbe, eine Silikonharzfarbe, eine Dispersionssilikatfarbe eine Sol-Silikatfarbe, eine Nanohybridfarbe oder deren Mischung, vorzugsweise eine Dispersionsfarbe. Es kann jedoch auch sein, dass die Abtönbasis eine lösemittelhaltige Dispersion oder ein Lösemittellack ist. Vorzugsweise wird jedoch eine wässrige Abtönbasis eingesetzt, welche bevorzugt lösemittelfrei ist, insbesondere einen VOC-Gehalt von weniger als 1 g/l aufweist.

Wie zuvor ausgeführt, enthält die Abtönbasis üblicherweise ein Bindemittel in wässriger Dispersion. Hierbei kann es vorgesehen sein, dass die Abtönbasis ein organisches Bindemittel in Form einer wässrigen Dispersion eines Polymers enthält. Vorzugsweise ist das Polymer ausgewählt aus Acrylaten, Vinylacetat und/oder Styrol, insbesondere auf Basis von Reinacrylaten und/oder Terpolymeren der genannten Verbindungen, vorzugsweise Reinacrylaten. Gleichermaßen kann jedoch auch ein anorganisches Bindemittel verwendet werden, wie beispielsweise Wasserglas oder Kieselsol oder auch ein Organohybridbindemittel, insbesondere eine wässrige Organosilikat-Hybriddispersion und/oder Stärke und/oder Stärkehybridbindemittel. Gleichermaßen ist es auch möglich, dass Acrylharze, Acrylsilikonharze, Silikonharze, Urethanharze, ungesättigte Polyesterharze oder Alkydharze sowie deren Mischungen eingesetzt werden.

Vorzugsweise weist die Abtönbasis jedoch ein organisches Bindemittel auf. Besonders gute Ergebnisse werden in diesem Zusammenhang erhalten, wenn die Abtönbasis ein Polymer ausgewählt aus Vinylacetat/Ethylen-Copolymeren, Copolymeren auf Basis von Vinylaromaten, insbesondere Styrol und Acrylaten, oder auf Basis von Reinacrylaten, insbesondere auf der Basis von Reinacrylaten, aufweist. Reinacrylate umfassen Homo- und insbesondere Copolymere von (Meth)Acrylaten, d.h. Acrylaten und/oder Methacrylaten, die gegebenenfalls auch mit (Meth)Acrylsäure, d.h. Acryl- und/oder Methacrylsäure als Comonomerbaustein. Das organische Bindemittel wird vorzugsweise wie zuvor ausgeführt in Form einer wässrigen Bindemitteldispersion eingesetzt.

Für weitergehende Einzelheiten zu der erfindungsgemäßen Verwendung kann auf die obigen Ausführungen zu der erfindungsgemäßen Zusammensetzung verwiesen werden, welche in Bezug auf die erfindungsgemäße Verwendung entsprechend gelten.

Weiterer Gegenstand der vorliegenden Erfindung - gemäß einem **dritten** Aspekt der vorliegenden Erfindung - ist ein Kit-of-Parts, enthaltend eine zuvor beschriebene Pigmentpaste und eine Abtönbasis, insbesondere ein Anstrichmittel, vorzugsweise eine Dispersionsfarbe.

Mit dem erfindungsgemäßen Kit-of-Parts können nahezu beliebige organische und anorganische Bindemittelsysteme konservierungsmittelfrei und biozidfrei in wasserbasierten, vorzugsweise rein wasserbasierten, Systemen erhalten werden.

Das erfindungsgemäße Kit-of-Parts eignet sich insbesondere zur Herstellung konservierungsmittelfreier und biozidfreier Abtönsysteme bzw. abgetönter Anstrichsysteme und für die Herstellung von abgetönten wässrigen Lasuren, Wasserlacken, Anstrichfarben, insbesondere Dispersionsfarben, Kalkfarben, Silikatfarben, Silikonharzfarben, Dispersionsilikatfarben, Sol-Silikatfarben und/oder Nanohydbridfarben. Für weitere Einzelheiten der Abtönbasis wird auf die obigen Ausführungen zu der erfindungsgemäßen Verwendung verwiesen.

Gemäß einer bevorzugten Ausführungsform weist das Bindemittel, insbesondere die Dispersionsfarbe, einen Komplexbildner und/oder einen pH-Stabilisator, auf.

Die Anwesenheit eines Komplexbildners oder eines pH-Stabilisators in der Abtönbasis, insbesondere der Dispersionsfarbe ist bevorzugt, da durch die Anwesenheit drei- und gegebenenfalls auch zweiwertiger Ionen in nicht zu vernachlässigenden Mengen in der erfindungsgemäßen Zusammensetzung, insbesondere Pigmentpaste, oftmals eine ungewünschte Eindickung der Bindemittelsysteme beobachtet wird.

Dies kann zuverlässig entweder durch die Zugabe eines Komplexbildners oder oftmals auch eines pH-Stabilisators verhindert werden.

Im Rahmen der vorliegenden Erfindung wird es bevorzugt, wenn die Abtönbasis bzw. Dispersionsfarbe den Komplexbildner und/oder den pH-Stabilisator in Mengen von 0,1 bis 10 Gew.-%, insbesondere 0,2 bis 8 Gew.-%, vorzugsweise 0,5 bis 5 Gew.-%, bezogen auf die Abtönbasis, enthält.

Wenn die Abtönbasis, insbesondere die Dispersionsfarbe, einen Komplexbildner enthält, so hat es sich bewährt, wenn der Komplexbildner ausgewählt ist aus der Gruppe von Phosphonsäuren, Phosphonaten, Polyphosphaten, Hydroxycarbonsäuren, Dicarbonsäuren, Aminosäuren, Porphyrinen und deren Mischungen, vorzugsweise Phosphonsäuren, Phosphonaten und deren Mischungen.

Besonders bevorzugt ist der Komplexbildner ausgewählt aus der Gruppe von HEDP 1-Hydroxy-ethan-(1,1-diphosphonsäure) (HEDP), Pentanatrium-Aminotrimethylenphosphonsäure (Na₅ATMP)), Tetranatrium-Hydroxyethandiphosphonsäure (Na₄HEDP) und deren Mischungen.

Was den pH-Stabilisator anbelangt, so kann dieser aus einer Vielzahl von Systemen ausgewählt werden. Besonders gute Ergebnisse werden im Rahmen der vorliegenden Erfindung jedoch erhalten, wenn der pH-Stabilisator ausgewählt ist aus der Gruppe von pH-Puffersystemen, insbesondere basischen pH-Puffersystemen.

Für weitere Einzelheiten zu dem erfindungsgemäßen Kit-of-Parts kann auf die obigen Ausführungen zu den anderen Erfindungsaspekten verwiesen werden, welche in Bezug auf das erfindungsgemäße Kit-of-Parts entsprechend gelten.

Weiterer Gegenstand der vorliegenden Erfindung - gemäß einem **vierten** Aspekt der vorliegenden Erfindung - ist schließlich eine Abtönbasis, insbesondere Anstrichmittel, vorzugsweise Dispersionsfarbe enthaltend eine Pigmentpaste wie zuvor beschrieben, insbesondere in Mengen in einem Bereich von 1 bis 40 Gew.-%, insbesondere 2 bis 35 Gew.-%, vorzugsweise 2,5 bis 30 Gew.-%, bevorzugt 3 bis 25 Gew.-%.

Für weitere Einzelheiten zu diesem Erfindungsaspekt kann auf die obigen Ausführungen zu den anderen Erfindungsaspekten verwiesen werden, welche in Bezug auf die erfindungsgemäße Abtönbasis entsprechend gelten.

Im Nachfolgenden wird die vorliegende Erfindung anhand von Ausführungsbeispielen sowie Figurendarstellungen weiterführend beschrieben, wobei die diesbezüglichen Ausführungen für sämtliche der erfindungsgemäßen Aspekte gelten und wobei die entsprechenden beschriebenen bevorzugten Ausführungsformen bzw. Ausgestaltungen der vorliegenden Erfindung keinesfalls beschränkend sind; im Rahmen der Ausführungsbeispiele und in diesem Zusammenhang erfolgenden Beschreibung der Figurendarstellungen werden auch weitergehende Vorteile, Eigenschaften, Aspekte und Merkmale der vorliegenden Erfindung aufgezeigt.

In den Figurendarstellungen zeigt:

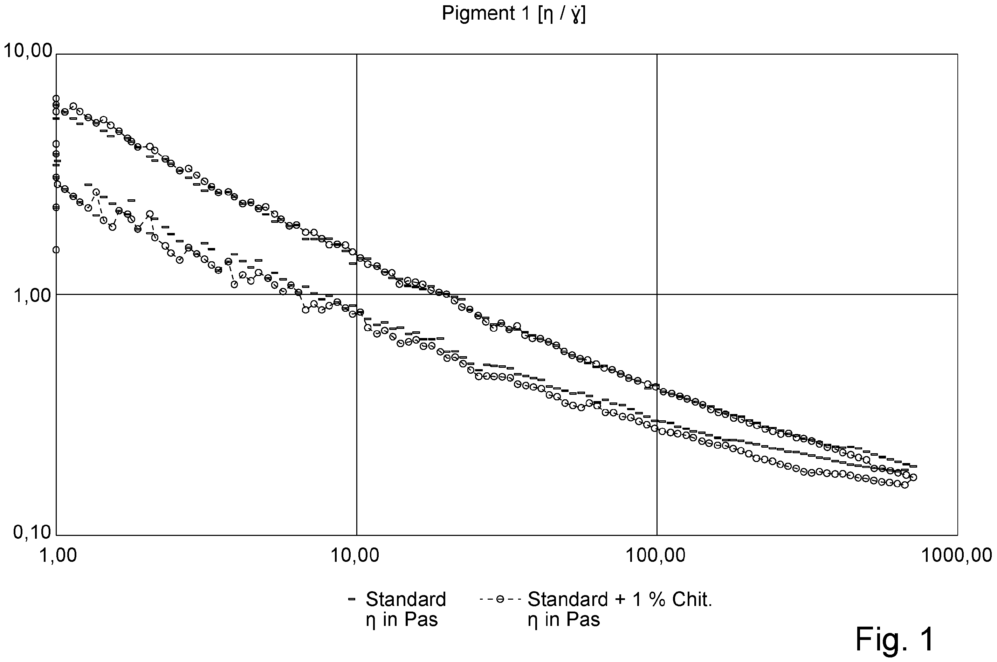

- Fig. 1: Ergebnis der Rheologiemessung zu Pigment 1 (HP 123, grün) für die Referenzzusammensetzung ("Standard", - ) sowie die Pigmentsuspension mit 1 Gew.-% Komponente a) ("Standard + 1 % Chit., ○ ) als Auftragung der Viskosität η der untersuchten Zusammensetzungen gegen die Schergeschwindigkeit γ˙;

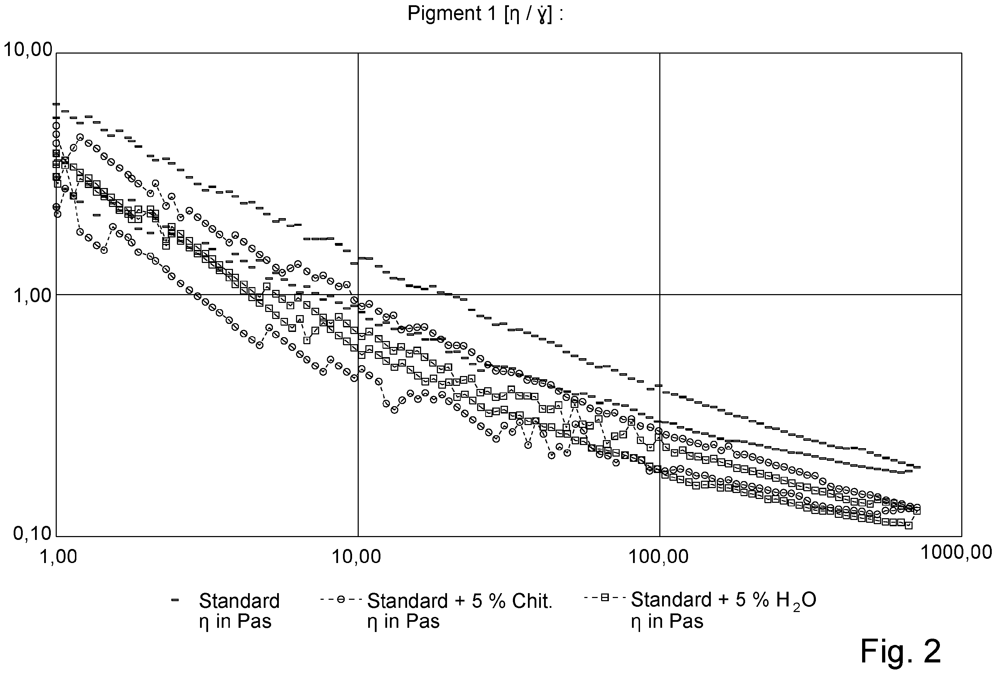

- Fig. 2: Ergebnis der Rheologiemessung zu Pigment 1 (HP 123, grün) für die Referenzzusammensetzung ("Standard", - ), die Pigmentsuspension mit 5 Gew.-% Komponente a) ("Standard + 5 % Chit., ○) sowie die Pigmentsuspension mit 5 % Wasser (Standard + 5 % H₂O, ) als Auftragung der Viskosität η der untersuchten Zusammensetzungen gegen die Schergeschwindigkeit γ˙;

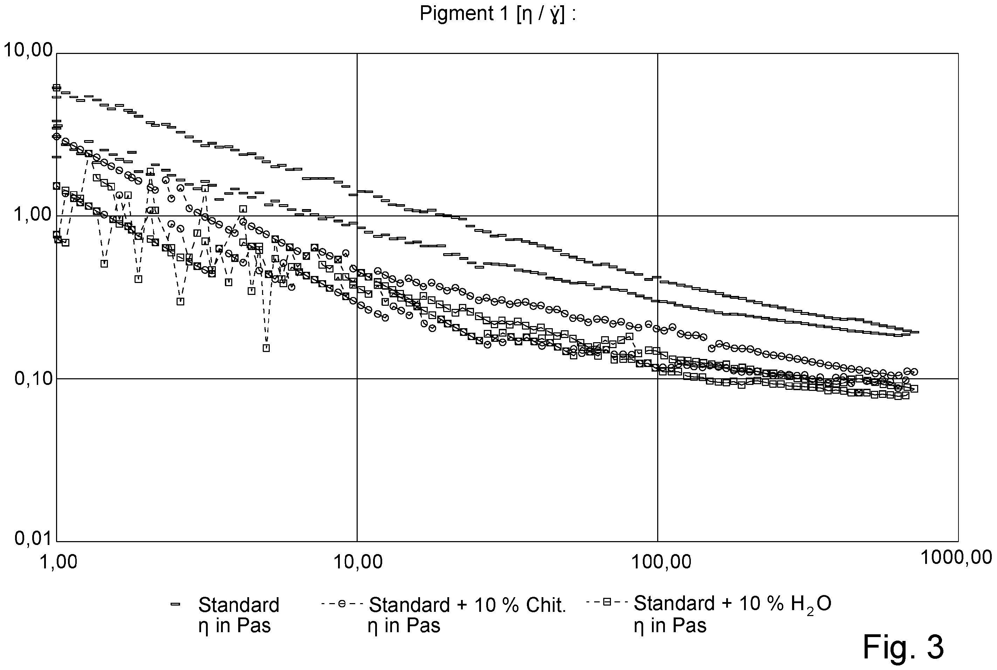

- Fig. 3: Ergebnis der Rheologiemessung zu Pigment 1 (HP 123, grün) für die Referenzzusammensetzung ("Standard", - ), die Pigmentsuspension mit 10 Gew.-% Komponente a) ("Standard + 10 % Chit., ○ ) sowie die Pigmentsuspension mit 10 % Wasser (Standard + 10 % H₂O, ) als Auftragung der Viskosität η der untersuchten Zusammensetzungen gegen die Schergeschwindigkeit γ˙;

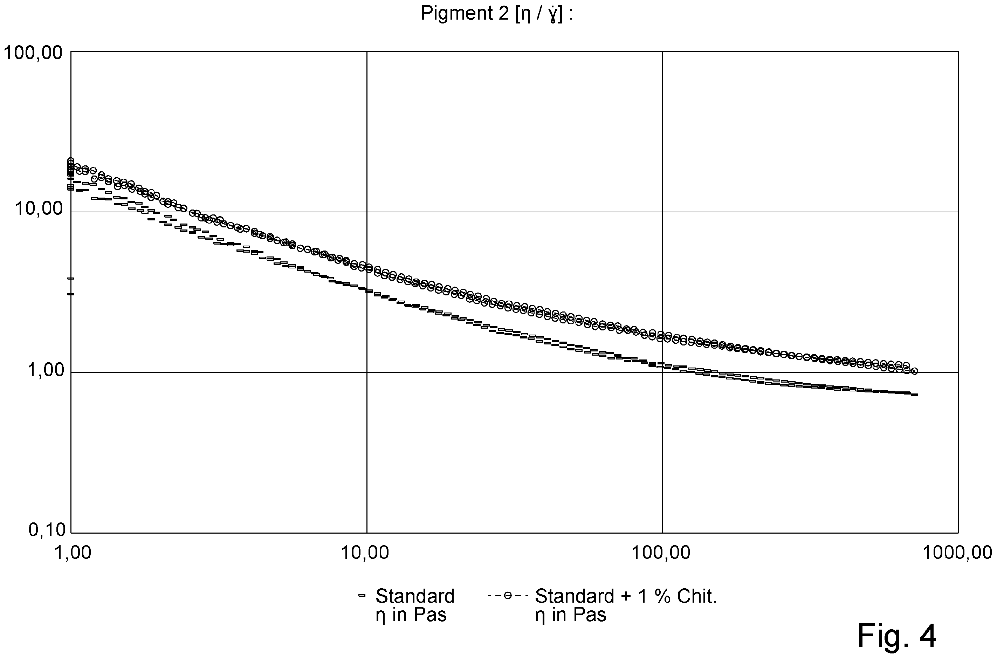

- Fig. 4: Ergebnis der Rheologiemessung zu Pigment 2 (HP 134, oxidgelb) für die Referenzzusammensetzung ("Standard", - ) sowie die Pigmentsuspension mit 1 Gew.-% Komponente a) ("Standard + 1 % Chit., ○ ) als Auftragung der Viskosität η der untersuchten Zusammensetzungen gegen die Schergeschwindigkeit γ˙;

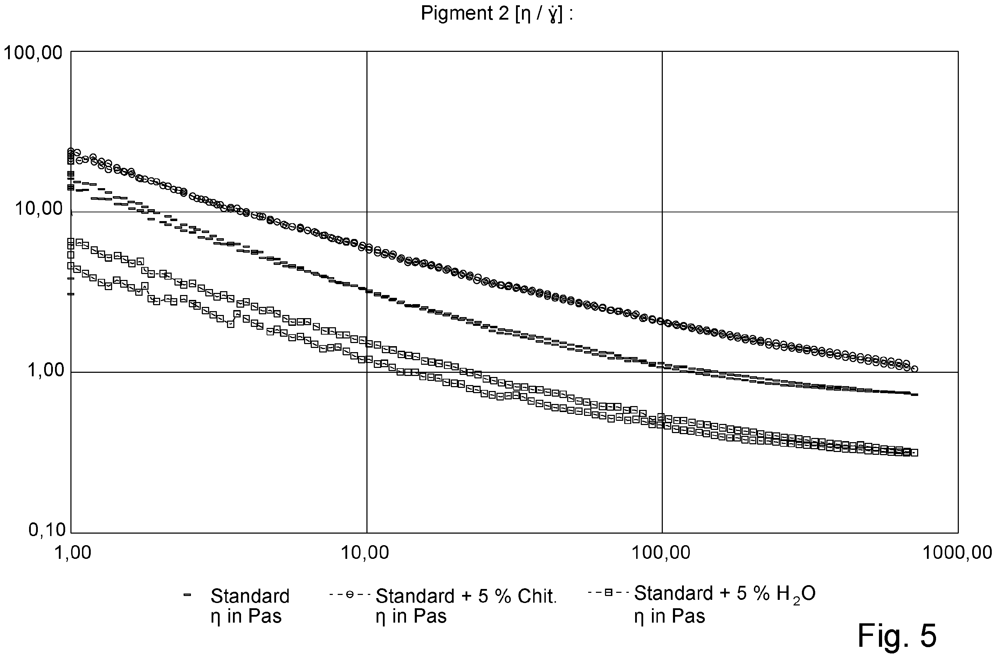

- Fig. 5: Ergebnis der Rheologiemessung zu Pigment 2 (HP 134, oxidgelb) für die Referenzzusammensetzung ("Standard", - ), die Pigmentsuspension mit 5 Gew.-% Komponente a) ("Standard + 5 % Chit., ○) sowie die Pigmentsuspension mit 5 % Wasser (Standard + 5 % H₂O, ) als Auftragung der Viskosität η der untersuchten Zusammensetzungen gegen die Schergeschwindigkeit γ˙;

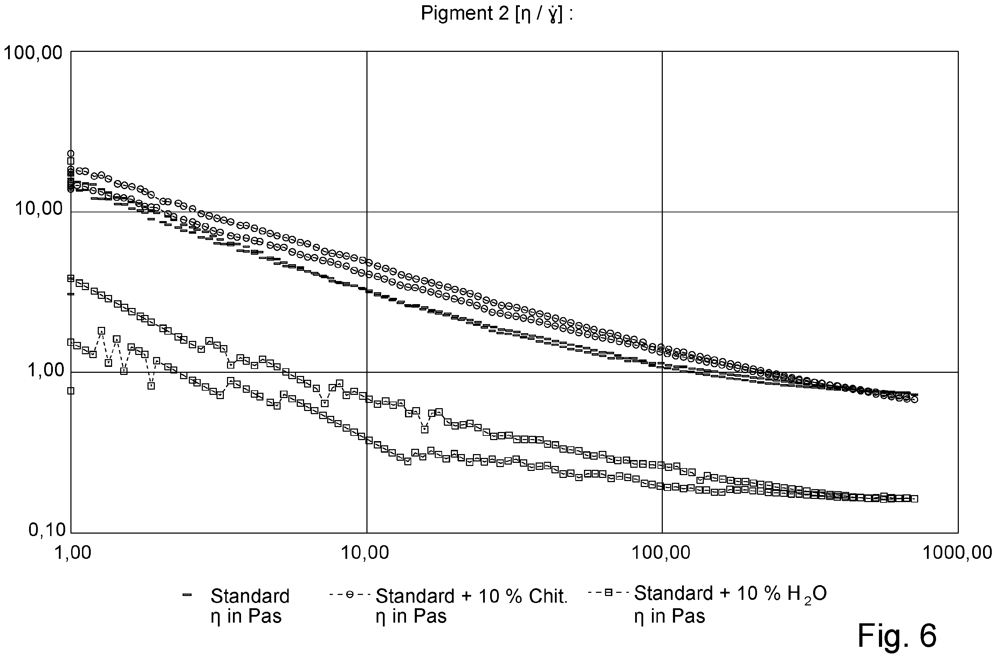

- Fig. 6: Ergebnis der Rheologiemessung zu Pigment 2 (HP 134, oxidgelb) für die Referenzzusammensetzung ("Standard", - ), die Pigmentsuspension mit 10 Gew.-% Komponente a) ("Standard + 10 % Chit., ○ ) sowie die Pigmentsuspension mit 10 % Wasser (Standard + 10 % H₂O, ) als Auftragung der Viskosität η der untersuchten Zusammensetzungen gegen die Schergeschwindigkeit γ˙;

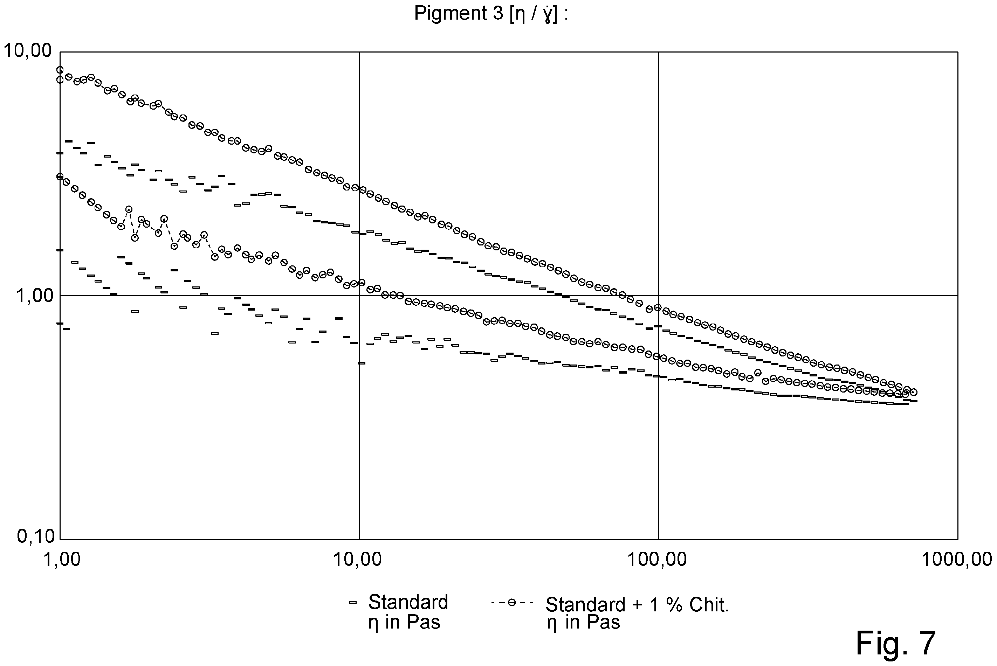

- Fig. 7: Ergebnis der Rheologiemessung zu Pigment 3 (PCW 278, oxidrot) für die Referenzzusammensetzung ("Standard", - ) sowie die Pigmentsuspension mit 1 Gew.-% Komponente a) ("Standard + 1 % Chit., ○ ) als Auftragung der Viskosität η der untersuchten Zusammensetzungen gegen die Schergeschwindigkeit γ˙;

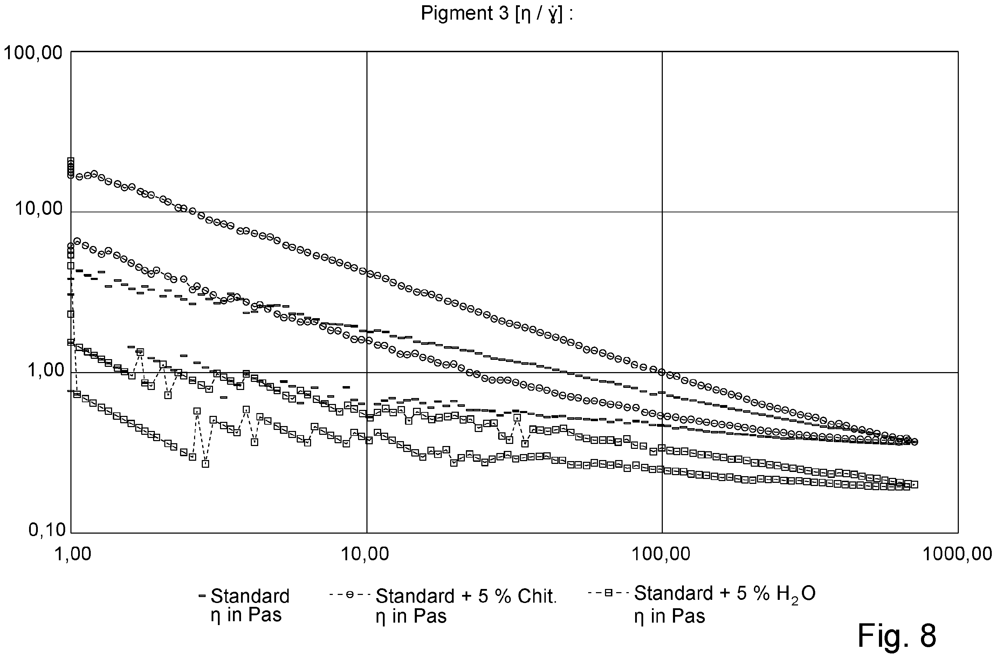

- Fig. 8: Ergebnis der Rheologiemessung zu Pigment 3 (PCW 278, oxidrot) für die Referenzzusammensetzung ("Standard", - ), die Pigmentsuspension mit 5 Gew.-% Komponente a) ("Standard + 5 % Chit., ○ ) sowie die Pigmentsuspension mit 5 % Wasser (Standard + 5 % H₂O, ) als Auftragung der Viskosität η der untersuchten Zusammensetzungen gegen die Schergeschwindigkeit γ˙;

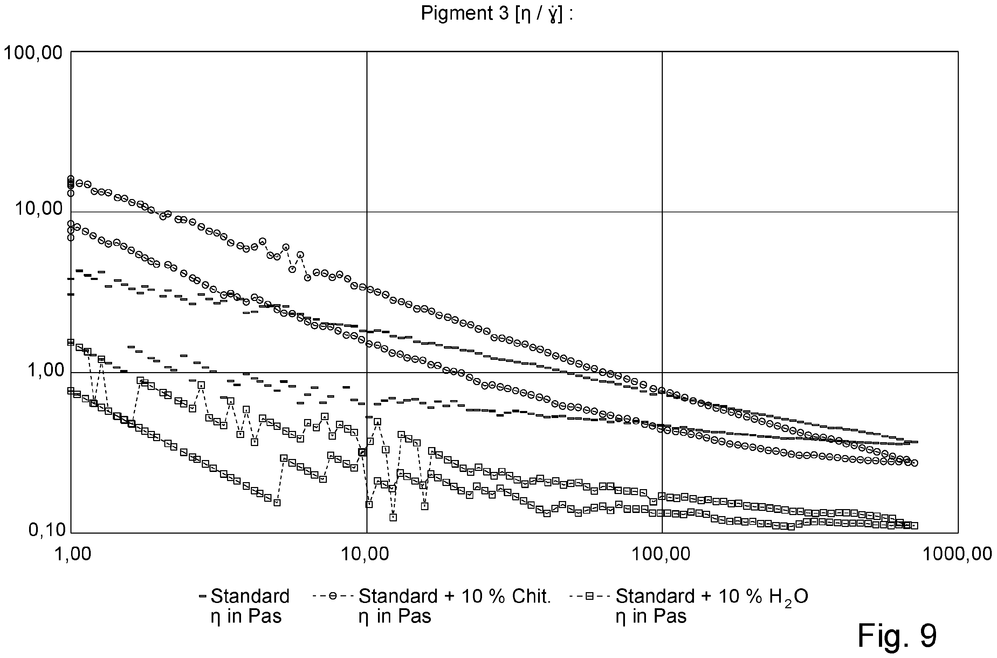

- Fig. 9: Ergebnis der Rheologiemessung zu Pigment 3 (PCW 278, oxidrot) für die Referenzzusammensetzung ("Standard", - ), die Pigmentsuspension mit 10 Gew.-% Komponente a) ("Standard + 10 % Chit., ○ ) sowie die Pigmentsuspension mit 10 % Wasser (Standard + 10 % H₂O, ) als Auftragung der Viskosität η der untersuchten Zusammensetzungen gegen die Schergeschwindigkeit γ˙;

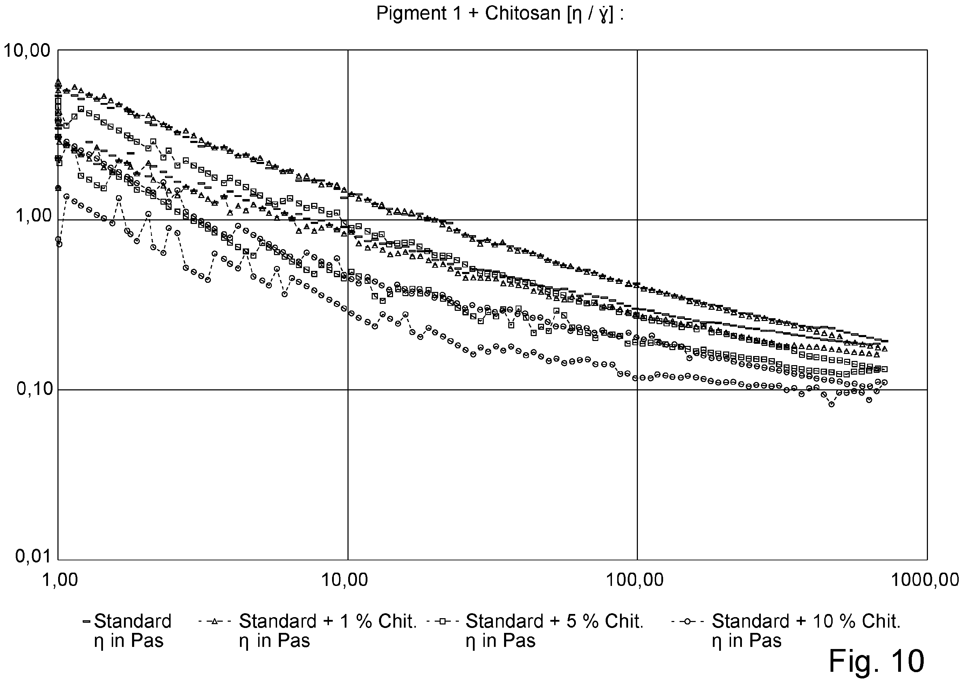

- Fig. 10: Gegenüberstellung der Ergebnisse der Rheologiemessung für Pigment 1 (HP 123, grün) für die Pigmentsuspension mit 1 Gew.-% Komponente a) ("Standard + 1 % Chit., △ ), die Pigmentsuspension mit 5 Gew.-% Komponente a) ("Standard + 5 % Chit., ) sowie die Pigmentsuspension mit 10 Gew.-% Komponente a) ("Standard + 10 % Chit., ○ ) als Auftragung der Viskosität η der untersuchten Zusammensetzungen gegen die Schergeschwindigkeit γ˙;

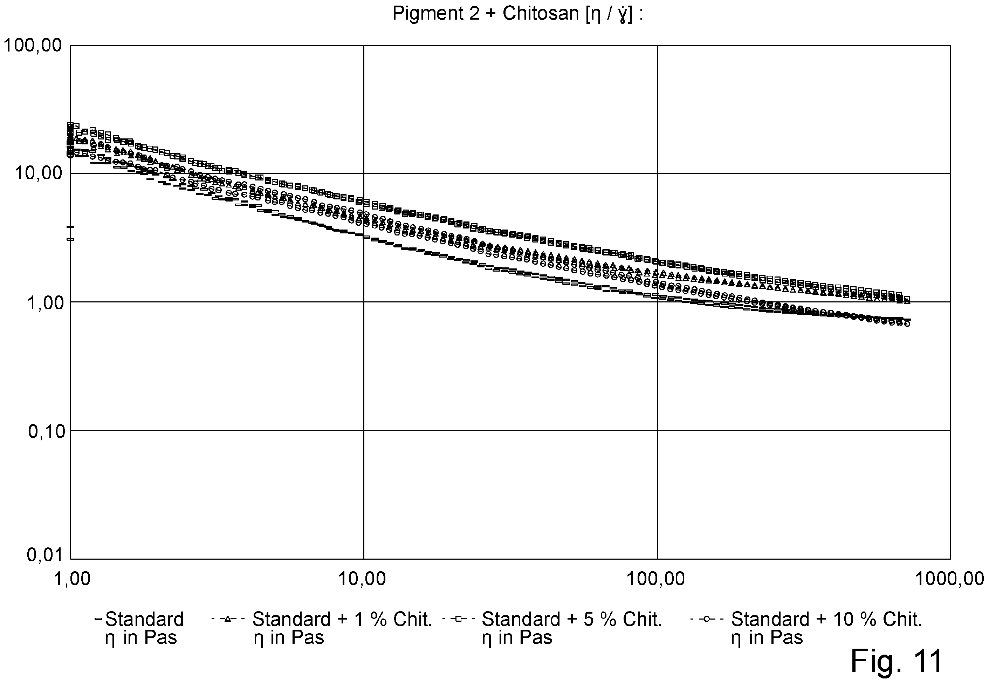

- Fig. 11: Gegenüberstellung der Ergebnisse der Rheologiemessung für Pigment 2 (HP 134, oxidgelb) für die Pigmentsuspension mit 1 Gew.-% Komponente a) ("Standard + 1 % Chit., △ ), die Pigmentsuspension mit 5 Gew.-% Komponente a) ("Standard + 5 % Chit., ) sowie die Pigmentsuspension mit 10 Gew.-% Komponente a) ("Standard + 10 % Chit., ○ ) als Auftragung der Viskosität η der untersuchten Zusammensetzungen gegen die Schergeschwindigkeit γ˙;

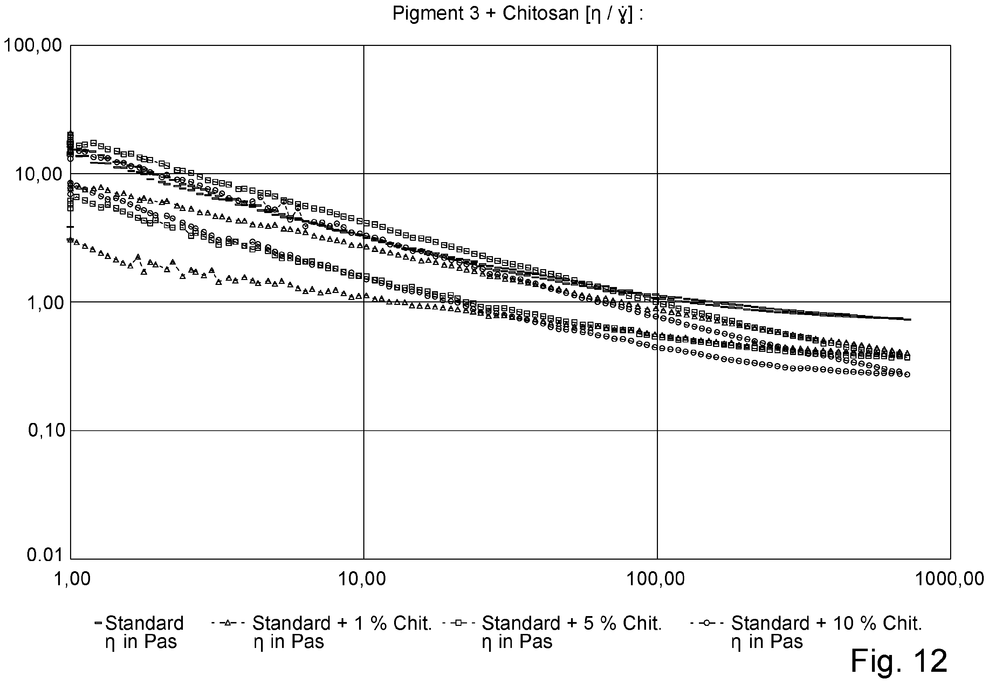

- Fig. 12: Gegenüberstellung der Ergebnisse der Rheologiemessung für Pigment 3 (PCW 278, oxidrot) für die Pigmentsuspension mit 1 Gew.-% Komponente a) ("Standard + 1 % Chit., △ ), die Pigmentsuspension mit 5 Gew.-% Komponente a) ("Standard + 5 % Chit., ) sowie die Pigmentsuspension mit 10 Gew.-% Komponente a) ("Standard + 10 % Chit., ○ ) als Auftragung der Viskosität η der untersuchten Zusammensetzungen gegen die Schergeschwindigkeit γ˙;

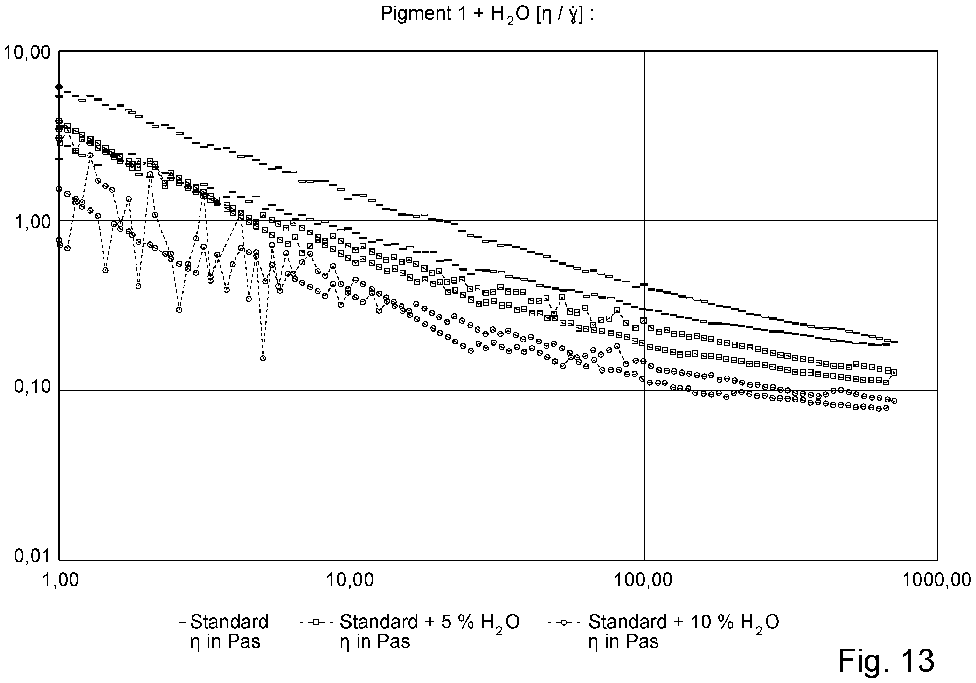

- Fig. 13: Gegenüberstellung der Ergebnisse der Rheologiemessung für Pigment 1 (HP 123, grün) für die Pigmentsuspension mit 5 Gew.-% Wasser ("Standard + 5 % H₂O, ) sowie die Pigmentsuspension mit 10 Gew.-% Komponente a) ("Standard + 10 % H₂O, ○ ) als Auftragung der Viskosität η der untersuchten Zusammensetzungen gegen die Schergeschwindigkeit γ˙;

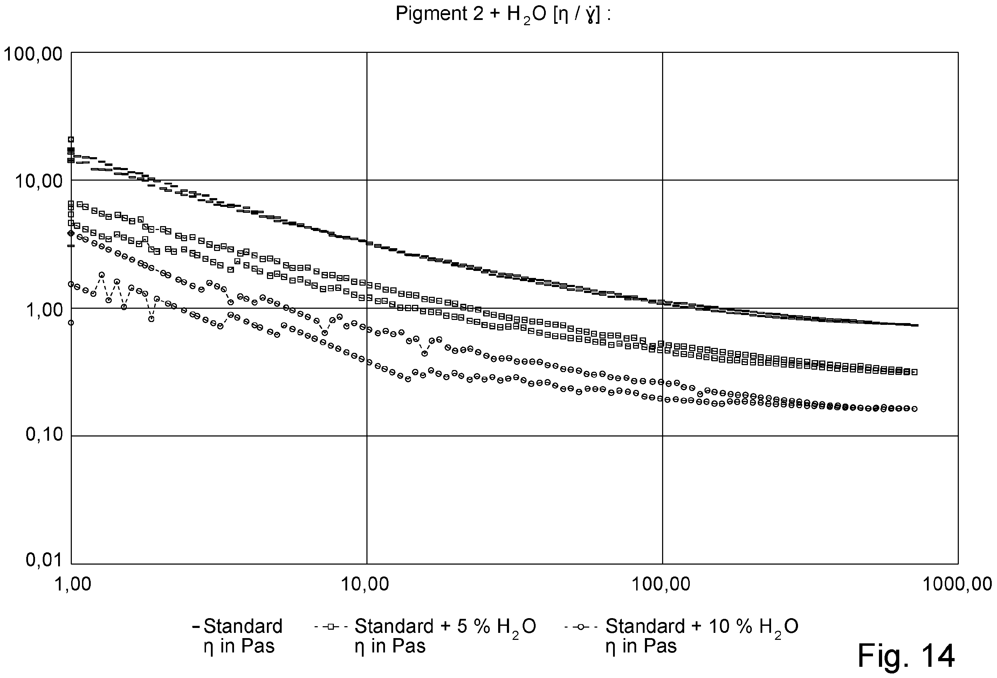

- Fig. 14: Gegenüberstellung der Ergebnisse der Rheologiemessung für Pigment 2 (HP 134, oxidgelb) für die Pigmentsuspension mit 5 Gew.-% Wasser ("Standard + 5 % H₂O, ) sowie die Pigmentsuspension mit 10 Gew.-% Komponente a) ("Standard + 10 % H₂O, ○ ) als Auftragung der Viskosität η der untersuchten Zusammensetzungen gegen die Schergeschwindigkeit γ˙;

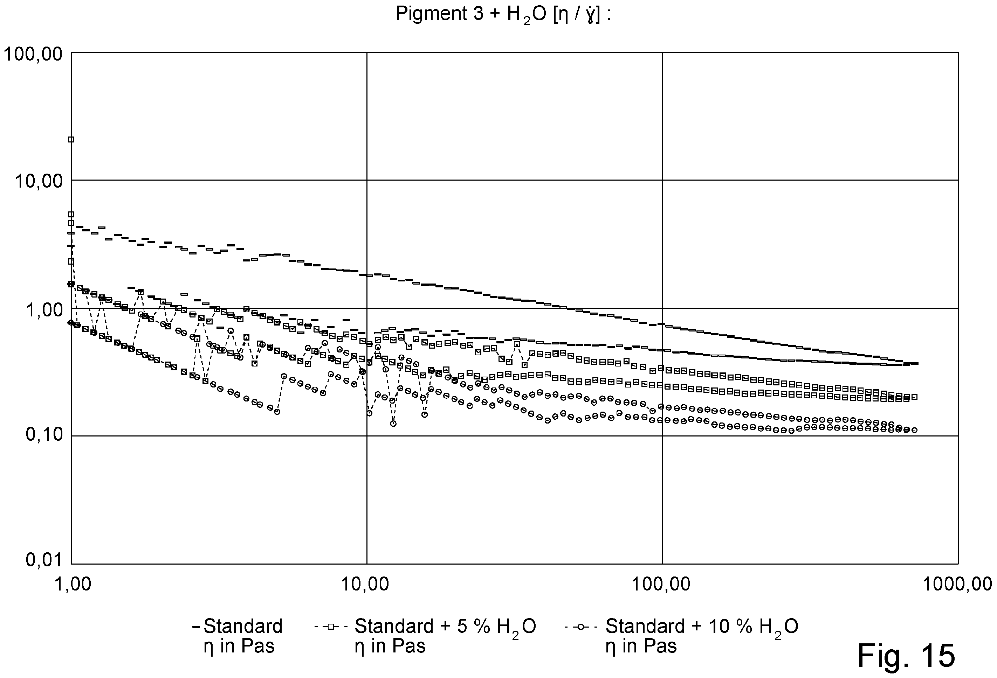

- Fig. 15: Gegenüberstellung der Ergebnisse der Rheologiemessung für Pigment 3 (PCW 278, oxidrot) für die Pigmentsuspension mit 5 Gew.-% Wasser ("Standard + 5 % H₂O, ) sowie die Pigmentsuspension mit 10 Gew.-% Komponente a) ("Standard + 10 % H₂O, ○ ) als Auftragung der Viskosität η der untersuchten Zusammensetzungen gegen die Schergeschwindigkeit γ˙.

### Ausführungsbeispiele

Die Dispergier- und Rheologieeigenschaften erfindungsgemäßer Pasten, insbesondere der diesbezügliche Einfluss des in den Pasten umfassten Netz- und Dispergiermittelsystems, sind, wie nachfolgend beschrieben, untersucht worden.

### 1. Netz- und Dispergiereigenschaften

Es wurde eine Pigmentsuspension mit dem Pigment Bayferrox 318M (PBk 11, Eisenoxidschwarz) in Wasser als Referenz bzw. Standard hergestellt. Die Suspension umfasst Pigment und Wasser im Verhältnis 1 : 1.

Ausgehend von der Referenzsuspension sind drei Proben zur Untersuchung des Netz- und Dispergiermitteleinflusses auf die Farbeigenschaften der Suspension hergestellt worden. Dazu wurde die Referenzsuspension jeweils mit den folgenden Netz- bzw. Dispergiermittel einzeln in Mengen von je 1 Gew.-% versetzt: a) Chitosan (N-alkyliert sowie N-komplexiert mit Tricin und Calcium als Tricin-Ca²⁺-Komplex mit Mengen von 0,1 Gew.-% Chitosan, 0,9 Gew.-% Tricin-Ca²⁺-Komplex), und b) wasserbasiertes, lösemittelfreies Netz- und Dispergieradditiv (Maleinsäure-StyrolCopolymer, bspw. Disperbyk 190) (auch als Proben eins und zwei bezeichnet). Die dritte Probe umfasst ein Netz- und Dispergiermittelsystem entsprechend der vorliegenden Erfindung aus den beiden Netz- und Dispergiermitteln a) und b) im Verhältnis 1 : 1 bei gleichbleibender zugegebener Menge des jeweiligen Netz- und Dispergiermittels.

Die erhaltenen netz- und dispergiermittelhaltigen Pigmentpasten sind ebenso wie die Referenzpaste in eine Acrylatdispersionsfarbbasis eingearbeitet und die Beeinflussung der Farbausprägung durch die Netz- und Dispergiermittel gegenüber der Referenz ermittelt worden (vgl. Tab. 1).

Die diesbezüglichen Messungen erfolgten durch Messung der Reflexion gegen die Transmission mittels eines Spektralphotometers von Konica Minolta des Typs "CM-3600A".

Die erhaltenen Ergebnisse sind in der nachfolgenden Tabelle 1 wiedergegeben.

**Tab. 1: Farbdifferenz für netz- und dispergiermittelhaltige Pastenproben gegenüber der Referenzpaste des Pigments Bayferrox 318M**

| | **DL*** | **Da*** | **Db*** | **DC*** | **DH*** | **DE*** | **Farbstärke** |
|---|---|---|---|---|---|---|---|
| **Referenz** | **-** | **-** | **-** | **-** | **-** | **-** | **-** |
| **Netzmittel a)** | -0,52 | -0,01 | -0,04 | 0,04 | -0,01 | 0,52 | 103,83% |
| **Netzmittel b)** | 0,02 | -0,03 | -0,04 | 0,04 | -0,03 | 0,05 | 99,87% |
| **Netzmittel a) + b)** | -1,24 | -0,03 | -0,14 | 0,14 | -0,02 | 1,24 | 109,39% |

| | | | | | | | |
|---|---|---|---|---|---|---|---|
| wobei: **DL*** = Differenz des Helligkeits-/Dunkelheitswerts (+ = heller - = dunkler) **Da*** = Differenz auf der Rot/Grün-Achse (+ = röter - = grüner) **Db*** = Differenz auf der Gelb/Blau-Achse (+ = gelber - = blauer) **DC*** = Differenz bei der Sättigung (+ = brillanter - = stumpfer) **DH*** = Differenz beim Farbton **DE*** = Farbdifferenz-Wert gesamt | | | | | | | |

Wie die Ergebnisse der Farbmessung in Tab. 1 zeigen, trägt die kombinierte Verwendung der Netz- und Dispergiermittel a) und b) zu einer größeren Farbstärke sowie einer ausgeprägteren Sättigung des Farbtons bei. Dabei ergibt sich insbesondere solch ein positiver Effekt auf die Farbwahrnehmung, der über die bloße Summe der einzelnen Verwendung des Netzmittels a) bzw. des Netzmittels b) hinausgeht. Dies zeigt sich insbesondere im Hinblick auf die Parameter Farbsättigung und Farbdifferenz.

Für das untersuchte schwarze Pigment wird außerdem auch eine Erhöhung des Dunkelheitswertes beobachtet, was diesbezüglich als vorteilhafte Beeinflussung der Farbwahrnehmung zu beurteilen ist.

Demgegenüber nimmt das herkömmliche Netzmittel b) kaum Einfluss auf die Farbwahrnehmung und bewirkt insgesamt eine Verringerung der Farbstärke. Das Netzmittel a) liefert eine Erhöhung der Farbstärke bei gleichzeitiger Steigerung des Dunkelheitswertes, jedoch in deutlich geringerem Maße als für die Netz- und Dispergiermittelkombination von a) und b) zu beobachten ist.

Für die Netz- und Dispergiermittelkombination wird dementsprechend ausgeprägter eine signifikante Verbesserung der Farbwahrnehmung erreicht, die aus den einzelnen Einflüssen der Netz- und Dispergiermittel a) und b) in dieser Weise nicht ableitbar gewesen wäre.

### 2. Rheologieeigenschaften

Analog wie unter 1. beschrieben, wurden Pigmentpasten auf Basis der Pigmente HP 123 (grün, Pigment 1), HP 134 (oxidgelb, Pigment 2) und PCW 278 (oxidrot, Pigment 3) mit Wasser im Verhältnis 1 : 1 als Referenzpasten hergestellt sowie weiterverarbeitet.

Zur Untersuchung des Einflusses des Netz- und Dispergiermittelsystems, insbesondere auf Basis des Bestandteils a), auf die Rheologieeigenschaften der Pasten, wurden unterschiedliche Mengen des Netz- und Dispergiermittels a) Chitosan (N-komplexiert mit 0,2 % eines primären Amins/Ammoniumsalzes) in den hergestellten Pigmentsuspensionen untersucht.

Der Gehalt der Komponente a) wurde dazu zwischen 1 Gew.-%, 5 Gew.-% und 10 Gew.-% variiert. Zur Gegenüberstellung wurden Vergleichszusammensetzungen mit 5 Gew.-% bzw. 10 Gew.-% Wasser verdünnt. Als Referenz dient die jeweilige Pigmentsuspension auf Basis von Pigment und Wasser 1 : 1.

Rheologiemessungen für die so hergestellten Pasten erfolgten Mittels Rotationsmessung unter Verwendung eines entsprechenden Messgeräts des Typs Haake VT550.

Die erhaltenen Ergebnisse sind in den Figuren 1 bis 15 wiedergegeben.

In den Figuren meint Pigment 1 das Pigment HP 123, Pigment 2 das Pigment HP 134 und Pigment 3 das Pigment PCW 278. Aufgetragen sind die Viskosität η der untersuchten Zusammensetzungen gegen die Schergeschwindigkeit γ˙.

Die Figuren 1 bis 3 umfassen die Rheologiemessergebnisse für das Pigment 1. In Figur 1 eingezeichnet sind die Graphen für die Referenzzusammensetzung ("Standard", - ) und die Pigmentsuspension mit 1 Gew.-% Komponente a) ("Standard + 1 % Chit., ○ ). Die Figur 2 zeigt die Graphen für die **Referenzzusammensetzung** ("Standard", - ), die Pigmentsuspension mit 5 Gew.-% Komponente a) ("Standard + 5 % Chit., ○) und die Pigmentsuspension mit 5 % Wasser (Standard + 5 % H₂O, ). In Figur 3 sind die Ergebnisse der Messung für die Pigmentsuspension mit 10 Gew.-% Komponente a) ("Standard + 10 % Chit., ○) und die Pigmentsuspension mit 10 % Wasser (Standard + 5 % H₂O, ), wiederum gegenüber der Referenzzusammensetzung ("Standard", - ), gezeigt.

In analoger Weise umfassen die Figuren 4 bis 6 die Rheologiemessergebnisse für das Pigment 2 und die Figuren 7 bis 9 die Rheologiemessergebnisse für das Pigment 3, jeweils wiederum in direkter Gegenüberstellung mit einer entsprechend wasserverdünnten Probe sowie zum Abgleich gegenüber einer Nullreferenz (weder Wasser noch Netz- und Dispergiermittel a) zugesetzt).

Die Figuren 10 bis 12 zeigen jeweils für das Pigment 1, 2 und 3 den Einfluss der Konzentrationserhöhung von Komponente a) auf die Viskositätseigenschaften im Vergleich.

Demgegenüber geben die Figuren 13 bis 15 wieder, wie sich die zunehmende Verdünnung der jeweiligen Pigmentpräparationen mit Wasser auf die Rheologieeigenschaften dieser auswirkt.

Insgesamt ist anhand der Figuren 1 bis 15 festzustellen, dass der Zusatz des Polyaminosaccharids Chitosan bzw. des Netz- und Dispergiermittels a) einen stabilisierenden Effekt auf das Rheologieprofil der Pigmentsuspensionen hat und einen thixotropen Charakter der Suspensionen fördert. Diese ist insbesondere im Hinblick auf die Verarbeitung der Pasten förderlich, da einerseits eine erleichterte Einarbeitbarkeit der Pasten unter Eintrag von Scherenergie erzielt wird und andererseits eine erhöhte Stabilität von resultierenden Pigmentdispersionen bei der Lagerung.

Für das organisch-basierte Pigment 1 kann zudem eine Verringerung der Viskosität für steigende Gehalte der Komponente a) beobachtet werden (vgl. Fig. 1 bis 3). Dieser Effekt ist insbesondere unter Eintrag von Scherenergie ausgeprägt, während die anfängliche Viskosität der netz- und dispergiermittelhaltigen Suspensionen im Bereich der Viskosität der Referenzsuspension bleibt. Die Variation der zugegebenen Menge der Komponente a) ermöglicht für organisch-basierte Farbpigmente somit die gezielte Herabsetzung der Viskosität entsprechender Pigmentpasten insbesondere für die Verarbeitung der Suspensionen. Dies trägt positiv zu einer erleichterten Verarbeitbarkeit bzw. Einarbeitbarkeit organischbasierter Pigmentsuspensionen bei. Dies illustriert auch die Fig. 10, welcher der verflüssigende Effekt von Chitosan unter Schereinwirkung mit zunehmender Konzentration anschaulich entnommen werden kann. Demgegenüber zeigt Fig. 13, wie instabil das Rheologieprofil von Pigmentpasten bei entsprechender Verdünnung mit Wasser wird, insbesondere bei höherer Wasserverdünnung.

Für die anorganisch-basierten Pigmente 2 und 3 kann eine Steigerung der Gesamtviskosität der Pigmentsuspensionen mit zunehmendem Mengenanteil des Netz- und Dispergiermittels a) festgestellt werden (vgl. Fig. 4 bis 9). Die Viskositätssteigerung fällt dabei insbesondere im Vergleich zur verdünnenden Wirkung der Zugabe von Wasser sehr deutlich aus. Gleichzeitig ergibt sich ein stabiles Rheologieprofil, das sich gleichmäßig unter Eintrag von Scherenergie entwickelt. Dies ist vorteilhaft für die Einarbeitung der Pasten in Farbbasen. Eine gesteigerte Viskosität kann zudem vorteilhaft auf die Lagerstabilität sowie generelle Dispersionsstabilität von Pigmentpasten wirken.

Die vorbeschriebenen Eigenschaften gehen insbesondere auch aus einer Gegenüberstellung der Fig. 11 und 14 sowie der Fig. 12 und 15 hervor. Während wasserverdünnte Pigmentsuspensionen ein instabiles Viskositätsverhalten sowie eine ausgeprägte Verflüssigung zeigen, zeichnen sich die netz- und dispergiermittelhaltigen Suspensionen durch stabile Rheologieprofile, insbesondere mit thixotropem Charakter, aus.

### 3. Pigmentpastenzusammensetzung

Aufbauend auf den vorbeschriebenen Untersuchungen wurde eine anwendungsbereite Pigmentpastenzusammensetzung hergestellt. Die Zusammensetzung ist nachfolgend in Tabelle 2 wiedergegeben.

**Tab. 2: anwendungsfertige Pigmentpaste**

| **Bestandteil** | **Substanz** | **Festkörper [%]** | **Menge [Gew.-%]** |
|---|---|---|---|
| Netz-/Dispergiermittelsystem nach der Erfindung | 1 | - | 20,45 |
| Pigment | Titandioxid | 100 | 67 |
| Feuchthaltemittel | Polyglykol G 500 | 100 | 10 |
| Rheologieadditiv | Smektit | 100 | 0,4 |
| Entschäumer | Polysiloxan | 100 | 0,3 |
| Lösungsmittel | Wasser | | 1,85 |
| Gesamt: | | | 100 |

| | | | |
|---|---|---|---|
| 1: Bestandteile sind: 1,2 Gew.-% Chitosan (N-alkyliert sowie N-komplexiert mit Tricin und Calcium als Tricin-Ca²⁺-Komplex mit Mengen von 0,1 Gew.-% Chitosan, 0,9 Gew.-% Tricin-Ca²⁺-Komplex), 1 Gew.-% polymeres Alkoxylat und 18,25 Gew.-% Styrol-Maleinsäure-Copolymer (30 % Feststoffanteil) | | | |

Die hergestellte anwendungsfertige Paste wurde in vergleichbarer Weise wie die zuvor unter 1. und 2. beschriebenen Pasten untersucht. Es wurden vergleichbar positive Effekte auf die Farbwahrnehmung festgestellt sowie ein stabilisiertes Rheologieprofil erhalten.

Insgesamt kann, wie eingangs bereits erwähnt, festgestellt werden, dass für unterschiedliche Pigmente stabilisierte Suspensionen bzw. Pasten, die sich durch ein gleichmäßig thixotropes Rheologieverhalten auszeichnen, erhalten werden. Ein dementsprechend ausbalanciertes Eigenschaftsprofil kann etwa vorteilhaft zu einer guten Verarbeitbarkeit der Pigmentpasten sowie einer erleichterten Einarbeitbarkeit in Farben und Lacke beitragen. Darüber hinaus wirkt sich die generell erhöhte Dispersionsstabilität positiv auf die Lagerungseigenschaften erfindungsgemäßer Pigmentpasten aus. Bei Verwendung erfindungsgemäßer Netz- und Dispergiermittelsysteme wird außerdem insgesamt eine signifikante Verbesserung der Farbwahrnehmung festgestellt, was ebenfalls vorteilhaft auf die Anwendungseigenschaften einwirkt.

## Patentansprüche

1. Wässrige Pigmentpaste für Abtönsysteme, wobei die Pigmentpaste insbesondere zumindest im Wesentlichen frei ist von Konservierungsmitteln und/oder Bioziden,
**dadurch gekennzeichnet,**
**dass** die Pigmentpaste ein Netz- und Dispergiermittelsystem enthält, wobei das Netz- und Dispergiermittelsystem mindestens zwei, insbesondere zwei, Netz- und Dispergiermittel umfasst, wobei eines der mindestens zwei, insbesondere zwei, Netz- und Dispergiermittel ein Polyaminosaccharid ist.

2. Pigmentpaste nach Anspruch 1, **dadurch gekennzeichnet, dass** das Polyaminosaccharid Hexosamine umfasst, insbesondere hieraus besteht, wobei die Hexosamine ausgewählt sind aus der Gruppe von Fructosamin, Galactosamin, Glucosamin, Mannosamin, Psicosamin, Sorbosamin, Tagatosamin und deren Mischungen, insbesondere Galactosamin, Glucosamin, Mannosamin und deren Mischungen, vorzugsweise Glucosamin ist.

3. Pigmentpaste nach Anspruch 1 oder 2, **dadurch gekennzeichnet, dass** das Polyaminosaccharid Polyglucosamin umfasst, insbesondere hieraus besteht.

4. Pigmentpaste nach einem der vorangehenden Ansprüche, **dadurch gekennzeichnet, dass** das Polyaminosaccharid, insbesondere Polyglucosamin, funktionalisiert, insbesondere *N*- funktionalisiert, ist, vorzugsweise *N*-alkyliert und/oder *N*-acyliert, ist, vorzugsweise mit C1- bis C5-Alkyl- und/oder Acylresten, insbesondere C1- bis C3-Alkyl- und/oder Acylresten.

5. Pigmentpaste nach einem der vorangehenden Ansprüche, **dadurch gekennzeichnet, dass** das Polyaminosaccharid, insbesondere Polyglucosamin, modifiziert, insbesondere *N*-modifiziert, ist, vorzugsweise *N*-protoniert und/oder *N*-komplexiert ist.

6. Pigmentpaste nach einem der vorangehenden Ansprüche, **dadurch gekennzeichnet, dass** das Netz- und Dispergiermittelsystem das Polyaminosaccharid, insbesondere Polyglucosamin, in Mengen von 0,01 bis 10 Gew.-%, insbesondere 0,05 bis 8 Gew.-%, vorzugsweise 0,08 bis 6 Gew.-%, bevorzugt 0,1 bis 5 Gew.-%, bezogen auf das Netz- und Dispergiermittelsystem, enthält.

7. Pigmentpaste nach einem der vorangehenden Ansprüche, **dadurch gekennzeichnet, dass** die Pigmentpaste das Polyaminosaccharid, insbesondere Polyglucosamin, in Mengen von 0,0005 bis 5 Gew.-%, insbesondere 0,00025 bis 3 Gew.-%, vorzugsweise 0,00075 bis 2 Gew.-%, bevorzugt 0,001 bis 1,5 Gew.-%, bezogen auf die Zusammensetzung, enthält.

8. Pigmentpaste nach einem der vorangehenden Ansprüche, **dadurch gekennzeichnet, dass** das Netz- und Dispergiermittelsystem umfasst:
a) ein Polyaminosaccharid,
b) ein weiteres Netz- oder Dispergiermittel.

9. Pigmentpaste nach einem der vorangehenden Ansprüche, **dadurch gekennzeichnet, dass** das weitere Netz- oder Dispergiermittel b) ausgewählt ist aus der Gruppe von nichtionischen Polymeren, kationischen Polymeren, anionischen Polymeren und deren Mischungen, insbesondere nichtionischen Copolymeren, anionischen Copolymeren, Polyethern und deren Mischungen.

10. Pigmentpaste nach einem der vorangehenden Ansprüche, **dadurch gekennzeichnet, dass** das Polyaminosaccharid a), insbesondere Polyglucosamin, und das weitere Netz- und Dispergiermittel b) in dem Netz- und Dispergiermittelsystem in einem Mengenverhältnis a) : b) in einem Bereich von 1 : 1 bis 1 : 100, insbesondere 1 : 5 bis 1 : 50, vorzugsweise 1 : 10 bis 1 : 45, bevorzugt 1 : 12,5 bis 1 : 40, bezogen auf das Netz- und Dispergiermittelsystem, vorliegen.

11. Pigmentpaste nach einem der vorangehenden Ansprüche, **dadurch gekennzeichnet, dass** die Pigmentpaste das Netz- und Dispergiermittelsystem insgesamt in Mengen von 3 bis 60 Gew.-%, insbesondere 4 bis 50 Gew.-%, vorzugsweise 5 bis 40 Gew.-%, bevorzugt 6 bis 45 Gew.-%, bezogen auf die Zusammensetzung, enthält.

12. Pigmentpaste nach einem der vorangehenden Ansprüche, **dadurch gekennzeichnet, dass** die Pigmentpaste aufweist:
A) ein Netz- und Dispergiermittelsystem, wobei das Netz- und Dispergiermittelsystem umfasst:
a) ein Polyaminosaccharid, insbesondere Polyglucosamin,
b) ein weiteres Netz- oder Dispergiermittel, insbesondere ausgewählt aus der Gruppe von nichtionischen Polymeren, kationischen Polymeren, anionischen Polymeren und deren Mischungen, insbesondere nichtionischen Copolymeren, anionischen Copolymeren, Polyethern und deren Mischungen,
B) mindestens ein Feuchthaltemittel.

13. Pigmentpaste nach einem der vorangehenden Ansprüche, **dadurch gekennzeichnet, dass** das Feuchthaltemittel B) ausgewählt ist aus der Gruppe von Polyethylenglykolen, Ethylenglykol, Triethylenglykol, Propylenglykol, Dipropylenglykol, Tripropylengylkol, Polypropylenglykol, Polyakylenglykol, Pentylenglykol, Glycerin, Glycerinethoxylat, Polyethern, Polyurethanen, Zuckeralkoholen, Polyvinylpyrrolidon, Ethylpyrrolidon, und deren Mischungen, insbesondere aus der Gruppe von Polyethylenglykolen, Tripropylengylkol, Polypropylenglykol, Polyakylenglykol, Glycerin, Glycerinethoxylat, Polyethern, Polyurethanen und deren Mischungen, insbesondere Glycerin, Glycerinethoxylat und deren Mischungen.

14. Pigmentpaste nach einem der vorangehenden Ansprüche, **dadurch gekennzeichnet, dass** die Pigmentpaste insbesondere zumindest im Wesentlichen frei ist von Konservierungsmitteln und/oder dass die Zusammensetzung insbesondere zumindest im Wesentlichen frei ist von Bioziden und/oder dass die Zusammensetzung frei von flüchtigen organischen Verbindungen, d.h. VOC-frei, und/oder frei von organischen Lösungsmitteln, ist.

15. Verwendung einer Pigmentpaste nach einem der Ansprüche 1 bis 14 zur Abtönung von Bindemittelsystemen, insbesondere von Anstrichmitteln, vorzugsweise von Dispersionsfarben.

16. Kit-of-Parts enthaltend eine Pigmentpaste nach einem der Ansprüchen 1 bis 14 und eine Abtönbasis, insbesondere ein Anstrichmittel, vorzugsweise eine Dispersionsfarbe.

17. Abtönbasis, insbesondere Anstrichmittel, vorzugsweise Dispersionsfarbe enthaltend eine Pigmentpaste nach einem der Ansprüchen 1 bis 14, insbesondere in Mengen in einem Bereich von 1 bis 40 Gew.-%, insbesondere 2 bis 35 Gew.-%, vorzugsweise 2,5 bis 30 Gew.-%, bevorzugt 3 bis 25 Gew.-%.
